(19) Europäisches Patentamt
European Patent Office
Office européen des brevets

(11) **EP 4 693 882 A1**

(12) **EUROPEAN PATENT APPLICATION**
published in accordance with Art. 153(4) EPC

(43) Date of publication:
**11.02.2026 Bulletin 2026/07**

(21) Application number: **24779917.4**

(22) Date of filing: **22.03.2024**

(51) International Patent Classification (IPC):
**H02N 2/12** *(2006.01)*       **H02N 2/14** *(2006.01)*

(52) Cooperative Patent Classification (CPC):
**H02N 2/12; H02N 2/14**

(86) International application number:
**PCT/JP2024/011192**

(87) International publication number:
**WO 2024/203798 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023   JP 2023050408
20.02.2024   JP 2024023450**

(71) Applicant: **Canon Kabushiki Kaisha
Tokyo, 146-8501 (JP)**

(72) Inventors:
• **KATAOKA Kenichi
Tokyo 146-8501 (JP)**
• **FUJIMOTO Kosuke
Tokyo 146-8501 (JP)**

(74) Representative: **Canon Europe Limited
European Intellectual Property Group
4 Roundwood Avenue
Stockley Park
Uxbridge UB11 1AF (GB)**

(54) **VIBRATION-TYPE DRIVE DEVICE**

(57)     In a vibration-type drive apparatus of a vibration-type actuator including a vibrating body provided with an elastic body and an electromechanical energy conversion element and a contact body in contact with the elastic body, the vibrating body is configured to vibrate to cause the vibrating body and the contact body to move relative to each other in a predetermined movement direction, wherein the vibration includes a first vibration component generated in the vibrating body by a voltage applied to the electromechanical energy conversion element and a second vibration component generated in the vibrating body due to the contact between the contact body and the elastic body, and wherein a signal corresponding to the second vibration component is detected, and a force acting between the vibrating body and the contact body is detected based on the signal.

**FIG.2**

## Description

Technical Field

The present invention relates to an apparatus configured to detect and control the position, velocity, and thrust of a vibration-type drive apparatus.

Background Art

In a direct current (DC) motor, since the drive current corresponds to torque, it is easy to detect or control the torque. On the other hand, in a vibration-type actuator including a vibrating body and a contact body configured to move relative to each other, there is no parameter corresponding to torque. Thus, it is not easy to detect or control the torque of the vibration-type actuator. To control the torque of the vibration-type actuator, it is normally required to provide an external torque sensor, which causes an issue such as an increased apparatus size or the like. As a solution to this issue, Patent Document 1 describes torque estimation based on an output of a velocity sensor and a vibration amplitude of a vibrating body.

Citation List

Patent Literature

PTL 1: Japanese Patent Laid-Open No. 2-101974

Summary of Invention

Technical Problem

In PTL 1, the vibration amplitude of the vibrating body is detected based on an amplitude of a robot arm current to obtain the number of rotations at no load, and a force is estimated using a relationship between a velocity detected by the velocity sensor and the number of rotations at no load. This requires different units to perform detection and a plurality of computations repeatedly, making it difficult to estimate the force with sufficient accuracy.

Solution to Problem

A vibration-type drive apparatus according to the present invention is a drive apparatus of a vibration-type actuator including a vibrating body provided with an elastic body and an electromechanical energy conversion element and a contact body in contact with the elastic body, the vibrating body being configured to vibrate to cause the vibrating body and the contact body to move relative to each other in a predetermined movement direction, wherein the vibration includes a first vibration component generated in the vibrating body by a voltage applied to the electromechanical energy conversion element and a second vibration component generated in the vibrating body due to the contact between the contact body and the elastic body, and the drive apparatus includes a detection unit configured to detect a signal corresponding to the second vibration component and a detection unit configured to detect a force acting between the vibrating body and the contact body based on the signal.

Advantageous Effects of Invention

The present invention makes it possible to estimate a generated force (or torque) with sufficient accuracy using a simple structure.

Brief Description of Drawings

[Fig. 1A] Fig. 1A is a diagram illustrating a first example of a schematic configuration and a vibration mode shape of a vibration-type actuator according to a first embodiment.
[Fig. 1B] Fig. 1B is a diagram illustrating a first example of a schematic configuration and a vibration mode shape of a vibration-type actuator according to a first embodiment.
[Fig. 1C] Fig. 1C is a diagram illustrating a first example of a schematic configuration and a vibration mode shape of a vibration-type actuator according to a first embodiment.

[Fig. 1D] Fig. 1D is a diagram illustrating a first example of a schematic configuration and a vibration mode shape of a vibration-type actuator according to a first embodiment.

[Fig. 1E] Fig. 1E is a diagram illustrating a first example of a schematic configuration and a vibration mode shape of a vibration-type actuator according to a first embodiment.

[Fig. 2] Fig. 2 is a diagram illustrating a first example of a configuration of a drive apparatus of the vibration-type actuator according to the first embodiment.

[Fig. 3] Fig. 3 is a schematic diagram illustrating relationships between relative forces acting between a vibrating body and a contact body and vibration trajectories of the vibrating body.

[Fig. 4A] Fig. 4A is a diagram illustrating first and second examples of second vibration component detection according to the first embodiment.

[Fig. 4B] Fig. 4B is a diagram illustrating first and second examples of second vibration component detection according to the first embodiment.

[Fig. 4C] Fig. 4C is a diagram illustrating first and second examples of second vibration component detection according to the first embodiment.

[Fig. 4D] Fig. 4D is a diagram illustrating first and second examples of second vibration component detection according to the first embodiment.

[Fig. 5A] Fig. 5A is a diagram illustrating a relationship between speeds and inclinations of vibration ellipses according to the first embodiment.

[Fig. 5B] Fig. 5B is a diagram illustrating relationships between speeds and inclinations of vibration ellipses according to the first embodiment.

[Fig. 6A] Fig. 6A is a diagram illustrating relationships between thrusts and (an amplitude of a current signal IA - an amplitude of a current signal IB) according to the first embodiment.

[Fig. 6B] Fig. 6B is a diagram illustrating relationships between thrusts and (the amplitude of the current signal IA - the amplitude of the current signal IB) according to the first embodiment.

[Fig. 7] Fig. 7 is a diagram illustrating a fourth example of second vibration component detection according to the first embodiment.

[Fig. 8] Fig. 8 is a diagram illustrating a method for obtaining a magnitude of a vector of a component in the same direction as an upward thrust vibration direction and a magnitude of a vector of a component in a direction normal to the upward thrust vibration direction based on a vibration waveform according to the first embodiment.

[Fig. 9] Fig. 9 is a diagram illustrating a fifth example of second vibration component detection according to the first embodiment.

[Fig. 10] Fig. 10 is a diagram illustrating sixth and seventh examples of second vibration component detection according to the first embodiment.

[Fig. 11A] Fig. 11A is a diagram illustrating an equivalent circuit model of a drive circuit and a vibrating body and a second example of a configuration of a drive apparatus of a vibration-type actuator using the same according to the first embodiment.

[Fig. 11B] Fig. 11B is a diagram illustrating an equivalent circuit model of a drive circuit and a vibrating body and a second example of a configuration of a drive apparatus of a vibration-type actuator using the same according to the first embodiment.

[Fig. 12A] Fig. 12A is a diagram illustrating a third example of a configuration of a drive apparatus of a vibration-type actuator and a function of a current signal generation unit 51 used therein according to the first embodiment.

[Fig. 12B] Fig. 12B is a diagram illustrating a third example of a configuration of a drive apparatus of a vibration-type actuator and a function of a current signal generation unit 51 used therein according to the first embodiment.

[Fig. 13A] Fig. 13A is a diagram illustrating a correction factor for obtaining a thrust based on a second vibration component S and thrust estimation results according to the first embodiment.

[Fig. 13B] Fig. 13B is a diagram illustrating a correction factor for obtaining a thrust based on a second vibration component S and thrust estimation results according to the first embodiment.

[Fig. 13C] Fig. 13C is a diagram illustrating a correction factor for obtaining a thrust based on a second vibration component S and thrust estimation results according to the first embodiment.

[Fig. 13D] Fig. 13D is a diagram illustrating a correction factor for obtaining a thrust based on a second vibration component S and thrust estimation results according to the first embodiment.

[Fig. 14A] Fig. 14A is a diagram illustrating fourth and fifth examples of a configuration of a drive apparatus of a vibration-type actuator according to the first embodiment.

[Fig. 14B] Fig. 14B is a diagram illustrating fourth and fifth examples of a configuration of a drive apparatus of a vibration-type actuator according to the first embodiment.

[Fig. 15] Fig. 15 is a flowchart diagram illustrating thrust control operations performed by a central processing unit (CPU) 34 according to the first embodiment.

[Fig. 16A] Fig. 16A is a flowchart diagram illustrating upward thrust vibration amplitude control operations performed by the CPU 34 according to the first embodiment.

[Fig. 16B] Fig. 16B is a flowchart diagram illustrating upward thrust vibration amplitude control operations performed by the CPU 34 according to the first embodiment.

[Fig. 17] Fig. 17 is a diagram illustrating a sixth example of a configuration of a drive apparatus of a vibration-type actuator according to the first embodiment.

[Fig. 18A] Fig. 18A is a diagram illustrating a second example of a schematic configuration and a vibration mode shape of a vibration-type actuator according to a first embodiment.

[Fig. 18B] Fig. 18B is a diagram illustrating a second example of a schematic configuration and a vibration mode shape of a vibration-type actuator according to a first embodiment.

[Fig. 18C] Fig. 18C is a diagram illustrating a second example of a schematic configuration and a vibration mode shape of a vibration-type actuator according to a first embodiment.

[Fig. 18D] Fig. 18D is a diagram illustrating a second example of a schematic configuration and a vibration mode shape of a vibration-type actuator according to a first embodiment.

[Fig. 19A] Fig. 19A is a diagram illustrating a third example of a schematic configuration and a vibration mode shape of a vibration-type actuator according to a first embodiment.

[Fig. 19B] Fig. 19B is a diagram illustrating a third example of a schematic configuration and a vibration mode shape of a vibration-type actuator according to a first embodiment.

[Fig. 19C] Fig. 19C is a diagram illustrating a third example of a schematic configuration and a vibration mode shape of a vibration-type actuator according to a first embodiment.

[Fig. 19D] Fig. 19D is a diagram illustrating a third example of a schematic configuration and a vibration mode shape of a vibration-type actuator according to a first embodiment.

[Fig. 20A] Fig. 20A is a diagram illustrating a reference thrust and a ratio ($\beta$) of change in velocity to change in thrust according to the first embodiment.

[Fig. 20B] Fig. 20B is a diagram illustrating a reference thrust and a ratio ($\beta$) of change in velocity to change in thrust according to the first embodiment.

[Fig. 21] Fig. 21 is a diagram illustrating a seventh example of a configuration of a drive apparatus of a vibration-type actuator according to the first embodiment.

[Fig. 22A] Fig. 22A is a diagram illustrating an example of an alternating current signal waveform and a waveform of a VB voltage amplitude command according to the first embodiment.

[Fig. 22B] Fig. 22B is a diagram illustrating an example of an alternating current signal waveform and a waveform of a VB voltage amplitude command according to the first embodiment.

[Fig. 23A] Fig. 23A is a diagram illustrating a first example of a schematic configuration of a vibration-type actuator according to a second embodiment.

[Fig. 23B] Fig. 23B is a diagram illustrating a first example of a schematic configuration of a vibration-type actuator according to the second embodiment.

[Fig. 24] Fig. 24 is a diagram illustrating a first example of a configuration of a drive apparatus of a vibration-type actuator according to the second embodiment.

[Fig. 25A] Fig. 25A is a diagram illustrating first and second examples of second vibration component detection according to the second embodiment.

[Fig. 25B] Fig. 25B is a diagram illustrating first and second examples of second vibration component detection according to the second embodiment.

[Fig. 25C] Fig. 25C is a diagram illustrating first and second examples of second vibration component detection according to the second embodiment.

[Fig. 25D] Fig. 25D is a diagram illustrating first and second examples of second vibration component detection according to the second embodiment.

[Fig. 26] Fig. 26 is a diagram illustrating a third example of second vibration component detection according to the second embodiment.

[Fig. 27] Fig. 27 is a diagram illustrating a method for obtaining a magnitude of a vector of a component in the same direction as an upward thrust vibration direction and a magnitude of a vector of a component in a direction normal to the upward thrust vibration direction based on a vibration waveform according to the second embodiment.

[Fig. 28] Fig. 28 is a diagram illustrating a fourth example of second vibration component detection according to the second embodiment.

[Fig. 29] Fig. 29 is a diagram illustrating fifth and sixth examples of second vibration component detection according to the second embodiment.

[Fig. 30A] Fig. 30A is a diagram illustrating an equivalent circuit model of a drive circuit and a vibrating body and a second example of a configuration of a drive apparatus of a vibration-type actuator using the same according to the second embodiment.

[Fig. 30B] Fig. 30B is a diagram illustrating an equivalent circuit model of a drive circuit and a vibrating body and a second example of a configuration of a drive apparatus of a vibration-type actuator using the same according to the second embodiment.

[Fig. 31A] Fig. 31A is a diagram illustrating a correction factor for obtaining a torque based on a second vibration component S according to the second embodiment.

[Fig. 31B] Fig. 31B is a diagram illustrating a correction factor for obtaining a torque based on a second vibration component S according to the second embodiment.

[Fig. 32] Fig. 32 is a diagram illustrating a third example of a configuration of a drive apparatus of a vibration-type actuator according to the second embodiment.

[Fig. 33] Fig. 33 is a flowchart diagram illustrating torque control operations performed by the CPU 34 according to the second embodiment.

[Fig. 34A] Fig. 34A is a diagram illustrating a reference torque and a ratio ($\beta$) of change in velocity to change in torque according to the second embodiment.

[Fig. 34B] Fig. 34B is a diagram illustrating a reference torque and a ratio ($\beta$) of change in velocity to change in torque according to the second embodiment.

[Fig. 35] Fig. 35 is a diagram illustrating an example of a schematic configuration of a vibration-type actuator according to a third embodiment.

[Fig. 36] Fig. 36 is a diagram illustrating a configuration example of a drive apparatus of a vibration-type actuator according to the third embodiment.

[Fig. 37A] Fig. 37A is a diagram illustrating a schematic configuration of a vibration-type actuator, electrical connections of piezoelectric body electrodes, and a first example of a positional relationship between a protrusion structure of a vibrating body and piezoelectric bodies according to a fourth embodiment.

[Fig. 37B] Fig. 37B is a diagram illustrating a schematic configuration of a vibration-type actuator, electrical connections of piezoelectric body electrodes, and a first example of a positional relationship between a protrusion structure of a vibrating body and piezoelectric bodies according to a fourth embodiment.

[Fig. 37C] Fig. 37C is a diagram illustrating a schematic configuration of a vibration-type actuator, electrical connections of piezoelectric body electrodes, and a first example of a positional relationship between a protrusion structure of a vibrating body and piezoelectric bodies according to a fourth embodiment.

[Fig. 38A] Fig. 38A is a diagram illustrating first and second examples of a configuration of a drive apparatus of a vibration-type actuator according to the fourth embodiment.

[Fig. 38B] Fig. 38B is a diagram illustrating first and second examples of a configuration of a drive apparatus of a vibration-type actuator according to the fourth embodiment.

[Fig. 39A] Fig. 39A is a diagram illustrating second and third examples of a positional relationship between a protrusion structure provided to a vibrating body and piezoelectric bodies of a vibration-type actuator according to the fourth embodiment.

[Fig. 39B] Fig. 39B is a diagram illustrating second and third examples of a positional relationship between a protrusion structure provided to a vibrating body and piezoelectric bodies of a vibration-type actuator according to the fourth embodiment.

[Fig. 40] Fig. 40 is a diagram illustrating a third example of a configuration of a drive apparatus of a vibration-type actuator according to the fourth embodiment.

[Fig. 41A] Fig. 41A is a diagram illustrating a reference torque and a ratio ($\beta$) of change in velocity to change in torque according to the fourth embodiment.

[Fig. 41B] Fig. 41B is a diagram illustrating a reference torque and a ratio ($\beta$) of change in velocity to change in torque according to the fourth embodiment.

[Fig. 42A] Fig. 42A is a diagram illustrating first and second examples of a configuration of a drive apparatus of a vibration-type actuator according to a fifth embodiment.

[Fig. 42B] Fig. 42B is a diagram illustrating first and second examples of a configuration of a drive apparatus of a vibration-type actuator according to the fifth embodiment.

[Fig. 43A] Fig. 43A is a diagram illustrating an example of a schematic configuration of a vibration-type actuator according to a sixth embodiment.

[Fig. 43B] Fig. 43B is a diagram illustrating an example of a schematic configuration of a vibration-type actuator according to a sixth embodiment.

[Fig. 43C] Fig. 43C is a diagram illustrating an example of a schematic configuration of a vibration-type actuator according to a sixth embodiment.

[Fig. 44A] Fig. 44A is a diagram illustrating a vibration mode of a vibration-type actuator according to the sixth embodiment.

[Fig. 44B] Fig. 44B is a diagram illustrating a vibration mode of a vibration-type actuator according to the sixth embodiment.

[Fig. 44C] Fig. 44C is a diagram illustrating a vibration mode of a vibration-type actuator according to the sixth embodiment.

[Fig. 45A] Fig. 45A is a diagram illustrating first and second examples of a configuration of a drive apparatus of a vibration-type actuator according to the sixth embodiment.

[Fig. 45B] Fig. 45B is a diagram illustrating first and second examples of a configuration of a drive apparatus of a vibration-type actuator according to the sixth embodiment.

Description of Embodiments

A vibration-type drive apparatus configured to implement the present invention includes the following components.

First, a vibration-type actuator including a vibrating body provided with an elastic body and an electromechanical energy conversion element and a contact body in contact with the elastic body and a control apparatus of the vibration-type actuator are included.

In the vibration-type drive apparatus, the vibrating body is configured to vibrate to cause the vibrating body and the contact body to move relative to each other in a predetermined movement direction.

Furthermore, the vibration includes a first vibration component generated in the vibrating body by a voltage applied to the electromechanical energy conversion element and a second vibration component generated in the vibrating body due to the contact between the contact body and the elastic body. Then, the control apparatus detects a signal corresponding to the second vibration component and detects a force acting between the vibrating body and the contact body based on the signal.

Details will be described with reference to the drawings.

[First Embodiment]

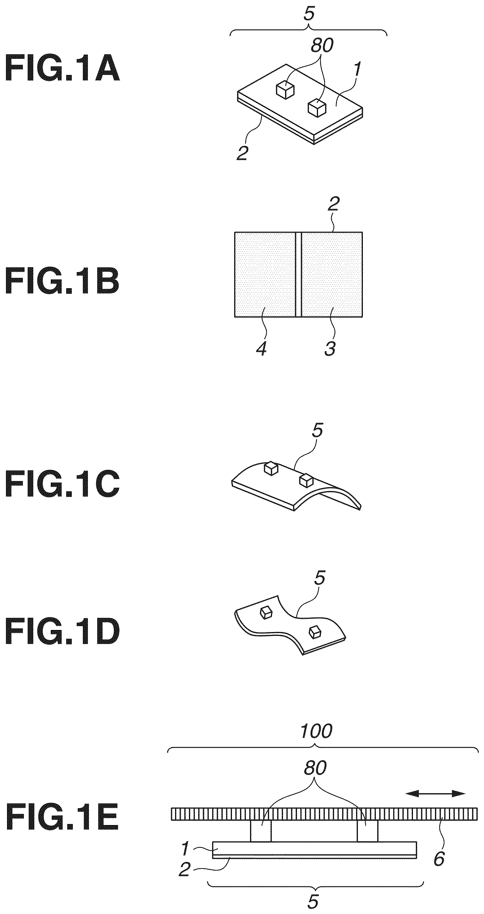

Figs. 1A to 1E are diagrams illustrating an example of a schematic configuration and vibration mode shape of a vibration-type actuator 100 according to a first embodiment of the present invention. A schematic configuration and operating principle of the vibration-type actuator 100 according to the first embodiment will be described with reference to Figs. 1A to 1E.

As illustrated in Fig. 1E, the vibration-type actuator 100 according to the first embodiment includes a vibrating body 5 and a contact body 6. As illustrated in Figs. 1A and 1E, the vibrating body 5 includes a piezoelectric element 2 and an elastic body 1 including two protrusion portions 80 in contact with the contact body 6. The piezoelectric element 2 is a component that constitutes a portion of the vibrating body 5 and is configured to excite the vibrating body 5.

Further, the piezoelectric element 2 includes a piezoelectric material and electrodes, and electrodes 3 and 4 are formed on a polarized front surface of the piezoelectric material, as illustrated in Fig. 1B. It should be noted that piezoelectric ceramics can be used as the piezoelectric material.

The two electrodes are electrically insulated from each other, and two alternating current voltages with independently variable phases are applied to the two electrodes. Further, an entire back surface of the piezoelectric element 2 is an electrode and is configured to be connected to ground potential through a via, which is not illustrated, formed in a portion of the piezoelectric element 2, from the front surface of the piezoelectric element 2. Although this piezoelectric material is a single piece of piezoelectric material, the electrode 3, the electrode at ground potential, and the part of the piezoelectric material sandwiched between the electrode 3 and the electrode at ground potential may sometimes be referred to as a piezoelectric body 3 for explanation of the portion on the electronic circuit. The same applies to what is referred to as a piezoelectric body 4.

The contact body 6 illustrated in Fig. 1E is a slider configured to be pressed into contact with the protrusion portions 80 of the vibrating body 5 with a constant pressing force by a pressing mechanism, which is not illustrated. This contact body 6 (slider) is configured to be moved relatively in a left-right direction of the paper by vibrations excited in the vibrating body 5.

Figs. 1C and 1D are diagrams illustrating examples of vibration modes of the vibrating body 5. Fig. 1C illustrates a vibration mode shape of a vibration mode (upward thrust vibration mode) excited in the vibrating body 5 when alternating current voltages with equal amplitude and same phase are applied to the piezoelectric body 3 and the piezoelectric body 4. The upward thrust vibration mode is one of the natural vibration modes of the vibrating body 5, and the direction of the natural vibration is a direction substantially perpendicular to a contact surface between the vibrating body 5 and the contact body 6. The degree of amplitude and phase matching may be determined by a user based on the quality of a desired vibration wave.

On the other hand, Fig. 1D illustrates a vibration mode shape of a vibration mode (forward vibration mode) excited in the vibrating body 5 when alternating current voltages with equal amplitude and opposite phase are applied to the piezoelectric body 3 and the piezoelectric body 4. The forward vibration mode is one of the natural vibration modes of the vibrating body 5, and the direction of the natural vibration is substantially parallel to the contact surface between the vibrating body 5 and the contact body 6 and substantially matches the direction of the movement.

For example, in a case where the phase difference between the alternating current voltages applied to the piezoelectric body 3 and the piezoelectric body 4 is set to 0°, vibration corresponding to the vibration mode (the upward thrust vibration mode) illustrated in Fig. 1C is excited. Further, in a case where the phase difference between the alternating current voltages applied to the piezoelectric body 3 and the piezoelectric body 4 is set to 180°, vibration corresponding to the vibration mode (the forward vibration mode) illustrated in Fig. 1D is excited.

Further, in a case where the phase difference between the alternating current voltages applied to the piezoelectric body 3 and the piezoelectric body 4 is set to a phase difference that is neither 0° nor 180° (in practice, a range of approximately 0° to ±120° is used), the vibration modes illustrated in Figs. 1C and 1D are simultaneously excited. In this case, the contact body 6 (slider) pressed into contact with the protrusion portions 80 provided to the vibrating body 5 moves in the direction in the longitudinal direction of the rectangular shape of the vibrating body 5. Subsequently, as the phase difference departs from 0°, the amplitude of the vibration mode (the forward vibration mode) illustrated in Fig. 1D increases, and the relative velocity between the contact body 6 (slider) and the vibrating body 5 increases.

Further, forces applied to the vibrating body 5 include a piezoelectric excitation force generated by application of alternating current voltages to the piezoelectric body 3 and the piezoelectric body 4 to generate vibrations in the vibrating body 5, a reaction force applied to the vibrating body 5 from a support member, which is not illustrated, and a reaction force applied to the vibrating body 5 from the contact body 6 (slider). A vibration corresponding to the force (piezoelectric excitation force) generated by application of alternating current voltages to the piezoelectric body 3 and the piezoelectric body 4, which constitute the vibrating body 5, among the forces, will be referred to as a first vibration component, and a vibration generated in the vibrating body 5 by the reaction force applied from the contact body 6 (slider) will be referred to as a second vibration component.

Furthermore, a vibration component generated by the piezoelectric excitation force generated solely by the piezoelectric body 3 is classified as a third vibration component, and a vibration component generated by the piezoelectric excitation force generated solely by the piezoelectric body 4 is classified as a fourth vibration component.

In the following description, the sum or difference of the third vibration component generated by a first drive voltage and the fourth vibration component generated by a second drive voltage may sometimes be described. In this case, a drive vibration in a first direction generated based on one of the sum and the difference and a drive vibration in a second direction generated based on the other one of the sum and the difference may sometimes be described. A direction of a drive vibration herein refers to a direction in which a vibrating body vibrates at a contact surface between the vibrating body and a contact body in a state where the drive vibration is generated, and the same applies to a direction of a natural vibration and a direction when vibration components are in the same direction.

Further, the "contact body" refers to a member configured to be brought into contact with a vibrating body and moved relative to the vibrating body by a vibration generated in the vibrating body. The contact between the contact body and the vibrating body is not limited to direct contact with no member between the contact body and the vibrating body. The contact between the contact body and the vibrating body may be indirect contact with another member between the contact body and the vibrating body, as long as the contact body is moved relative to the vibrating body by a vibration generated in the vibrating body. The "another member" is not limited to a member separate from the contact body and vibrating body (for example, a high-friction member composed of a sintered body). The "another member" may be a surface-treated portion formed on the contact body or the vibrating body by plating or nitriding.

Further, the "vibrating body" refers to a member including an elastic body and an electromechanical energy conversion element and configured to vibrate upon application of an alternating current voltage to the electromechanical energy conversion element. The elastic body is mainly made of metal or ceramic, and the electromechanical energy conversion element may also serve as the elastic body.

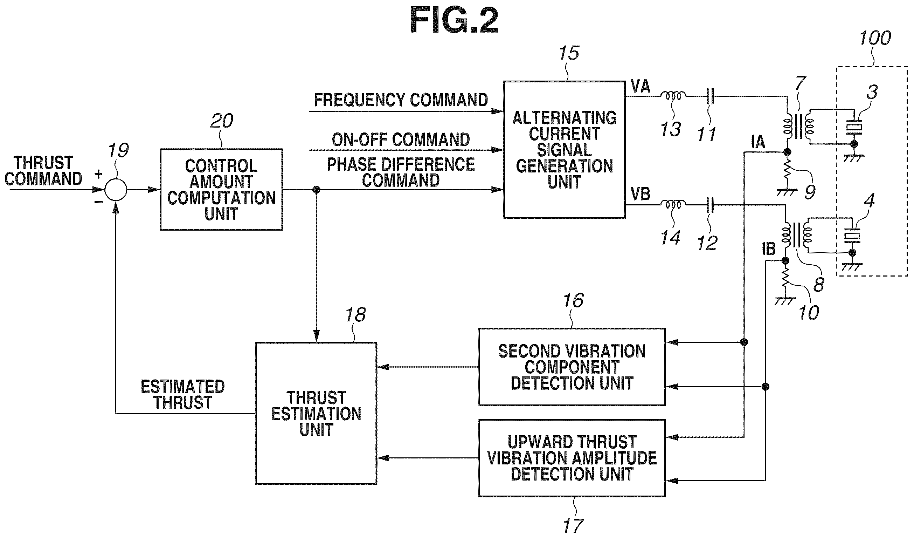

Fig. 2 is a diagram illustrating a first configuration example of a drive apparatus of the vibration-type actuator 100 according to the first embodiment of the present invention. Fig. 2 is composed of the vibration-type actuator 100, a unit configured to generate an alternating current voltage to be applied to the vibration-type actuator 100, a unit configured to estimate a thrust of the vibration-type actuator 100, and a portion related to thrust control. First, an alternating current voltage generation unit will be described. An alternating current signal generation unit 15 generates a two-phase alternating current signal VA (first signal) and a two-phase alternating current signal VB (second signal) based on a frequency command and an ON-OFF command from a command unit, which is not illustrated, and a phase difference command output by a control amount computation unit 20. Then, the alternating current signal VA is connected to a primary winding of a transformer 7 via a series resonant circuit composed of an inductor 13 and a capacitor 11, and the alternating current signal VB is connected to a primary winding of a transformer 8 via a series resonant circuit composed of an inductor 14 and a capacitor 12. Although the example in which the transformer 7 and the transformer 8 are connected via the series resonant circuits to shape waveforms and suppress fluctuations in the voltage amplitudes applied to the piezoelectric body 3 and the piezoelectric body 4 is described herein, only one of the inductors and the capacitors may be connected, or the series resonant circuits may not be connected. The voltages input to the primary windings of the transformer 7 and the transformer 8 are increased, and the increased voltages are applied as a first drive voltage and a second drive voltage to the piezoelectric body 3 and the piezoelectric body 4 connected to secondary windings of the transformer 7 and the transformer 8 and constituting the vibrating body 5 of the vibration-type actuator 100. It should be noted that although the foregoing description is used herein for explanation of the portion on the electronic circuit as described above, the piezoelectric body 3 and the piezoelectric body 4 are part of the vibrating body 5.

Further, inductor values of the secondary windings of the transformer 7 and the transformer 8 and damping capacitances of the piezoelectric body 3 and the piezoelectric body 4 achieve frequency matching. Accordingly, currents approximately proportional to vibration velocities generated by strain generated in the piezoelectric body 3 and the piezoelectric body 4 flow through the primary windings of the transformer 7 and the transformer 8, respectively.

A resistor 9 and a resistor 10 for current detection are respectively connected in series to the primary windings of the transformer 7 and the transformer 8, detect the currents flowing through the primary windings of the transformers, and generate a current signal IA, which is a first detection signal, and a current signal IB, which is a second detection signal. The relationship between the current signal IA and the current signal IB and the vibration of the vibrating body 5 will be described below.

Next, a configuration that relates to a thrust estimation unit will be described. The current signal IA and the current signal IB are input to a second vibration component detection unit 16 and an upward thrust vibration amplitude detection unit 17, and the second vibration component detection unit 16 and the upward thrust vibration amplitude detection unit 17 detect a second vibration component and a component corresponding to the upward thrust vibration amplitude.

At this time, in a case where the waveforms of the current signal IA and the current signal IB have a high harmonic content, the current signal IA and the current signal IB may be input to the second vibration component detection unit 16 and the upward thrust vibration amplitude detection unit 17 after the harmonic components are sufficiently attenuated using a low-pass filter or band-pass filter.

As described above, the second vibration component is the vibration component corresponding to the vibration generated by the force applied to the vibrating body 5 from the contact body 6 (slider).

The detected second vibration component and the detected component corresponding to the vibration amplitude in the direction in which the vibrating body 5 thrusts the contact body 6 (slider) upward are input to a thrust estimation unit 18, and the thrust is estimated based on a phase difference command signal value input simultaneously. Details of a thrust estimation method and vibration detection will be described below.

Next, operations of a thrust control unit will be described. First, the estimated thrust value from the thrust estimation unit 18 and the thrust command from the command unit, which is not illustrated, are compared by a comparison unit 19. Next, the control amount computation unit 20 performs proportional-integral computation on the comparison result of the comparison unit 19 and generates a phase difference command signal. Subsequently, the phase difference between the alternating current signal VA and the alternating current signal VB is set, and the thrust is controlled based on the amplitude level of the forward direction vibration excited in the vibrating body 5.

The relationship between the current signal IA, the current signal IB, and the vibration of the vibrating body 5 will be described. As described above, by applying the alternating current signals to the electrode 3 and the electrode 4 provided to the piezoelectric element 2 constituting the vibrating body 5, the piezoelectric body 3 and the piezoelectric body 4 generate a piezoelectric excitation force to induce vibration in the vibrating body 5. The vibration generated in the vibrating body by the piezoelectric excitation force induces strain vibration in the piezoelectric body. It is assumed that the average strain vibration distributed in the piezoelectric body is proportional to the vibration displacement in the section where the piezoelectric body is bonded. Since charge proportional to strain is generated in the piezoelectric body by the piezoelectric effect, the current signal IA, which is the time derivative of the generated charge, is a signal corresponding to the average vibration velocity of the region (i.e., the piezoelectric body 3) onto which the section of the elastic body 1 where the electrode 3 is bonded is projected.

Similarly, the current signal IB is a signal corresponding to the vibration velocity of the region (i.e., the piezoelectric body 4) onto which the section of the elastic body 1 where the electrode 4 is bonded is projected.

Further, the current signal IA mainly includes a vibration component in the same direction as the third vibration component, and the current signal IB mainly includes a vibration component in the same direction as the fourth vibration component. It should be noted that the vibration component generated by the piezoelectric excitation force generated solely by the piezoelectric body 3 is the third vibration component, and the vibration component generated by the piezoelectric excitation force generated solely by the piezoelectric body 4 is the fourth vibration component.

The second vibration component detection unit 16 detects the second vibration component using the two detected signals, the current signal IA and the current signal IB.

Next, the upward thrust vibration amplitude detection performed by the upward thrust vibration amplitude detection unit 17 will be described. The upward thrust vibration corresponds to a component in a direction perpendicular to a flat plate of the vibrating body 5 having a flat plate shape.

An example of the vibration modes of the upward thrust vibration is the vibration mode illustrated in Fig. 1C, such as a vibration mode that occurs in a case where the amplitudes of the alternating current signal VA and the alternating current signal VB applied to the piezoelectric body 3 and the piezoelectric body 4 are equal and the phase difference is set to 0°. Therefore, the amplitude of the vibration velocity of the upward thrust vibration is approximately proportional to the amplitude of a sum signal of the current signal IA and the current signal IB.

Further, in a case where the vibration displacement is equal, the amplitude of the vibration velocity increases or decreases proportionally to the vibration frequency, but the frequencies of the alternating current signal VA and the alternating current signal VB do not change significantly, so that it can be assumed that the amplitude of the vibration velocity is approximately proportional to the vibration amplitude. Accordingly, in the following description, the current signal IA and the current signal IB are treated as signals corresponding to displacements of the piezoelectric body 3 and the piezoelectric body 4, respectively, and the amplitude of the sum signal of the current signal IA and the current signal IB is described as the upward thrust vibration amplitude.

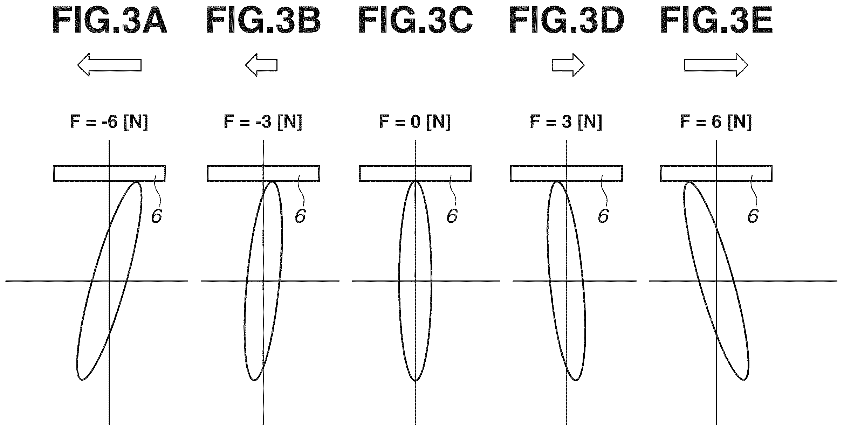

A principle of thrust estimation will be described. Fig. 3 presents diagrams schematically illustrating relationships between elliptical vibration trajectories of outer ends of the protrusion portions 80 of the elastic body 1 and relative forces acting between the vibrating body 5 and the contact body 6 (slider) via the protrusion portions 80. All the vibration trajectories in Fig. 3 are vibration trajectories of the outer ends of the protrusion portions 80 in a case where the amplitudes of the alternating current signal VA and the alternating current signal VB are equal and the phase difference is 45°. Fig. 3A to Fig. 3E illustrate vibration trajectories corresponding to relative forces from -6 [N] to 6 [N], and arrow directions indicate directions of the forces applied to the protrusion portions 80 of the elastic body 1 from the contact body 6. Fig. 3C with no arrow illustrates a state where an external force of 0 [N] is applied to the contact body 6 (slider) and the contact body 6 (slider) moves relative to the vibrating body 5. The vibrating body 5 and the contact body 6 are intermittently brought into contact with each other at contact areas of the outer ends of the protrusion portions 80, and during that contact time, the relative velocity (velocity difference) between the vibrating body 5 and the contact body 6 changes and is distributed. A frictional force distribution arises based on the velocity difference distribution and a contact pressure over the contact areas. When the force applied to the contact body 6 (slider) is changed, the velocity difference distribution between the vibrating body 5 and the contact body 6 (slider) over the contact areas between the vibrating body 5 and the contact body 6 (slider) changes, and in conjunction with this, the frictional force distribution that arises over the contact areas also changes. Since the vibrating body 5 is excited by the frictional force generated during the intermittent contact with the contact body 6 (slider), a vibration corresponding to the velocity difference is superimposed on the vibrating body 5.

Further, as evident from Fig. 3, the vibration trajectories of the outer ends of the protrusion portions 80 are elliptical, and each vibration ellipse is inclined in the opposite direction to the direction in which the force is applied to the outer ends of the protrusions 80, according to the magnitude of the force applied from the contact body 6 to the protrusion portions 80. This phenomenon occurs when the vibration generated by the excitation in the vibrating body 5 during the contact between the protrusion portions 80 and the contact body 6 (slider) is superimposed on the vibrating body 5. In the present patent, this superimposed vibration component (second vibration component) is detected, and the thrust acting between the vibrating body 5 and the contact body 6 (slider) is estimated.

Further, Fig. 3 illustrates characteristics in a case where driving is performed under a condition where the frequencies of the alternating current signals VA and VB are higher than the natural frequencies of the vibration modes of the vibrating body 5. While the characteristics may differ under a condition where the frequencies of the alternating current signals VA and VB are lower than the natural frequencies of the vibration modes of the vibrating body 5, the principle of detecting the second vibration component, which varies with thrust, and performing thrust estimation remains unchanged.

Since the characteristics in Fig. 3 vary depending on the relationship between the natural frequencies of the vibration modes of the vibrating body 5 and the frequencies of the alternating current signals VA and VB, the phase difference between the alternating current signals VA and VB, or the like, it is necessary to detect the second vibration component and estimate the thrust based on the driving condition.

An example of a case where driving is performed under the condition where the frequencies of the alternating current signals VA and VB are higher than the natural frequencies of the vibration modes of the vibrating body 5 will be described.

Details of the operation of the second vibration component detection unit 16 configured to detect the second vibration component, which is the vibration generated in the vibrating body 5 by excitation from the contact body 6 (slider), will be described.

There are various methods for detecting the second vibration component, and detecting the inclinations of the vibration ellipses as illustrated in Fig. 3 is one of the methods. As described above, there is a high correlation between the inclinations of the vibration ellipses and the thrust generated between the vibrating body 5 and the contact body 6 (slider), and detecting such a value is regarded as detecting a signal corresponding to the second vibration component.

A first example of second vibration component detection according to the first embodiment will be described.

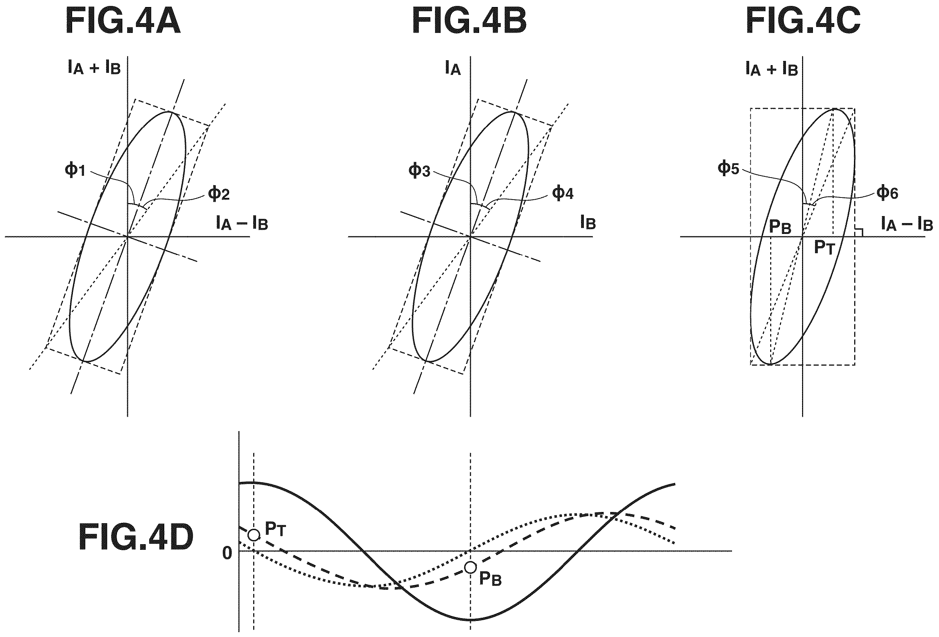

Fig. 4A and Fig. 4B are diagrams illustrating Lissajous waveforms (vibration ellipses) describing the first example of second vibration component detection according to the first embodiment. Fig. 4A illustrates a Lissajous waveform (vibration ellipse) plotted with (the current signal IA + the current signal IB) on the vertical axis and (the current signal IA - the current signal IB) on the horizontal axis. A vibration waveform indicated by (the current signal IA + the current signal IB) corresponds to the vibration mode (the upward thrust vibration mode) in Fig. 1C, and a vibration waveform indicated by (the current signal IA - the current signal IB) corresponds to the vibration mode (the forward vibration mode) in Fig. 1D. The current signal IA herein is defined as formula 1, and the current signal IB herein is defined as formula 2.

[Formula 1]

$$I_A = \rho sin(\omega t + \delta_1) \qquad \text{formula 1}$$

[Formula 2]

$$I_B = \sigma sin(\omega t + \delta_2) \qquad \text{formula 2}$$

An inclination angle $\varphi 1$ of each vibration ellipse is defined as formula 3.

[Formula 3]

$$\varphi_1 = \frac{1}{2} tan^{-1} \left( \frac{\sigma^2 - \rho^2}{2\rho\sigma cos\,(\delta_1 - \delta_2)} \right) \qquad \text{formula 3}$$

The second vibration component detection unit 16 calculates the second vibration component (the inclination angle of the vibration ellipse) by detecting the amplitude $\rho$ of the current signal IA, the amplitude $\sigma$ of the current signal IB, and the phase difference ($\delta 1 - \delta 2$) between the current signal IA and the current signal IB and substituting the amplitudes $\rho$ and $\sigma$ and the phase difference ($\delta 1 - \delta 2$) into formula 3.

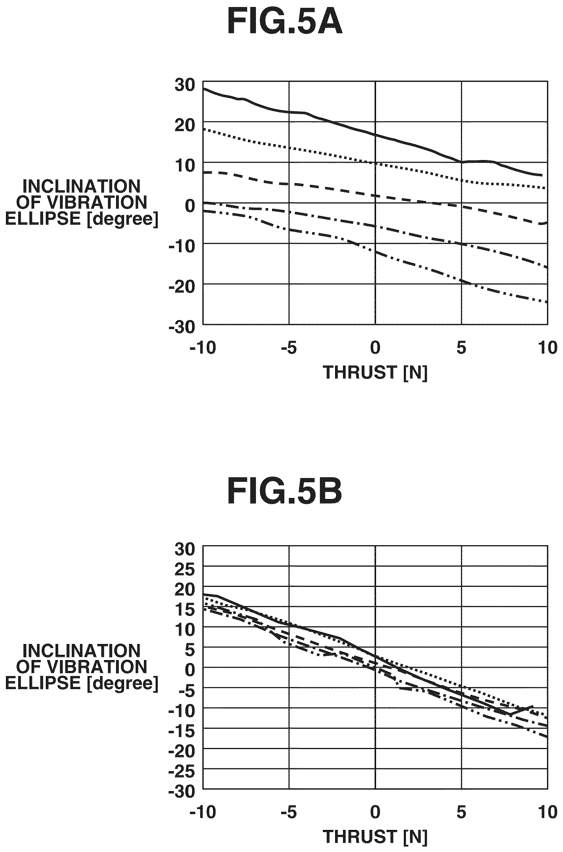

Fig. 5A and Fig. 5B are diagrams illustrating relationships between inclinations of vibration ellipses and thrust, with Fig. 5A illustrating an example of a case where the upward thrust vibration amplitude is small and Fig. 5B illustrating an example of a case where the upward thrust vibration amplitude is relatively large. Each line type in Fig. 5A and Fig. 5B represents a different phase difference between the alternating current signal VA and the alternating current signal VB, and solid lines (90°), dotted lines (45°), dashed lines (0°), dash-dot lines (-45°), and dash-double-dot lines (-90°) are illustrated.

The relationship between the force acting between the contact body 6 and the protrusion portions 80 and the inclination angles of the vibration ellipses is substantially linear. Therefore, by determining the offset and slope of each line in the graphs for each upward thrust vibration amplitude and each phase difference between the alternating current signal VA and the alternating current signal VB, the thrust can be estimated by back-calculating from the inclination angles of the vibration ellipses. Further, the larger the upward thrust vibration amplitude, the higher the sensitivity to the phase difference between the alternating current signal VA and the alternating current signal VB, making it possible to achieve higher thrust estimation accuracy.

Further, a value S of formula 4 obtained by extracting the argument of the arctangent in formula 3 may be used as the second vibration component.

While the high correlation between a change in the inclination angle $\varphi 1$ of each vibration ellipse and the thrust is described above, not only the inclination angle but also the width (minor axis) of the vibration ellipse varies with a change in the thrust. Accordingly, a value obtained by combining, according to a predetermined ratio, the inclination angle $\varphi 1$ of each vibration ellipse and an angle $\varphi 2$ in Fig. 4A formed by a diagonal of a bounding rectangle of the vibration ellipse and a centerline of the vibration ellipse may be used as the second vibration component.

Further, formula 4 obtained by extracting only the variable part of formula 3 may be used as the second vibration component S, or a result of substituting this into another function may be used as the second vibration component S.

[Formula 4]

$$S = \frac{\sigma^2 - \rho^2}{2\rho\sigma cos\,(\delta_1 - \delta_2)} \qquad \text{formula 4}$$

While the Lissajous waveform (vibration ellipse) is plotted with (the current signal IA + the current signal IB) on the vertical axis and (the current signal IA - the current signal IB) on the horizontal axis in the above-described example, the current signal IA and the current signal IB may be plotted on the vertical axis and the horizontal axis, respectively, and the inclination of the vibration ellipse may be calculated. Fig. 4B illustrates a Lissajous waveform (vibration ellipse) plotted with the current signal IA on the vertical axis and the current signal IB on the horizontal axis.

An inclination angle $\varphi 3$ of the vibration ellipse in this case is defined as formula 5, and the angle $\varphi 3$ may be used as the second vibration component.

[Formula 5]

$$\varphi_3 = \frac{1}{2} tan^{-1} \left( \frac{2\rho\sigma cos\,(\delta_1 - \delta_2)}{\sigma^2 - \rho^2} \right) \qquad \text{formula 5}$$

Further, as in the above-described example, an angle φ4 may be calculated, and a value obtained by combining the inclination angle φ3 and the angle φ4 according to a predetermined ratio may be used as the second vibration component. Further, formula 6 obtained by extracting only the variable part of formula 5 may be used as the second vibration component S, or a result of substituting this into another function may be used as the second vibration component S.

[Formula 6]

$$S = \frac{2\rho\sigma cos\,(\delta_1 - \delta_2)}{\sigma^2 - \rho^2} \qquad \text{formula 6}$$

Next, a second example of second vibration component detection according to the first embodiment will be described.

While formula 3 is used to calculate the inclination angle of the vibration ellipse in the first example of second vibration component detection according to the first embodiment, another parameter of the vibration ellipse that varies with the inclination angle of the vibration ellipse may be used to calculate the inclination angle. Fig. 4C and Fig. 4D are diagrams illustrating the second example of second vibration component detection according to the first embodiment, and Fig. 4C is a diagram illustrating an example of detecting the second vibration component using an angle φ5, which varies with the inclination angle of the vibration ellipse.

While the inclination of the axis of the vibration ellipse is used in the first example of second vibration component detection according to the first embodiment, determining this requires a complicated calculation, as expressed by formula 3. The angle φ5 detected in the present example can be detected directly from the sum signal of the current signal IA and the current signal IB and a difference signal between the current signal IA and the current signal IB. The angle φ5 is an angle formed by a line connecting the positive and negative peaks of (the current signal IA + the current signal IB) and the vertical axis, and Fig. 4D is a time-domain waveform diagram illustrating a method for detecting the angle φ5. In Fig. 4D, a solid line represents a waveform of (the current signal IA + the current signal IB), a dotted line represents a derivative waveform of the waveform represented by the solid line, and a dashed line represents a waveform of (the current signal IA - the current signal IB). The signal represented by the dashed line is sampled to detect PT and PB values at the time points of peaks (maximum, minimum) of (the current signal IA + the current signal IB), and the angle φ5 is calculated using formula 7. Further, PT and PB may be detected at the time points where the derivative waveform of (the current signal IA + the current signal IB) crosses zero.

[Formula 7]

$$\varphi_5 = tan^{-1} \left( \frac{Amplitude\ of\ I_A + I_B \times 2}{P_T - P_B} \right) \qquad \text{formula 7}$$

The second vibration component detection unit 16 calculates the second vibration component (angle φ5) as described above.

Further, formula 8 or formula 9 may be used as the second vibration component S.

[Formula 8]

$$S = \frac{P_T - P_B}{Amplitude\ of\ I_A + I_B} \qquad \text{formula 8}$$

[Formula 9]

$$S = P_T - P_B \qquad \text{formula 9}$$

Further, as in the first example of second vibration component detection according to the first embodiment, not only the inclination angle but also the width (minor axis) of the vibration ellipse varies with a change in the thrust. Accordingly, a value obtained by combining, according to a predetermined ratio, the angle φ5 and an angle φ6 formed by a diagonal of a bounding rectangle of the vibration ellipse illustrated in Fig. 4C and a line indicating the angle φ5 may be used as the second vibration component S.

Further, various parameters such as major axis, height, width, and the like, as well as inclination angle, minor axis, and the like used in the above description, can be defined as parameters representing a Lissajous waveform (vibration ellipse). Accordingly, another parameter that changes with the inclination angle of the Lissajous waveform (vibration ellipse) may be used to detect the second vibration component S.

Next, a third example of second vibration component detection according to the first embodiment will be described.

While the second vibration component is extracted from the shape of the vibration ellipse in the first and second examples of second vibration component detection according to the first embodiment, the second vibration component is calculated from current amplitude in the present example. In the present example, the current signal IA and the current signal IB are input to the second vibration component detection unit 16, and the second vibration component detection unit 16 obtains the amplitudes of the current signal IA and the current signal IB, calculates (the amplitude of the current signal IA - the amplitude of the current signal IB), and outputs the calculation result as the second vibration component S.

Further, a value obtained by dividing (the amplitude of the current signal IA - the amplitude of the current signal IB) by (the current signal IA + the amplitude of the current signal IB) may be used as the second vibration component S.

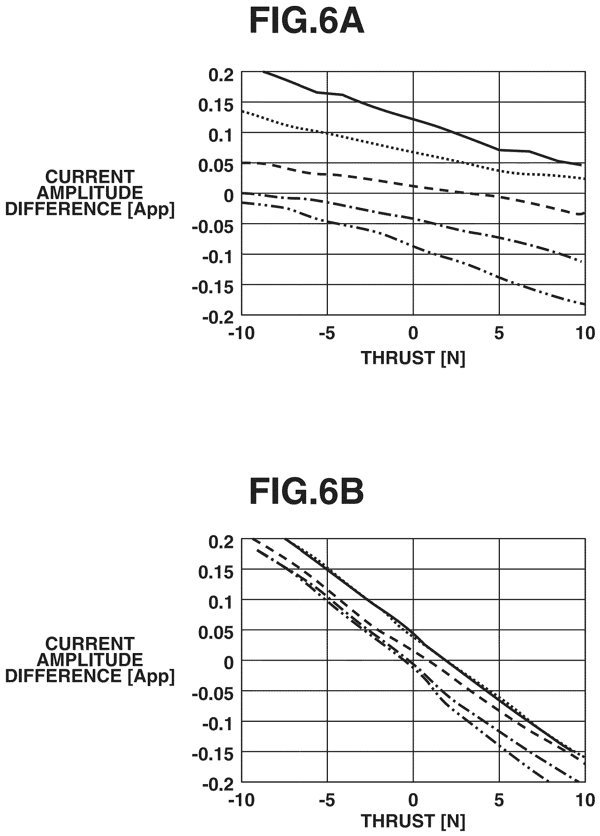

Fig. 6A and Fig. 6B are diagrams illustrating relationships between (the amplitude of the current signal IA - the amplitude of the current signal IB) and thrusts in a case where (the amplitude of the current signal IA - the amplitude of the current signal IB) is used as the second vibration component S. Fig. 6A illustrates an example of a case where the upward thrust vibration amplitude is small, and Fig. 6B illustrates an example of a case where the upward thrust vibration amplitude is relatively large. Each line type in Fig. 6A and Fig. 6B represents a different phase difference between the alternating current signal VA and the alternating current signal VB, and solid lines (90°), dotted lines (45°), dashed lines (0°), dash-dot lines (-45°), and dash-double-dot lines (-90°) are illustrated.

Comparison between the characteristics in Fig. 6A and Fig. 6B and the characteristics in Fig. 5A and Fig. 5B reveals that the inclination of the vibration ellipse and (the amplitude of the current signal IA - the amplitude of the current signal IB) have very similar characteristics.

As in the first example of second vibration component detection according to the first embodiment, the relationship between the thrust acting between the contact body 6 and the protrusion portions 80 and (the amplitude of the current signal IA - the amplitude of the current signal IB) is linear. Therefore, by determining the offset and slope of each line for each upward thrust vibration amplitude and each phase difference between the alternating current signal VA and the alternating current signal VB, the thrust can be estimated easily from (the amplitude of the current signal IA - the amplitude of the current signal IB).

Next, a fourth example of second vibration component detection according to the first embodiment will be described.

The present example is an example of detection in a case where a current signal is represented as a vector.

Specifically, in the present example, a vector based on an amplitude and phase of a first detection signal is defined as a first signal vector, and a vector based on an amplitude and phase of a second detection signal is defined as a second signal vector. Furthermore, one of the sum of the first signal vector and the second signal vector and the difference of the first signal vector and the second signal vector may be defined as the first vibration vector, and the other one as the second vibration vector. A vector component in the same direction as the first vibration vector may be defined as a same-direction component, and a vector component in a direction normal to the first vibration vector may be defined as a normal-direction component. The second vibration component may be calculated from a ratio based on the difference between the same-direction components of the first signal vector and the second signal vector and the difference between the normal-direction components of the first signal vector and the second signal vector.

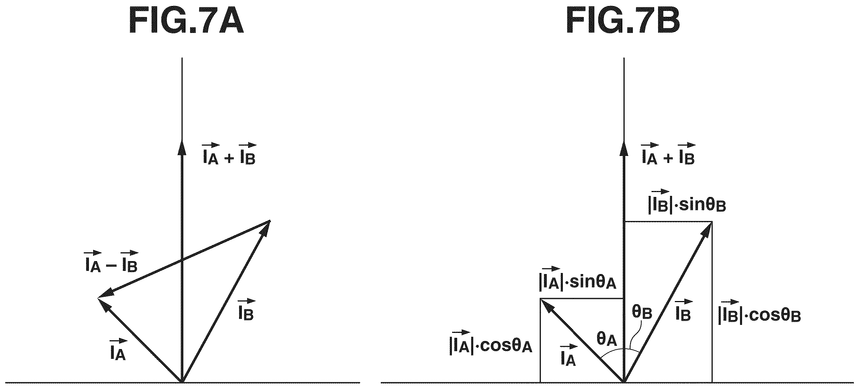

Fig. 7 presents current signal vector diagrams, and Fig. 7A is a diagram illustrating the current signal IA, the current signal IB, a sum signal of the current signal IA and the current signal IB, and a difference signal between the current signal IA and the current signal IB as vectors. It should be noted that the second vibration component S described as the third example of the second vibration component according to the first embodiment can be expressed as formula 10 and formula 11 using vectors.

[Formula 10]

$$S = |\vec{I_A}| - |\vec{I_B}| \qquad \text{formula 10}$$

[Formula 11]

$$S = \frac{|\vec{I_A}| - |\vec{I_B}|}{|\vec{I_A} + \vec{I_B}|} \qquad \text{formula 11}$$

Fig. 7B is a diagram illustrating the current signal IA and the current signal IB as vectors. The diagram illustrates the current signal IA as the first signal vector and the current signal IB as the second signal vector, with each of the two vectors being decomposed into two orthogonal vibration components. The two orthogonal vibration components are a vibration component in the same direction as (the first signal vector + the second signal vector), which is the upward thrust vibration component (first vibration vector), and a vibration component in a direction normal to (the first signal vector + the second signal vector). There is a high correlation between the difference between the vibration components in the same direction as the upward thrust vibration components (first vibration vector) of the first signal vector and the second signal vector and the inclinations of the vibration ellipses. Accordingly, for each of the first signal vector and the second signal vector, the component in the same direction as the upward thrust vibration component (first vibration vector) is obtained, and the difference between the obtained components may be used as the second vibration component S, as expressed by formula 12. Further, a value obtained by dividing the value of formula 12 by the upward thrust vibration component (first vibration vector) may be used as the second vibration component S, as expressed by formula 13.

[Formula 12]

$$S = |\vec{I_A}| \cdot \cos\theta_A - |\vec{I_B}| \cdot \cos\theta_B \qquad \text{formula 12}$$

[Formula 13]

$$S = \frac{|\vec{I_A}| \cdot \cos\theta_A - |\vec{I_B}| \cdot \cos\theta_B}{|\vec{I_A} + \vec{I_B}|} \qquad \text{formula 13}$$

Further, the components of the first signal vector (the current signal IA) and the second signal vector (the current signal IB) that are in a direction normal to the upward thrust vibration component (first vibration vector) may be used. A sum obtained by adding, according to a predetermined ratio (x : y), the difference between the components of the first signal vector (the current signal IA) and the second signal vector (the current signal IB) that are in the same direction as the upward thrust vibration component (first vibration vector) and the difference between the components of the first signal vector (the current signal IA) and the second signal vector (the current signal IB) that are in the direction normal to the upward thrust vibration component (first vibration vector) may be used as the second vibration component S, as expressed by formula 14.

Further, a value obtained by dividing the value of formula 14 by the upward thrust vibration component (first vibration vector) may be used as the second vibration component S, as expressed by formula 15.

[Formula 14]

$$S = x(|\vec{I_A}| \cdot \cos\theta_A - |\vec{I_B}| \cdot \cos\theta_B) + y(|\vec{I_A}| \cdot \sin\theta_A - |\vec{I_B}| \cdot \sin\theta_B) \quad \text{formula 14}$$

[Formula 15]

$$S = \frac{x(|\vec{I_A}| \cdot \cos\theta_A - |\vec{I_B}| \cdot \cos\theta_B) + y(|\vec{I_A}| \cdot \sin\theta_A - |\vec{I_B}| \cdot \sin\theta_B)}{|\vec{I_A} + \vec{I_B}|} \qquad \text{formula 15}$$

A method for obtaining the second vibration components S of formula 12 to formula 15 will be described. Equation 12 to formula 15 are computations involving trigonometric functions, and phase difference detection is also necessary. This results in a complex structure of the second vibration component detection unit 16. Accordingly, an example of performing detection using synchronous detection instead of the computations will be described. A method for detecting the second vibration component S using synchronous detection will be described.

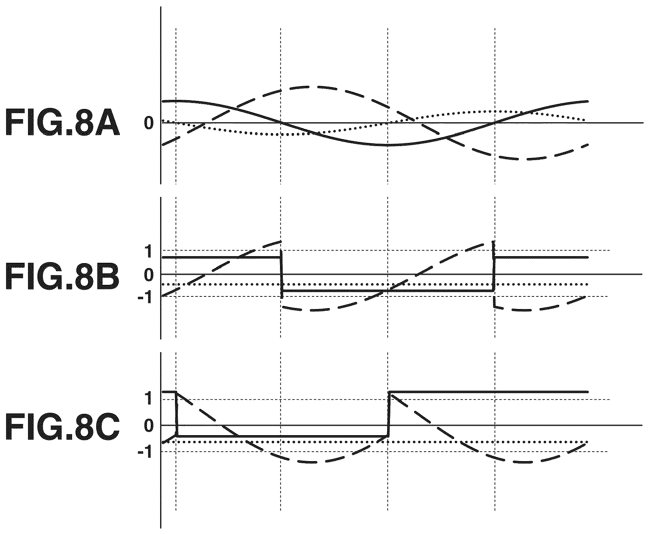

Fig. 8 presents diagrams illustrating a method for obtaining the magnitude of the component of each direction using synchronous detection. Fig. 8A illustrates a waveform (solid line) of (the current signal IA + the current signal IB) used as a reference, a signal waveform (dashed line) to be decomposed into components, and a derivative waveform (dotted line) of (the current signal IA + the current signal IB). Fig. 8B illustrates how a component in the same direction as the vector of (the current signal IA + the current signal IB) is detected, and Fig. 8C illustrates how a component in a direction normal to the vector of (the current signal IA + the current signal IB) is detected.

A solid line in Fig. 8B represents a comparison reference signal that is 1 when the sign of the solid line in Fig. 8A is positive and -1 when the sign is negative, and a dashed line in Fig. 8B represents the result of multiplying the signal represented by the dashed line in Fig. 8A and the comparison reference signal. Further, a dotted line in Fig. 8B represents the average value of the multiplication result, indicating the magnitude of the vibration component in the same direction as the vector of (the current signal IA + the current signal IB).

Next, a solid line Fig. 8C represents a comparison reference signal that is 1 when the sign of the dotted line in Fig. 8A is positive and is -1 when the sign is negative, and a dashed line in Fig. 8C represents the result of multiplying the signal represented by the dashed line in Fig. 8A and the comparison reference signal. Further, a dotted line in Fig. 8C represents the average value of the multiplication result, indicating the magnitude of the vibration component in the direction normal to the vector of (the current signal IA + the current signal IB).

By using synchronous detection as described above so that the computations involving trigonometric functions become unnecessary, it becomes easy to realize the second vibration component detection unit 16 using a FPGA or the like.

Next, a fifth example of second vibration component detection according to the first embodiment will be described.

While the second vibration component is detected after calculating the vectors of each of the current signal IA and the current signal IB in the fourth example of the second vibration component according to the first embodiment, the second vibration component S is detected using the vectors of (the current signal IA - the current signal IB) in the fifth example.

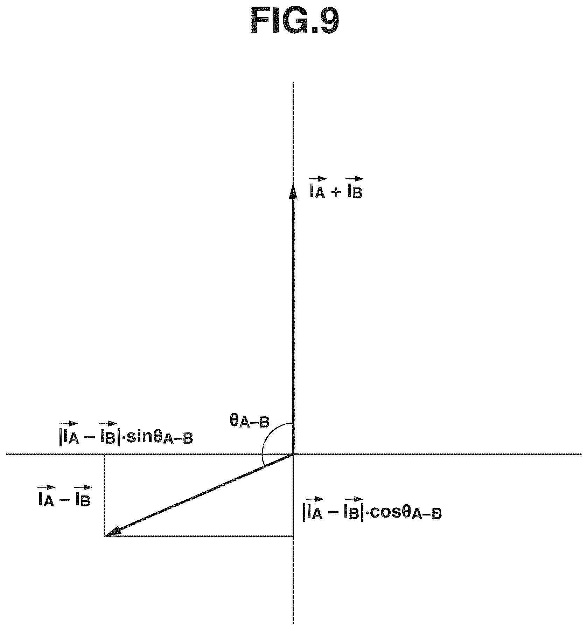

Fig. 9 is a diagram illustrating a relationship between the first vibration vector, which is the sum of the first signal vector (the current signal IA) and the second signal vector (the current signal IB), and the second vibration vector, which is the difference between these vectors. As in the fourth example of the second vibration component according to the first embodiment, there is a high correlation between the component of the second vibration vector in the same direction as the upward thrust vibration component (first vibration vector) and the inclinations of the vibration ellipses. Values represented by formula 16 and formula 17 for calculating the second vibration component S using the component of the second vibration vector in the same direction as the upward thrust vibration component (first vibration vector) have very similar characteristics to the characteristics in Fig. 6A and Fig. 6B.

[Formula 16]

$$S = |\overrightarrow{I_A} - \overrightarrow{I_B}| \cdot \cos\theta_{A-B} \qquad \text{formula } 16$$

[Formula 17]

$$S = \frac{|\overrightarrow{I_A} - \overrightarrow{I_B}| \cdot \cos\theta_{A-B}}{|\overrightarrow{I_A} + \overrightarrow{I_B}|} \qquad \text{formula } 17$$

Further, the components of the second vibration vector in the direction normal to the upward thrust vibration component (first vibration vector) may be used. The second vibration component S may be calculated by combining, according to a predetermined ratio (x : y), the component of the second vibration vector in the same direction as the upward thrust vibration component (first vibration vector) and the component of the second vibration vector in the direction normal to the upward thrust vibration component (first vibration vector), as expressed by formula 18 and formula 19.

[Formula 18]

$$S = x(|\overrightarrow{I_A} - \overrightarrow{I_B}| \cdot \cos\theta_{A-B}) + y(|\overrightarrow{I_A} - \overrightarrow{I_B}| \cdot \sin\theta_{A-B}) \quad \text{formula } 18$$

[Formula 19]

$$S = \frac{x(|\overrightarrow{I_A} - \overrightarrow{I_B}| \cdot \cos\theta_{A-B}) + y(|\overrightarrow{I_A} - \overrightarrow{I_B}| \cdot \sin\theta_{A-B})}{|\overrightarrow{I_A} + \overrightarrow{I_B}|} \qquad \text{formula } 19$$

It should be noted that as in the fourth example of the second vibration component according to the first embodiment, the second vibration component S can be calculated using synchronous detection in the present example.

Next, a sixth example of second vibration component detection according to the first embodiment will be described.

While the methods for detecting the second vibration component S using a Lissajous figure or vector representation are described in the above-described examples, an example of detecting the second vibration component S using synchronous detection on a time-domain waveform will be described in the present example. While the vibration component in the same direction as the upward thrust direction is obtained using synchronous detection in the above-described examples, the second vibration component S is directly calculated using synchronous detection in the present example.

Since the second vibration component is a vibration component that is excited through contact between the vibrating body 5 and the contact body 6 (slider) and, as a response to it, is generated in the vibrating body 5 and superimposed on the first vibration component, the second vibration component is generated on the vibrating body 5 with a constant phase delay from the timing of contact as a starting point. This timing as the starting point corresponds to the peak timing of the vibration of the vibration mode (the upward thrust vibration mode) illustrated in Fig. 1C, and the generated vibration is superimposed on the first vibration component with a phase delay that differs for each vibration mode depending on the excitation frequency. The vibration caused by the frictional force acting in the direction of relative movement between the vibrating body 5 and the contact body 6 (slider) is generated mainly in the vibration mode (the forward vibration mode) illustrated in Fig. 1D and superimposed on the vibration of the forward vibration mode of the first vibration component with a phase delay $\theta s$ corresponding to the response characteristics of the forward vibration mode.

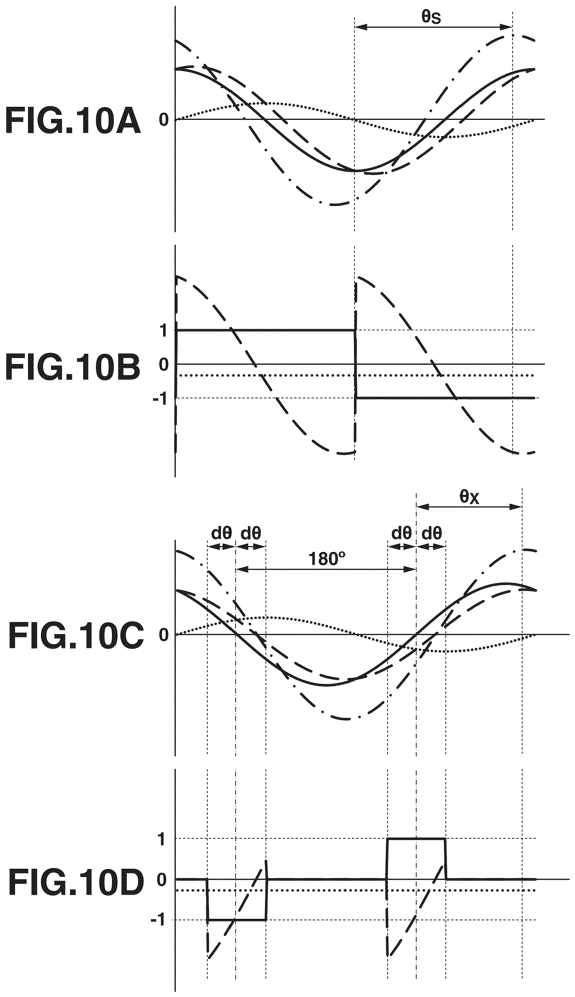

Figs. 10A and 10B are diagrams illustrating the sixth example of second vibration component detection according to the first embodiment, and are diagrams for illustrating an operation of synchronous detection. Fig. 10A illustrates a waveform (solid line) of (the current signal IA - the current signal IB) at no load and a superimposed vibration waveform (dotted line) superimposed on the waveform at no load. In addition, a waveform (dashed line) of (the current signal IA - the current signal IB) on which the superimposed vibration waveform (dotted line) is superimposed and a waveform (dash-dot line) of (the current signal IA + the current signal IB) are illustrated.

Further, Fig. 10B is a diagram illustrating how a superimposed vibration waveform component is detected using synchronous detection.

A solid line in Fig. 10B represents a comparison reference signal that is 1 when the sign of the superimposed vibration waveform (dotted line) in Fig. 10A is positive and -1 when the sign is negative, and a dashed line in Fig. 10B represents the result of multiplying the signal represented by the dashed line in Fig. 10A and the comparison reference signal. A dotted line in Fig. 10B represents the average value of the multiplication result, and this value varies according to the amplitude of the superimposed vibration waveform (dotted line) in Fig. 10A.

The superimposed vibration waveform (dotted line) in Fig. 10A herein cannot be detected directly because this waveform is a vibration component that is generated in the vibrating body 5 due to excitation induced in the vibrating body 5 by the contact body 6 (slider) and is superimposed on the vibration at no load. Accordingly, the second vibration component detection unit 16 performs vibration component detection using synchronous detection to detect a vibration component including many vibration components with this superimposed vibration waveform. First, since the phase of the superimposed vibration waveform is a phase delayed by the phase of $\theta s$ from the phase of the peak of the waveform (dash-dot line) of (the current signal IA + the current signal IB) in Fig. 10A, in order to extract this phase component, the comparison reference signal (solid line) illustrated in Fig. 10B is generated. It should be noted that the amount of phase delay $\theta s$ differs with each drive state and is therefore set according to the drive state. Next, the waveform (dashed line) of (the current signal IA - the current signal IB) on which the superimposed vibration waveform (dotted line) in Fig. 10A is superimposed is multiplied by the comparison reference signal (solid line) in Fig. 10B, and the multiplication result is averaged to calculate the second vibration component S, using synchronous detection. Further, a value obtained by dividing the value calculated using synchronous detection by the amplitude of (the current signal IA + the current signal IB) may be used as the second vibration component S.

It should be noted that the value of $\theta s$ can be measured and obtained in advance based on a condition such as the amplitude of (the current signal IA + the current signal IB), the phase difference between the alternating current signal VA and the alternating current signal VB, or the like, and prepared as a data table or function.

Further, while the comparison reference signal is a pulse signal in the present example, other waveforms such as a sine wave may be used.

Next, a seventh example of second vibration component detection according to the first embodiment will be described.

Figs. 10C and 10D are diagrams illustrating a seventh example of second vibration component detection according to the first embodiment. Fig. 10C illustrates a waveform (solid line) of (the current signal IA - the current signal IB) at no load and a superimposed vibration waveform (dotted line) superimposed on that waveform. Furthermore, a waveform (dashed line) of (the current signal IA - the current signal IB) on which the superimposed vibration waveform (dotted line) is superimposed and a waveform (dash-dot line) of (the current signal IA + the current signal IB) are illustrated.

Fig. 10D illustrates how a superimposed vibration waveform component is detected by integrating the actual detected waveform (dashed line) of (the current signal IA - the current signal IB) on which the superimposed vibration waveform (dotted line) is superimposed, over a predetermined phase interval.

A solid line in Fig. 10D represents a gate signal that is -1 during a phase interval of $(0° \pm d\theta)$ centered at a phase of 0° of the waveform (solid line) of (the current signal IA - the current signal IB) at no load in Fig. 10C, is 1 during a phase interval of $(180° \pm d\theta)$ centered at a phase of 180°, and is 0 during other phase intervals. A dashed line in Fig. 10C represents the result of multiplying the signal represented by the dashed line in Fig. 10C and the gate signal. A dotted line in Fig. 10D represents the average value of the multiplication result, and this value varies according to the amplitude of the superimposed vibration waveform (dotted line) in Fig. 10C.

It is to be noted that the waveform (solid line) of (the current signal IA - the current signal IB) at no load in Fig. 10C can be detected only when there is no load. Thus, a phase difference $\theta X$ between the waveform (solid line) of (the current signal IA - the current signal IB) at no load and the waveform (dash-dot line) of (the current signal IA + the current signal IB) in Fig. 10C is preset as a value that varies according to various vibration states, as a data table or function. For example, the phase difference $\theta X$ can be preset based on the states such as the amplitude of (the current signal IA + the current signal IB), the phase difference between the alternating current signal VA and the alternating current signal VB, and the like.

The second vibration component detection unit 16 outputs the value of the dotted line in Fig. 10D directly as the second vibration component S. Further, a result of dividing the value by the amplitude of (the current signal IA + the current signal IB) may be used as the second vibration component S.

Next, an eighth example of second vibration component detection according to the first embodiment will be described.

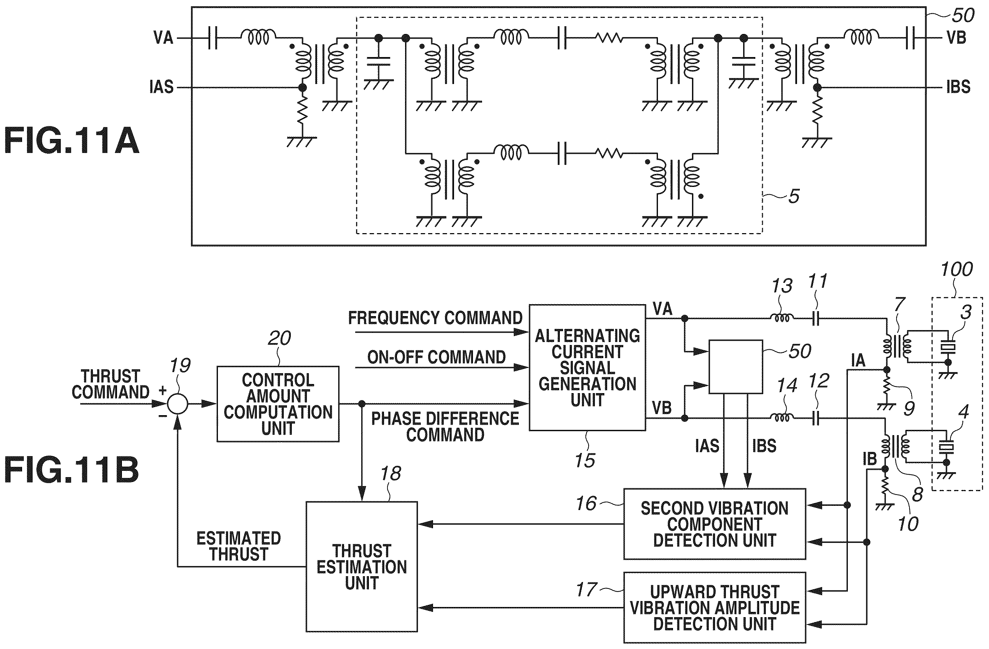

In the present example, (the current signal IA - the current signal IB) (second comparison signal) at no load with respect to the alternating current signal VA (first signal) and the alternating current signal VB (second signal) is generated using an equivalent circuit model of the vibrating body 5 and a drive circuit. Subsequently, the second comparison signal is subtracted from the difference between the measured current signal IA (the first detection signal) and the measured current signal IB (the second detection signal), thereby extracting the superimposed vibration waveform. Fig. 11A illustrates an example of a circuit of the equivalent circuit model. A filter 50 is a filter configured to simulate the operation of the equivalent circuit of the vibrating body 5 and the drive circuit at no load. A circuit diagram in the block includes a series resonant circuit composed of the inductors 13 and 14 and the capacitors 11 and 12, the transformers 7 and 8, the equivalent circuit of the vibrating body 5 including the piezoelectric body 3 and the piezoelectric body 4, and the resistors 9 and 10 for current detection, and their operations are simulated through computation. When the waveforms of the alternating current signal VA and the alternating current signal VB are input to the filter 50, a current signal IAS simulating the current signal IA in real time and a current signal IBS simulating the current signal IB in real time are output.

Fig. 11B is a diagram illustrating a second configuration example of the drive apparatus of the vibration-type actuator 100 according to the first embodiment of the present invention. Fig. 11B illustrates an example of detecting the second vibration component using the filter 50. Each component corresponding to a component in Fig. 2 is assigned the same reference numeral, and detailed descriptions thereof are omitted. The alternating current signal VA and the alternating current signal VB output by the alternating current signal generation unit 15 are input to the filter 50, and the filter 50 outputs the current signal IAS simulating the current signal IA at no load and the current signal IBS simulating the current signal IB at no load. Subsequently, the current signals IA and IB and the current signals IAS and IBS are input to the second vibration component detection unit 16. Subsequently, (the current signal IAS - the current signal IBS) (the second comparison signal) is subtracted from the difference between the current signal IA (the first detection signal) and the current signal IB (the second detection signal), thereby detecting an amplitude SF of the superimposed vibration waveform. Subsequently, as expressed by formula 20, the sign of a phase difference θSAB between the superimposed vibration waveform and (the current signal IA + the current signal IB) is determined as the sign of the amplitude SF of the superimposed vibration waveform, and this is output as the second vibration component S.

Further, in the above-described example, (the current signal IAS - the current signal IBS) is used as the second comparison signal, and the second vibration component S is obtained from a signal obtained by subtracting the second comparison signal from the difference between the current signal IA (the first detection signal) and the current signal IB (the second detection signal). However, (the current signal IAS + the current signal IBS) may be used as the (first comparison signal) depending on the configuration of the vibrating body 5 and the polarization directions of the piezoelectric bodies 3 and 4. Then, the second vibration component S may be obtained from a signal obtained by subtracting the first detection signal from the sum of the current signal IA (the first detection signal) and the current signal IB (the second detection signal).

[Formula 20]

$$S = \mathrm{Sign}(\theta_{SAB}) \cdot SF \qquad \text{formula 20}$$

Further, the current signal IAS may be used as the first comparison signal, and the current signal IBS may be used as the second comparison signal.

The difference between the current signal IA (the first detection signal) and the current signal IAS (the first comparison signal) and the difference between the current signal IB (the second detection signal) and the current signal IBS (the second comparison signal) may be obtained, and the difference between their amplitudes may be used as the second vibration component S. This can be represented in vector form by formula 21.

[Formula 21]

$$S = |\overrightarrow{I_A} - \overrightarrow{I_{AS}}| - |\overrightarrow{I_B} - \overrightarrow{I_{BS}}| \qquad \text{formula 21}$$

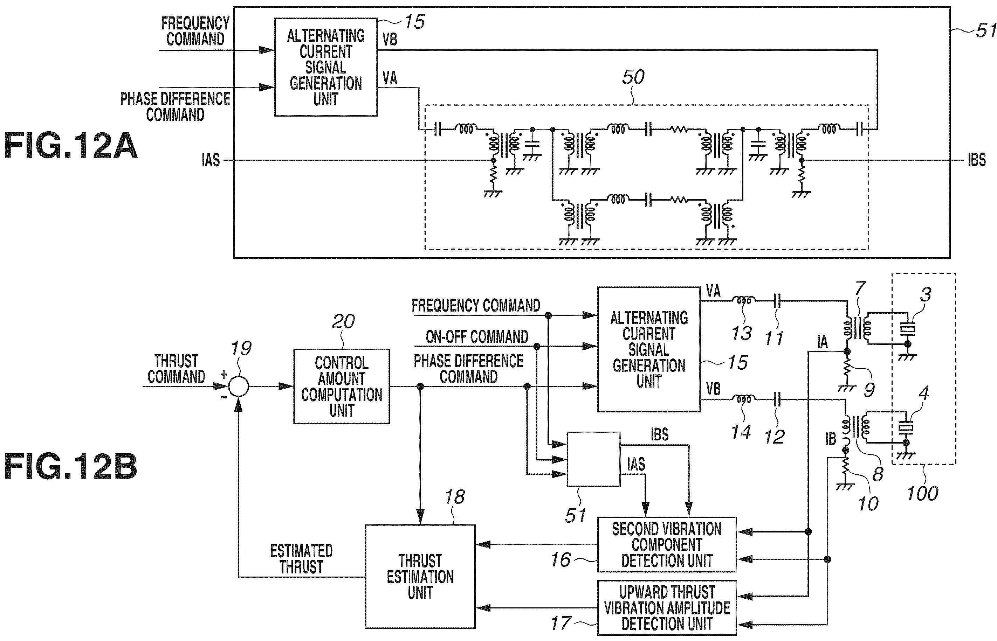

Fig. 12A is a diagram illustrating a configuration of a current signal generation unit 51 in which the alternating current signal generation unit 15 is added to the filter 50. The current signal generation unit 51 outputs the current signal IAS and the current signal IBS simulating the current signal IA and the current signal IB at no load, based on a frequency command from the command unit, which is not illustrated, and a phase difference command from the control amount computation unit 20.

Fig. 12B is a diagram illustrating a third configuration example of the drive apparatus of the vibration-type actuator 100 according to the first embodiment of the present invention. Fig. 12B illustrates an example of detecting the second vibration component using the current signal generation unit 51. Each component corresponding to a component in Fig. 2 and Fig. 11B is assigned the same reference numeral, and detailed descriptions thereof are omitted.

It should be noted that the outputs of the filter 50 and the current signal generation unit 51 do not have to be analog signals. For example, digital waveform information or waveform information such as amplitude, phase, and the like may be output.

Next, operations of the thrust estimation unit 18 will be described. As illustrated in Fig. 6A and Fig. 6B, the output of the second vibration component detection unit 16 varies in sensitivity to thrust and offset value depending on the phase difference between the alternating current signal VA and the alternating current signal VB and the upward thrust vibration amplitude. Accordingly, in order to estimate the thrust from the second vibration component, sensitivity and offset value correction needs to be performed on the output of the second vibration component detection unit 16 based on the phase difference between the alternating current signal VA and the alternating current signal VB and the upward thrust vibration amplitude.

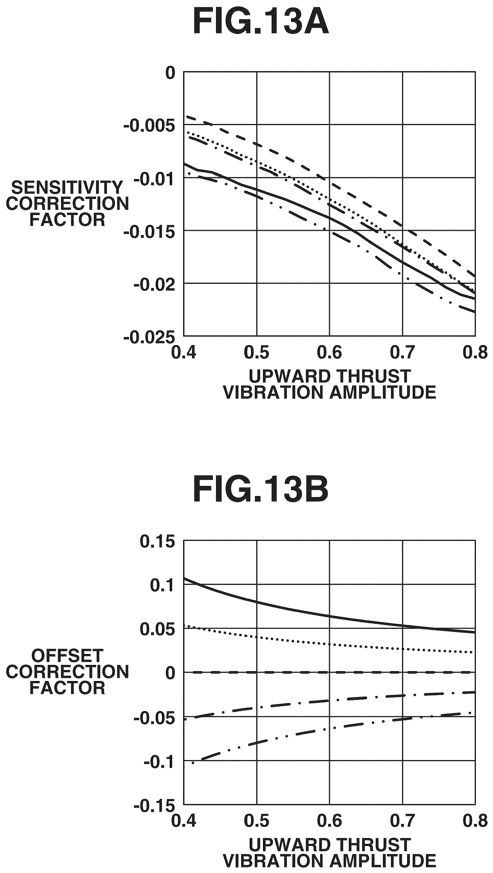

Fig. 13A to Fig. 13D are diagrams illustrating correction factors for obtaining the thrust based on the second vibration component S illustrated in Fig. 6A and Fig. 6B. Fig. 13A illustrates a sensitivity correction factor $\gamma$, and Fig. 13B illustrates an offset correction factor $\varepsilon$, illustrating the correction factors for each upward thrust amplitude and phase difference between the alternating current signal VA and the alternating current signal VB. Each line type represents a different phase difference between the alternating current signal VA and the alternating current signal VB, and solid lines (90°), dotted lines (45°), dashed lines (0°), dash-dot lines (-45°), and dash-double-dot lines (-90°) are illustrated as representative examples.

Equation 22 is a formula for estimating a thrust F from the value of the second vibration component S.
[Formula 22]

$$F = \frac{S - \varepsilon}{\gamma} \qquad \text{formula 22}$$

In a case where the value of the second vibration component S have characteristics that change linearly with thrust as illustrated in Fig. 6A and Fig. 6B, the thrust can be estimated using the offset and sensitivity correction factors obtained in advance for each upward thrust amplitude and each phase difference between the alternating current signal VA and the alternating current signal VB. The characteristics in Fig. 13A and Fig. 13B may be stored as a data table, or as functions T1 and T2 of the upward thrust vibration amplitude and the phase difference between the alternating current signal VA and the alternating current signal VB. Equation 23 defines the function T1 of the offset correction factor $\varepsilon$, and formula 24 defines the function T2 of the sensitivity correction factor $\gamma$.
[Formula 23]

$$\varepsilon = T_1(\text{phase difference between the alternating current signals VA and VB, upward}$$

$$\text{thrust vibration amplitude)} \qquad \text{formula 23}$$

[Formula 24]

$$\gamma = T_2(\text{phase difference between the alternating current signals VA and VB, upward}$$

$$\text{thrust vibration amplitude)} \qquad \text{formula 24}$$

Further, while Fig. 13A and Fig. 13B are diagrams illustrating the relationships between the phase difference between the alternating current signal VA and the alternating current signal VB and the upward thrust vibration amplitude and the correction factors, the frequencies of the alternating current signal VA and the alternating current signal VB may be used instead of the upward thrust vibration amplitude. In this case, the sensitivity correction factor $\gamma$ and the offset correction factor $\varepsilon$ are obtained from the frequencies of the alternating current signal VA and the alternating current signal VB and the phase difference between the alternating current signal VA and the alternating current signal VB using a data table or functions T3 and T4. Equation 25 defines the function T3 of the offset correction factor $\varepsilon$, and formula 26 defines the function T4 of the sensitivity correction factor $\gamma$.
[Formula 25]

$$\varepsilon \; = \; T_3(\text{phase difference between the alternating current signals VA and VB,}$$

$$\text{frequency}) \qquad \text{formula 25}$$

[Formula 26]

$$\gamma \; = \; T_4(\text{phase difference between the alternating current signals VA and VB,}$$

$$\text{frequency}) \qquad \text{formula 26}$$

Further, the amplitude of the alternating current signal VA and the alternating current signal VB and other parameters may be added to the input arguments of the functions T3 and T4.

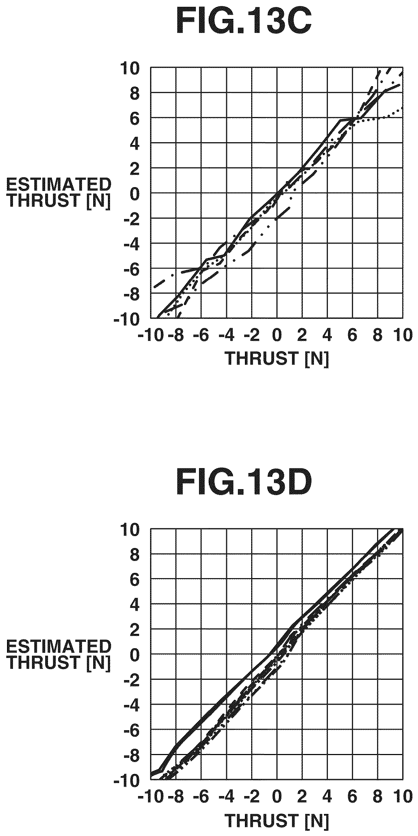

Fig. 13C and Fig. 13D are diagrams illustrating the results of thrust estimation based on the second vibration components S illustrated in Fig. 6A and Fig. 6B using the correction factors in Fig. 13A and Fig. 13B, illustrating a relationship between the measured and estimated thrusts. Fig. 13C illustrates the result of thrust estimation based on the characteristics in Fig. 6A, and Fig. 13D illustrates the result of thrust estimation based on the characteristics in Fig. 6B. The estimated thrust error with respect to the actual thrust is smaller in Fig. 13D, where the upward thrust amplitude is large, than in the characteristics in Fig. 13C.

Further, while an example in which the thrust is defined as a linear function of the second vibration component S and estimated using the offset correction factor $\varepsilon$ and the sensitivity correction factor $\gamma$ is described above, the relationship with the thrust may be defined using polynomial approximation, trigonometric function, or the like. In this case, each coefficient is a function of a plurality of arguments, such as T1 to T4 described above, with the number of coefficients equal to the number of terms in the approximation formula.

Next, a vibration detection unit used to detect the second vibration component will be described. In the above-described example, vibrations in the vibrating body 5 are detected based on the currents flowing through the primary windings of the transformers. This assumes a case where the piezoelectric bodies are connected to the secondary windings of the transformers. In other words, an approximately proportional relationship between the vibration velocities of the piezoelectric bodies and fundamental wave components of the currents in the primary windings of the transformers in a case where the damping capacitances of the piezoelectric bodies, parallel resonance frequencies of the inductors of the secondary windings of the transformers, and drive frequency are set close to each other is utilized. Although not illustrated in Fig. 2, Fig. 11B, and Fig. 12B, a capacitor and an inductor for adjusting the relationship between the parallel resonance frequencies and the drive frequency may be connected in parallel with the piezoelectric bodies. Furthermore, there is a method for detecting vibration using a publicly-known robot arm current detection method. This is a method in which a comparison reference capacitor with the same electrostatic capacitance as the damping capacitances of the piezoelectric bodies is connected in parallel with the piezoelectric bodies and a vibration is detected based on the difference between the current flowing through the piezoelectric bodies and the current flowing through the comparison reference capacitor. A current signal approximately equal to a publicly-known robot arm current can be obtained from the fundamental wave components of the currents in the primary windings of the transformers.

Further, in a case where vibration waveform detection is performed based on the currents, particularly in a case where the waveforms of the alternating current signal VA and VB are rectangular waves, the current signal may have a high harmonic content. In this case, after the current signal is detected, a low-pass filter, a band-pass filter, or the like may be used to convert the waveform, and the waveform after extracting the fundamental wave component may be used as the vibration waveform.

Further, the vibrating body may be provided with a piezoelectric body for vibration detection separately from a piezoelectric body for driving.

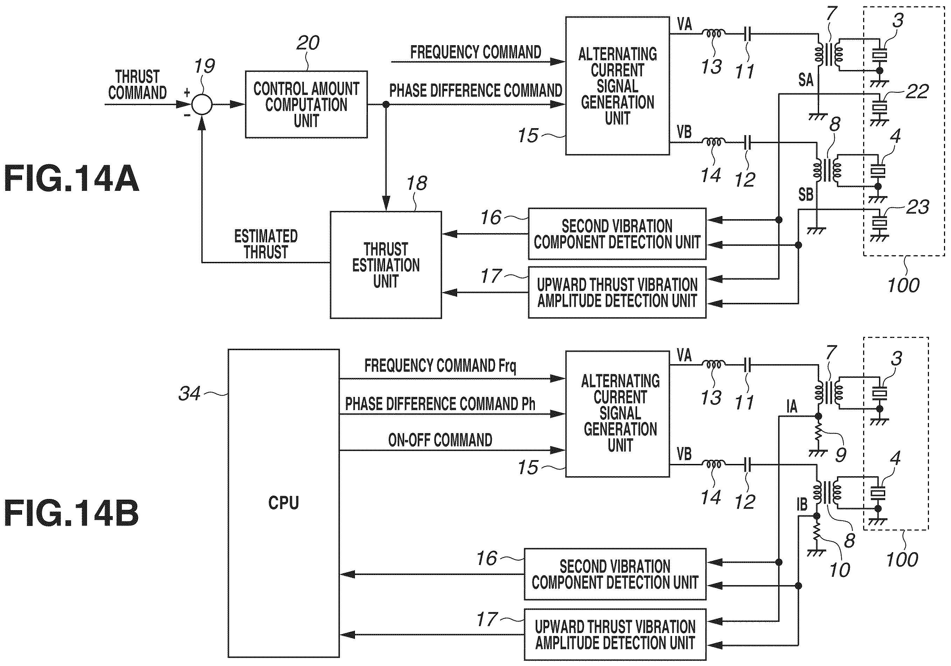

Fig. 14A is a diagram illustrating a fourth configuration example of the drive apparatus of the vibration-type actuator 100 according to the first embodiment of the present invention. Fig. 14A is a diagram illustrating an example of a case where the vibrating body 5 is provided with a piezoelectric element for vibration detection separately from a piezoelectric element for driving. Each component corresponding to a component in Fig. 2 is assigned the same reference numeral, and detailed descriptions thereof are omitted. A piezoelectric body 22 and a piezoelectric body 23 are piezoelectric elements for vibration detection, and the piezoelectric body 22 outputs a vibration detection signal SA, whereas the piezoelectric body 23 outputs a vibration detection signal SB. Further, the piezoelectric body 22 is stacked on the piezoelectric body 3, and the piezoelectric body 23 is stacked on the piezoelectric body 4. Being stacked on the piezoelectric body, the piezoelectric body 22 receives approximately the same strain as the strain the piezoelectric body receives, enabling accurate detection of vibrations in the piezoelectric body 3 and the piezoelectric body 4 for driving. The piezoelectric body for vibration detection may be provided separately from the piezoelectric element for driving as described above, or an electrode area for detection may be provided independently of an electrode for driving on the piezoelectric element for driving to form a piezoelectric body area for vibration detection, and this may be used as a piezoelectric body for vibration detection.

Fig. 14B is a diagram illustrating a fifth configuration example of the drive apparatus of the vibration-type actuator 100 according to the first embodiment of the present invention. In the configuration in Fig. 14B, a publicly-known central processing unit (publicly-known CPU) 34 realizes the thrust estimation unit and the portion configured to perform thrust control in Fig. 2. It should be noted that each component corresponding to a component in Fig. 2 is assigned the same reference numeral, and detailed descriptions thereof are omitted.

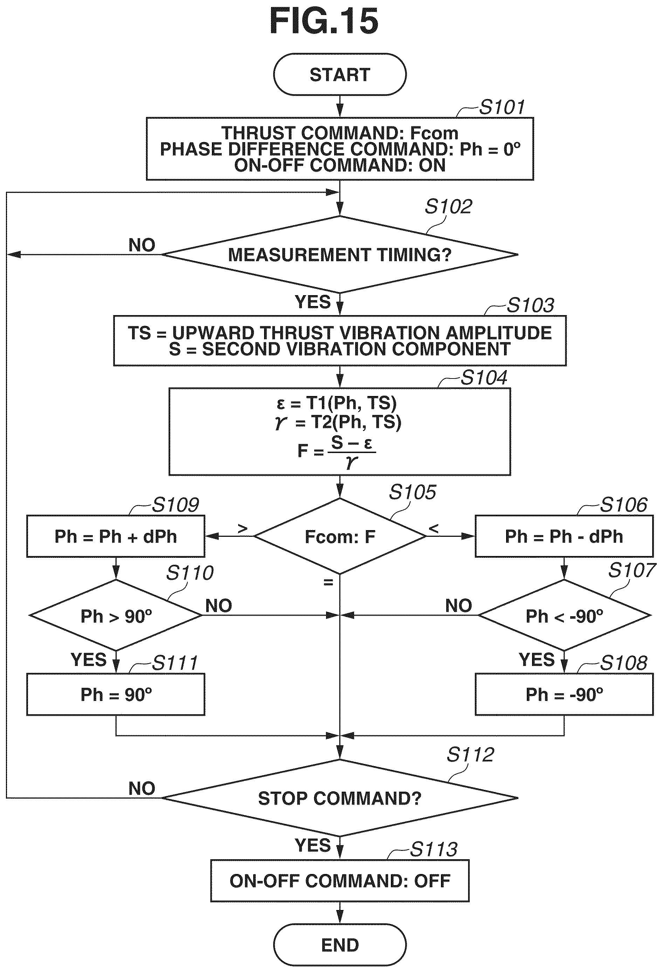

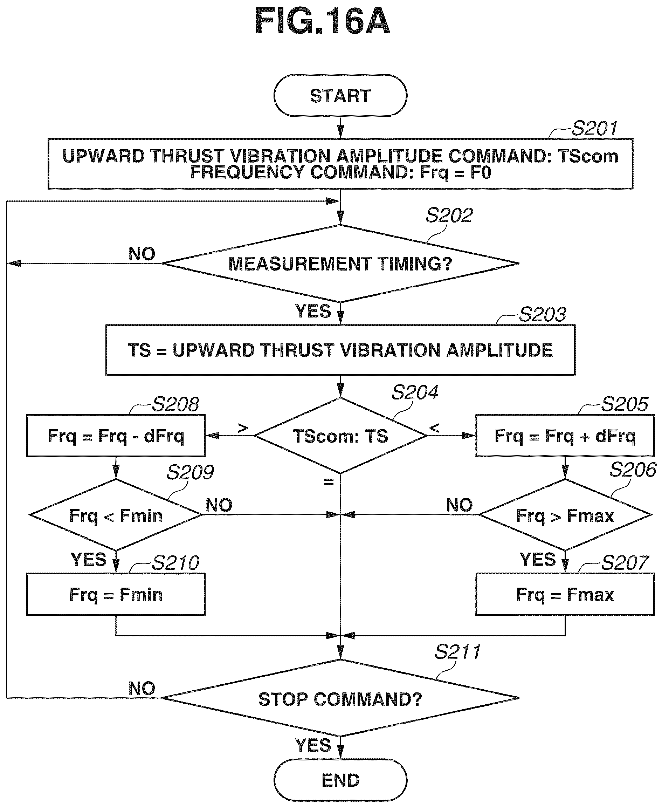

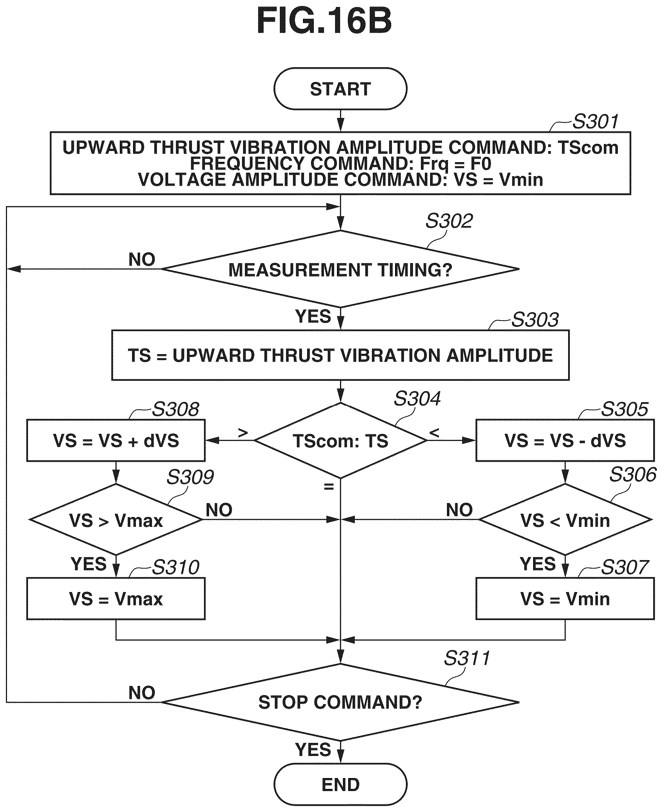

The second vibration component S output by the second vibration component detection unit 16 and the upward thrust vibration amplitude output by the upward thrust vibration amplitude detection unit 17 are input to the CPU 34, and the CPU 34 estimates the thrust and controls the thrust and the upward thrust vibration amplitude. Fig. 15, Fig. 16A, and Fig. 16B are flowchart diagrams illustrating operations of the CPU 34. Fig. 15 illustrates control steps for controlling the thrust, and Fig. 16A and Fig. 16B illustrate control steps for controlling the upward thrust vibration amplitude. First, Fig. 15 will be described. In step S101, the CPU 34 sets a predetermined thrust command Fcom, sets a phase difference command Ph to an initial phase difference of 0°, and sets an ON-OFF command to ON.

Next, in step S102, the CPU 34 determines whether the measurement timing has been reached. In a case where the determination result indicates that the measurement timing has not been reached (S102/No), the processing waits at step S102.

On the other hand, in a case where the determination result in step S102 indicates that the measurement timing has been reached (S102/Yes), the processing proceeds to step S103.

In step S103, the CPU 34 acquires the second vibration component S output by the second vibration component detection unit 16 and an upward thrust vibration amplitude TS output by the upward thrust vibration amplitude detection unit 17.

Next, in step S104, the CPU 34 performs calculation using the value of the upward thrust vibration amplitude TS acquired in step S103 and the value of the phase difference command Ph. Specifically, the sensitivity correction factor $\gamma$ and the offset correction factor $\varepsilon$ are calculated using the values and the functions T1 and T2 defined by a data table, calculation formula, or the like. Subsequently, the thrust F is calculated using the second vibration component S acquired in step S103, the sensitivity correction factor $\gamma$, and the offset correction factor $\varepsilon$. In the subsequent step, the thrust command Fcom described above and the thrust F calculated in step S104 are compared, and the phase difference command Ph is controlled.

Next, step S105 to step S111 for controlling the phase difference command Ph will be described.

In step S105, the CPU 34 compares the thrust command Fcom set in step S101 and the thrust F calculated in step S104.

In a case where the comparison result in step S105 indicates that the thrust command Fcom is less (<) than the thrust F, the processing proceeds to step S106.

In step S106, the CPU 34 subtracts a predetermined phase dPh from the phase difference command Ph.

Next, in step S107, the CPU 34 determines whether the phase difference command Ph is less than -90°.

In a case where the determination result in step S107 indicates that the phase difference command Ph is less than -90° (S107/Yes), the processing proceeds to step S108.

In step S108, the CPU 34 sets the phase difference command Ph to -90°.

Further, in a case where the comparison result in step S105 indicates that the thrust command Fcom is greater (>) than the thrust F, the processing proceeds to step S109.

In step S109, the CPU 34 adds the predetermined phase dPh to the phase difference command Ph.

Next, in step S110, the CPU 34 determines whether the phase difference command Ph is greater than +90°.

In a case where the determination result in step S110 indicates that the phase difference command Ph is greater than +90° (S110/Yes), the processing proceeds to step S111.

In step S111, the CPU 34 sets the phase difference command Ph to +90°.

In a case where the operation in step S108 is completed, the operation in step S111 is completed, or the comparison result in step S105 indicates that the thrust command Fcom and the thrust F are equal (=), the processing proceeds to step S112. It should be noted that by repeating the operations in step S105 to step S111, the phase difference command Ph is controlled so that the thrust F becomes closer to the thrust command Fcom.

Next, in step S112, the CPU 34 determines whether a stop command has been input. In a case where the determination result indicates that a stop command has not been input (S112/No), the processing returns to step S102, and step S102 and subsequent steps are performed.

On the other hand, in a case where the determination result in step S112 indicates that a stop command has been input (S112/Yes), the processing proceeds to step S113.

In step S113, the CPU 34 sets the ON-OFF command to OFF. Consequently, the outputs of the alternating current signal VA and the alternating current signal VB output by the alternating current signal generation unit 15 become 0 V, and the contact body 6 (slider) of the vibration-type actuator 100 stops.

Then, when the operation in step S113 is completed, the process in the flowchart illustrated in Fig. 15 ends.

Next, Fig. 16A will be described. First, in step S201, the CPU 34 sets a predetermined upward thrust vibration amplitude command TScom and sets a frequency command Frq to an initial frequency F0.

Next, in step S202, the CPU 34 determines whether the measurement timing has been reached. In a case where the determination result indicates that the measurement timing has not been reached (S202/No), the processing waits at step S202.

On the other hand, in a case where the determination result in step S202 indicates that the measurement timing has been reached (S202/Yes), the processing proceeds to step S203.

In step S203, the CPU 34 acquires the upward thrust vibration amplitude TS output by the upward thrust vibration amplitude detection unit 17.

In the subsequent step, the upward thrust vibration amplitude command TScom described above and the upward thrust vibration amplitude TS detected in step S203 are compared, and the frequency command Frq is controlled.

Next, step S204 to step S210 for controlling the frequency command Frq will be described.

In step S204, the CPU 34 compares the upward thrust vibration amplitude command TScom set in step S201 and the upward thrust vibration amplitude TS detected in step S203.

In a case where the comparison result in step S204 indicates that the upward thrust vibration amplitude command TScom is less (<) than the upward thrust vibration amplitude TS, the processing proceeds to step S205.

In step S205, the CPU 34 adds a predetermined frequency dFrq to the frequency command Frq.

Next, in step S206, the CPU 34 determines whether the frequency command Frq is greater than Fmax.

In a case where the determination result in step S206 indicates that the frequency command Frq is greater than Fmax (S206/Yes), the processing proceeds to step S207.

In step S207, the CPU 34 sets the frequency command Frq to Fmax.

Further, in a case where the comparison result in step S204 indicates that the upward thrust vibration amplitude command TScom is greater (>) than the upward thrust vibration amplitude TS, the processing proceeds to step S208.

In step S208, the CPU 34 subtracts the predetermined frequency dFrq from the frequency command Frq.

Next, in step S209, the CPU 34 determines whether the frequency command Frq is less than Fmin.

In a case where the determination result in step S209 indicates that the frequency command Frq is less than Fmin (S209/Yes), the processing proceeds to step S210.

In step S210, the CPU 34 sets the frequency command Frq to Fmin.

In a case where the operation in step S207 is completed, the operation in step S210 is completed, or the comparison result in step S204 indicates that the upward thrust vibration amplitude command TScom and the upward thrust vibration amplitude TS are equal (=), the processing proceeds to step S211. It should be noted that by repeating the operations in step S204 to step S210, the frequency command Frq is controlled so that the upward thrust vibration amplitude TS becomes closer to the upward thrust vibration amplitude command TScom.

Next, in step S211, the CPU 34 determines whether a stop command has been input. In a case where the determination result indicates that a stop command has not been input (S211/No), the processing returns to step S202, and step S202 and subsequent steps are performed.

On the other hand, in a case where the determination result in step S211 indicates that a stop command has been input (S211/Yes), the process in the flowchart illustrated in Fig. 16A ends.

While the sensitivity correction factor $\gamma$ and the offset correction factor $\varepsilon$ are calculated by substituting the values of the upward thrust vibration amplitude TS and the phase difference command Ph into the functions T1 and T2 in the description of Fig. 15, the functions T3 and T4 using the frequency command Frq instead of the upward thrust vibration amplitude TS may be used.

Further, while the upward thrust vibration amplitude is controlled using the frequency command Frq to the alternating current signal generation unit 15 in the above-described example, the amplitude of the alternating current signal VA and the alternating current signal VB output by the alternating current signal generation unit 15 may be controlled. Fig. 16B is a flowchart diagram illustrating operations for controlling the upward thrust vibration amplitude in a case where the alternating current signal generation unit 15 controls the amplitude of the alternating current signal VA and the alternating current signal VB using a voltage amplitude command which is not illustrated. Steps in Fig. 16B will be described.

First, in step S301, the CPU 34 sets the predetermined upward thrust vibration amplitude command TScom, sets the frequency command Frq to the initial frequency F0, and sets a voltage amplitude command VS to a minimum voltage amplitude Vmin.

Next, in step S302, the CPU 34 determines whether the measurement timing has been reached. In a case where the determination result indicates that the measurement timing has not been reached (S302/No), the processing waits at step S302.

On the other hand, in a case where the determination result in step S302 indicates that the measurement timing has been reached (S302/Yes), the processing proceeds to step S303.

In step S303, the CPU 34 acquires the upward thrust vibration amplitude TS output by the upward thrust vibration amplitude detection unit 17.

In the subsequent step, the upward thrust vibration amplitude command TScom described above and the upward thrust vibration amplitude TS detected in step S303 are compared, and the voltage amplitude command VS is controlled.

Next, step S304 to step S310 for controlling the voltage amplitude command VS will be described.

In step S304, the CPU 34 compares the upward thrust vibration amplitude command TScom set in step S301 and the upward thrust vibration amplitude TS detected in step S303.

In a case where the comparison result in step S304 indicates that the upward thrust vibration amplitude command TScom is less (<) than the upward thrust vibration amplitude TS, the processing proceeds to step S305.

In step S305, the CPU 34 subtracts a predetermined voltage dVS from the voltage amplitude command VS.

Next, in step S306, the CPU 34 determines whether the voltage amplitude command VS is less than Vmin.

In a case where the determination result in step S306 indicates that the voltage amplitude command VS is less than Vmin (S306/Yes), the processing proceeds to step S307.

In step S307, the CPU 34 sets the voltage amplitude command VS to Vmin.

Further, in a case where the comparison result in step S304 indicates that the upward thrust vibration amplitude command TScom is greater (>) than the upward thrust vibration amplitude TS, the processing proceeds to step S308.

In step S308, the CPU 34 adds the predetermined voltage dVS to the voltage amplitude command VS.

Next, in step S309, the CPU 34 determines whether the voltage amplitude command VS is greater than Vmax.

In a case where the determination result in step S309 indicates that the voltage amplitude command Vs is greater than Vmax (S309/Yes), the processing proceeds to step S310.

In step S310, the CPU 34 sets the voltage amplitude command VS to Vmax.

In a case where the operation in step S307 is completed, the operation in step S310 is completed, or the comparison result in step S304 indicates that the upward thrust vibration amplitude command TScom and the upward thrust vibration amplitude TS are equal (=), the processing proceeds to step S311. It should be noted that by repeating the operations in step S304 to step S310, the voltage amplitude command VS is controlled so that the upward thrust vibration amplitude TS becomes closer to the upward thrust vibration amplitude command TScom.

Next, in step S311, the CPU 34 determines whether a stop command has been input. In a case where the determination result indicates that a stop command has not been input (S311/No), the processing returns to step S302, and step S302 and subsequent steps are performed.

On the other hand, in a case where the determination result in step S311 indicates that a stop command has been input (S311/Yes), the process in the flowchart illustrated in Fig. 16B ends.

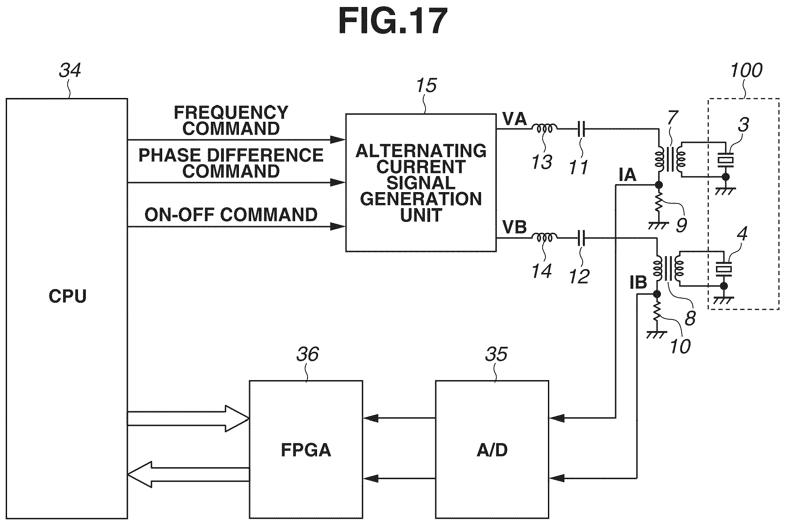

Fig. 17 is a diagram illustrating a sixth configuration example of the drive apparatus of the vibration-type actuator 100 according to the first embodiment of the present invention. In Fig. 17, the functions of the second vibration component detection unit 16 and the upward thrust vibration amplitude detection unit 17 are realized by an analog-to-digital (A/D) converter 35 and a field-programmable gate array (FPGA) 36. Each component corresponding to a component in Fig. 2 is assigned the same reference numeral, and detailed descriptions thereof are omitted. The A/D converter 35 converts waveform information about the current signal IA and the current signal IB into digital data, and the FPGA 36 captures the digital data and detects the second vibration component and the upward thrust vibration amplitude in the FPGA 36. In the FPGA 36, various methods for detecting the second vibration component described above can be selected depending on the situation, and the second vibration component S is detected by combined computation of detection results obtained by a plurality of detection methods.

The CPU 34 reads the second vibration component S and the upward thrust vibration amplitude from the FPGA 36 and performs processing based on the flowchart diagrams in Fig. 15 and Fig. 16A.

Next, another example of the vibration-type actuator will be described.

While a vibration-type actuator using the vibrating body 5 illustrated in Fig. 1, which includes two different natural vibration modes and has a plate-like shape, is described above as an example to describe a thrust estimation technology, there is another type of vibration-type actuator capable of performing thrust estimation using a similar method.

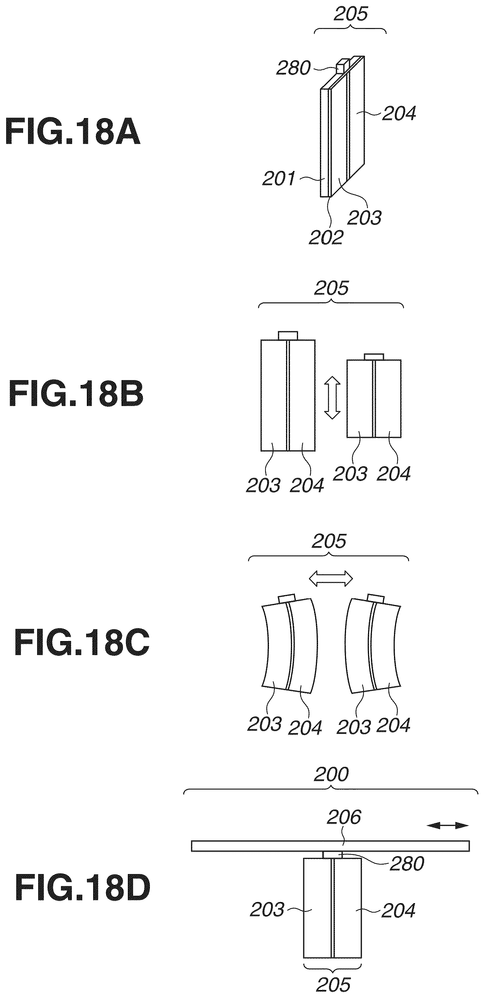

Fig. 18A to Fig. 18D are diagrams illustrating examples of a schematic configuration and vibration mode shape of a vibration-type actuator 200. A schematic configuration and operating principle of the vibration-type actuator 200 according to the first embodiment will be described with reference to Fig. 18A to Fig. 18D.

As illustrated in Fig. 18D, the vibration-type actuator 200 according to the first embodiment includes a vibrating body 205 and a contact body 206. The vibrating body 205 is a vibrating body made of conductive material and having a plate-like shape, and as illustrated in Fig. 18A and Fig. 18D, the vibrating body 205 is composed of the piezoelectric element 202 and an elastic body 201 including a protrusion 280 provided on a surface of the plate-like shape and configured to be brought into contact with the contact body 206. The piezoelectric element 202 is a component that constitutes a portion of the vibrating body 205 and is configured to excite the vibrating body 205.

Further, as illustrated in Fig. 18A, two electrodes 203 and 204 are formed on a front surface of the piezoelectric element 202. The two electrodes 203 and 204 are electrically insulated from each other, and two alternating current voltages with independently variable phases are applied to the two electrodes 203 and 204. Further, an entire back surface of the piezoelectric element 202 is an electrode and is configured to be connected to ground potential through a via, which is not illustrated, formed in a portion of the piezoelectric element 202, from the front surface of the piezoelectric element 202. In the following description, the electrodes 203 and 204 will be referred to as piezoelectric bodies 203 and 204, respectively.

The contact body 206 illustrated in Fig. 18D is a slider configured to be pressed into contact with the protrusion 280 of the vibrating body 205 with a constant pressing force by a pressing mechanism, which is not illustrated. This contact body 206 (slider) is configured to be moved relatively in a left-right direction of the paper by vibrations excited in the vibrating body 205.

Fig. 18B and Fig. 18C are diagrams illustrating examples of vibration modes of the vibrating body 205. Fig. 18B illustrates vibration mode shapes (longitudinal vibration) of a vibration mode (the upward thrust vibration mode) excited in the vibrating body 205 when alternating current voltages of the same amplitude and phase are applied to the piezoelectric body 203 and the piezoelectric body 204. Further, Fig. 18C illustrates vibration mode shapes (flexural vibration) of a vibration mode (the forward vibration mode) excited in the vibrating body 205 when alternating current voltages of the same amplitude and opposite phase are applied to the piezoelectric body 203 and the piezoelectric body 204. Specifically, in a case where the phase difference between the alternating current voltages applied to the piezoelectric body 203 and the piezoelectric body 204 of the vibrating body 205 is set to 0°, the vibration mode (the upward thrust vibration mode) illustrated in Fig. 18B is excited. Further, in a case where the phase difference between the alternating current voltages applied to the piezoelectric body 203 and the piezoelectric body 204 of the vibrating body 205 is set to 180°, the vibration mode (the forward vibration mode) illustrated in Fig. 18C is excited. Furthermore, in a case where the phase difference between the alternating current voltages applied to the piezoelectric body 203 and the piezoelectric body 204 of the vibrating body 205 is set to a phase that is nether 0° nor 180° (in practice, a range of approximately 0° to ±120° is used), the vibration modes in Fig. 18B and Fig. 18C are both excited simultaneously. In this case, the contact body 206 (slider) pressed into contact with the protrusion 280 provided to the vibrating body 205 moves in the direction in the transverse direction of the rectangular shape of the vibrating body 205.

Subsequently, as the phase difference departs from 0°, the amplitude of the vibration mode (the forward vibration mode) illustrated in Fig. 18C increases, and the relative velocity between the contact body 206 (slider) and the vibrating body 205 increases.

If the piezoelectric bodies 203 and 204 are replaced with the piezoelectric bodies 3 and 4, the drive apparatus of the vibration-type actuator 100 according to the first embodiment becomes applicable.

While the amplitude of the sum signal of the current signal IA and the current signal IB is used as the upward thrust vibration amplitude in the above-described example, the amplitude of the difference signal between the current signal IA and the current signal IB may be used as the upward thrust vibration amplitude, depending on the structure of the vibration-type actuator.

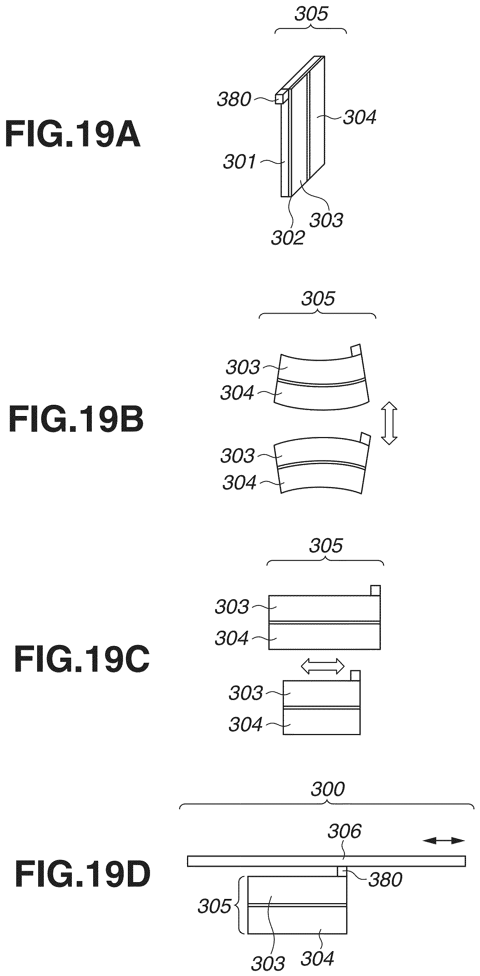

Fig. 19A to Fig. 19D are diagrams illustrating a schematic configuration of a vibration-type actuator 300. While the vibration-type actuator 300 uses the same vibration mode as that of the vibration-type actuator 200, the position of a protrusion configured to be brought into contact with a contact body differs, and the amplitude of (the current signal IA - the current signal IB) corresponds to the upward thrust vibration amplitude.

Fig. 19B and Fig. 19C are diagrams illustrating an example of a vibration mode of a vibrating body 305. Fig. 19B illustrates vibration mode shapes (flexural vibration) of a vibration mode (the upward thrust vibration mode) excited in the vibrating body 305 when alternating current voltages of the same amplitude and opposite phase are applied to the piezoelectric body 303 and the piezoelectric body 304. Further, Fig. 19C illustrates vibration mode shapes (longitudinal vibration) of a vibration mode (the forward vibration mode) excited in the vibrating body 305 when alternating current voltages of the same amplitude and phase are applied to the piezoelectric body 303 and the piezoelectric body 304.

Further, while the second vibration component is detected using (the current signal IA - the current signal IB) and the upward thrust vibration amplitude is detected using (the current signal IA + the current signal IB) in the above-described example, the opposite applies to the vibration-type actuator 300. Specifically, in the case of the vibration-type actuator 300, the second vibration component is detected using (the current signal IA + the current signal IB), and the upward thrust vibration amplitude is detected using (the current signal IA - the current signal IB).

Based on this, if the assignments for the upward thrust vibration and the forward vibration are reversed and the piezoelectric bodies 303 and 304 are replaced with the piezoelectric bodies 3 and 4, the drive apparatus of the vibration-type actuator 100 according to the first embodiment becomes applicable.

Further, while a phase difference command is input to the thrust estimation unit 18 in the above-described example, the actual phase difference between the alternating current signal VA and the alternating current signal VB or drive voltages generated based on the signals may be measured and input.

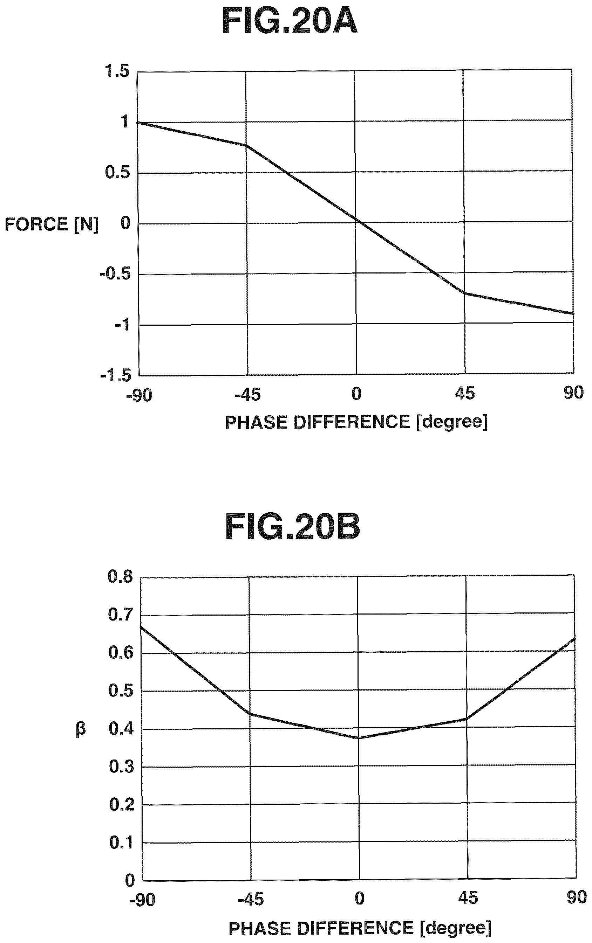

Further, the velocity can be estimated from the thrust F estimated from the second vibration component S in the above-described example. A method for the estimation will be described. The thrust at a predetermined velocity V0 with respect to the phase difference between the alternating current signal VA and the alternating current signal VB and the slope of the change in velocity with respect to the change in thrust are obtained in advance. Fig. 20A is a diagram illustrating the phase difference between the alternating current signal VA and the alternating current signal VB and the thrust (reference thrust: F0) at a velocity of the predetermined value V0, and Fig. 20B is a diagram illustrating the ratio ($\beta$) of the change in velocity to the change in thrust. A velocity VS can be obtained from formula 27, where F0 is a predetermined reference value for force.

[Formula 27]

$$V_S = V_0 + \beta_{(phase\ difference)} \cdot (F_s - F_{0(V0,\ phase\ difference)}) \qquad \text{formula 27}$$

Further, while the velocity is controlled by operating the phase difference between the alternating current signal VA and the alternating current signal VB in the above-described example, the thrust may be controlled by controlling the voltage amplitude of the alternating current signal VB while the phase difference is fixed at a predetermined phase difference.

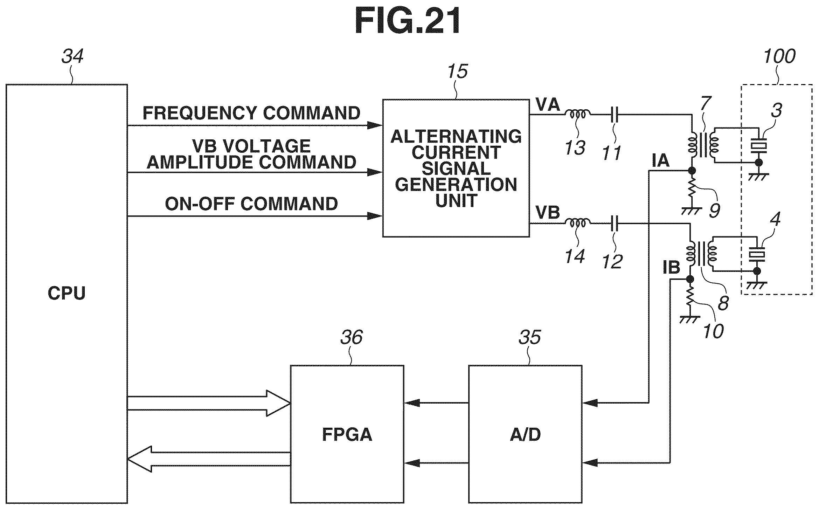

Fig. 21 is a diagram illustrating a seventh example of a configuration of the drive apparatus of the vibration-type actuator according to the first embodiment, in which the phase difference command from the CPU 34 to the alternating current signal generation unit 15 in Fig. 17 is replaced with a VB voltage amplitude command. Since control is performed including the sign of the thrust using the VB voltage amplitude, the VB voltage amplitude is processed with the sign, and the output of the alternating current signal VB is operated by multiplying the alternating current signal VB by the sign.

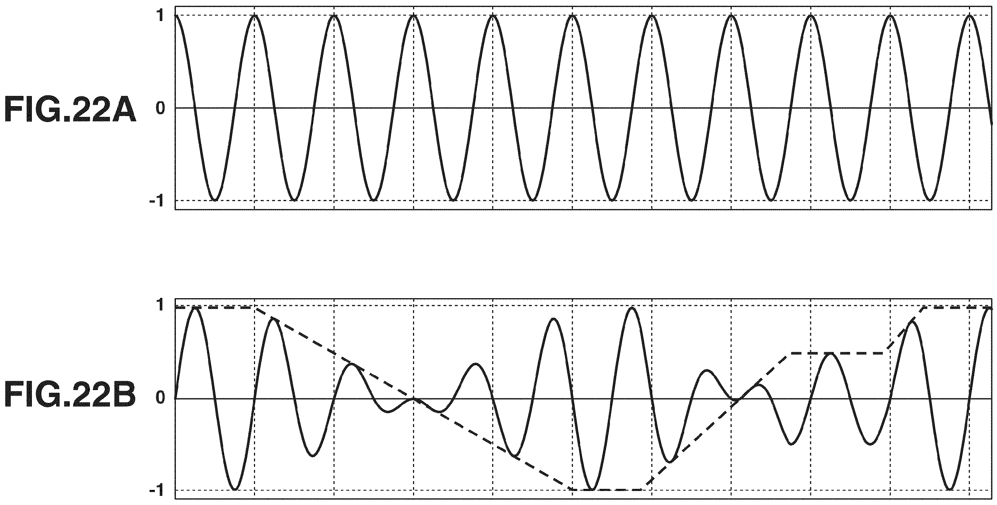

Fig. 22A and Fig. 22B illustrate examples of waveforms of the alternating current signal VA, the alternating current signal VB, and the VB voltage amplitude command. Fig. 22A illustrates a signal waveform of the alternating current signal VA, and Fig. 22B illustrates signal waveforms of the alternating current signal VB (solid line) and the VB voltage amplitude command (dashed line). The phase of the alternating current signal VB is shifted by 90° relative to the alternating current signal VA, and the sign of the phase difference between the alternating current signal VA and the alternating current signal VB is switched by the sign of the VB voltage amplitude (dashed line).

In the above-described example, since the thrust is controlled by operating the phase difference between the alternating current signal VA and the alternating current signal VB, the thrust is estimated using the offset correction factor $\varepsilon$ and the sensitivity correction factor $\gamma$ parameterized by the phase difference as expressed by formula 23 to formula 26. Similarly, in a case where the thrust is controlled using the VB voltage amplitude, the thrust needs to be estimated using the offset correction factor $\varepsilon$ and the sensitivity correction factor $\gamma$ parameterized by the VB voltage amplitude instead of the phase difference.

Further, formula 27 calculates the velocity using the reference thrust: F0 parameterized by the phase difference and the ratio ($\beta$) of the change in velocity to the change in thrust. Similarly, and the velocity can be calculated using the reference thrust F0 parameterized by the VB voltage amplitude instead of the phase difference and the ratio ($\beta$) of the change in velocity to the change in thrust.

Further, while the upward thrust vibration amplitude detected by the upward thrust vibration amplitude detection unit 17 is used to estimate the thrust because the change in amplitude of the upward thrust vibration with respect to the change in thrust applied to the contact body 6 is small in the above description, the forward vibration amplitude may be used to estimate the velocity. The forward vibration amplitude can be detected by measuring the amplitude of the difference signal between the current signal IA and the current signal IB.

[Second Embodiment]

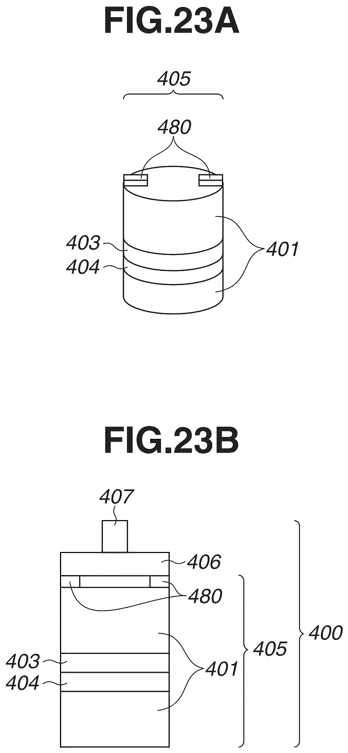

Fig. 23A and Fig. 23B are diagrams illustrating an example of a schematic configuration of a vibration-type actuator 400 according to a second embodiment of the present invention. A schematic configuration and operating principle of the vibration-type actuator 400 according to the second embodiment will be described with reference to Fig. 23A and Fig. 23B.

As illustrated in Fig. 23B, the vibration-type actuator 400 according to the second embodiment includes a vibrating body 405, a contact body 406, and a rotary shaft 407 connected to the contact body 406. As illustrated in Fig. 23A, the vibrating body 405 is a cylindrical vibrating body made of conductive material and is composed of the piezoelectric body 403, the piezoelectric body 404, and elastic bodies 401 sandwiching these piezoelectric bodies from above and below and including protrusions 480 on top of the cylinder. Further, the piezoelectric body 403 induces vibration that causes the vibrating body 405 to expand and contract in the height direction of the cylinder, and the piezoelectric body 404 is a component that induces torsional vibration in the vibrating body 405 around the central axis of the cylinder, the piezoelectric bodies 403 and 404 being sandwiched between the elastic bodies 401 and fixed by a fastening member, which is not illustrated.

The contact body 406 illustrated in Fig. 23B is a rotor pressed into contact with the protrusions 480 of the vibrating body 405 with a constant pressing force by a pressing mechanism, which is not illustrated. Vibrations excited in the vibrating body 405 cause the contact body 406 (rotor) to rotate the rotary shaft 407 and the contact body 406 (rotor).

Driving operations of the vibration-type actuator 400 will be described. The vibration-type actuator 400 is an actuator configured to rotate and drive the contact body 406 (rotor) through combined longitudinal vibration (upward thrust vibration) and torsional vibration (forward vibration) excited in the vibrating body 405. Applying an alternating current voltage of a predetermined frequency to the piezoelectric body 403 excites the longitudinal vibration (upward thrust vibration) in the vibrating body 405, and applying an alternating current voltage of a predetermined frequency to the piezoelectric body 404 excites the torsional vibration (forward vibration) in the vibrating body 405. Accordingly, exciting the longitudinal vibration (upward thrust vibration) and the torsional vibration (forward vibration) with a phase shift in time causes the contact body 406 (rotor) to rotate.

Differences between the vibration-type actuator 400 and the vibration-type actuator 100 will be described. There is a significant driving-related difference between these actuators besides the difference in shape. Specifically, while an in-phase component of the two-phase alternating current voltages applied by the vibration-type actuator 100 excites the upward thrust vibration and an out-of-phase component of the two-phase alternating current voltages excites the forward vibration, each phase of the two-phase alternating current voltages individually supports the upward thrust vibration and the forward vibration. Thus, while the vibration-type actuator 100 controls the balance between the amplitudes of the upward thrust vibration and the forward vibration using the phase difference between the applied two-phase alternating current voltages, operating the phase difference does not change the balance between the amplitudes of the upward thrust vibration and the forward vibration in the vibration-type actuator 400. Accordingly, the vibration-type actuator 400 controls the balance between the upward thrust vibration and the forward vibration by operating the balance between the amplitudes of the two-phase alternating current voltages or the voltage amplitude of one of the phases.

Next, the excitation of vibration in the vibrating body 405 of the vibration-type actuator 400 caused by an external force will be described. An example of a case of driving under the condition in which the frequencies of the two-phase alternating current voltages are higher than the natural frequency of the upward thrust vibration mode of the vibrating body 405 will be described. The trajectories of the vibration ellipses at the contact portion between the protrusions 480 and the contact body 406 (rotor) of the vibration-type actuator 400 exhibit a similar trend to Fig. 3.

As in Fig. 3, vibration trajectories of outer ends of the protrusions 480 when the vibration-type actuator 400 is driven are also elliptical, and the vibration ellipses are inclined in the opposite direction to the direction in which the force is applied to the outer ends of the protrusions 480, according to the magnitude of the force. This phenomenon occurs when the vibration generated by the excitation in the vibrating body 405 during the contact between the protrusions 480 and the contact body 406 (rotor) is superimposed on the vibrating body 405. This superimposed vibration component (the second vibration component) is detected, and thrust (torque) estimation is performed. Further, since a change occurs according to the relationship between the natural frequencies of the vibration modes of the vibrating body 405 and the frequencies of the alternating current voltages applied to the piezoelectric bodies, it is necessary to detect the second vibration component and estimate the thrust according to the drive condition.

An example of a case of driving under the condition in which the frequencies of the two-phase alternating current voltages are higher than the natural frequencies of the vibration modes of the vibrating body 5 will be described.

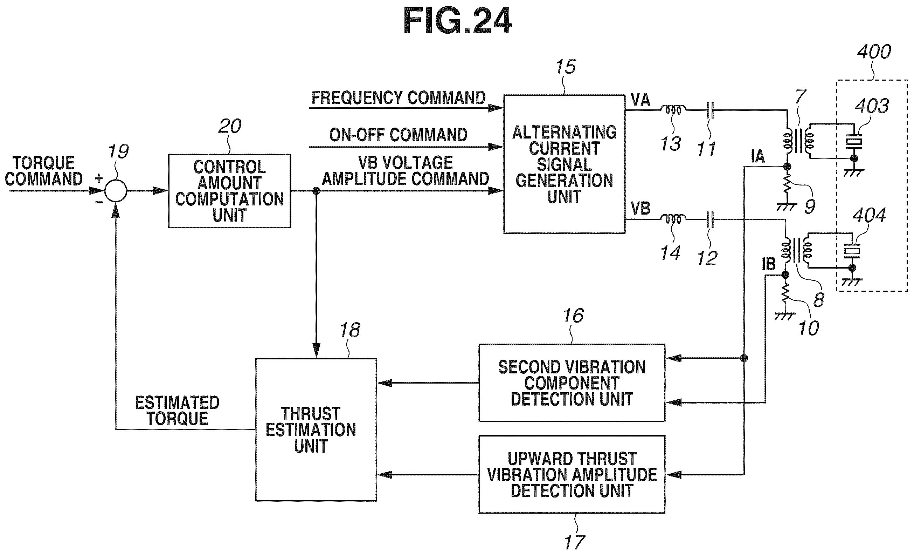

Fig. 24 is a diagram illustrating a first configuration example of a drive apparatus of the vibration-type actuator 400 according to the second embodiment of the present invention.

First, an alternating current voltage generation unit will be described. The alternating current signal generation unit 15 generates the two-phase alternating current signal VA (first signal) and the two-phase alternating current signal VB (second signal) with a 90° phase difference based on a frequency command from the command unit, which is not illustrated, and the VB voltage amplitude command output by the control amount computation unit 20. Further, the alternating current signal VA has a predetermined amplitude, and the alternating current signal VB has an amplitude based on the VB voltage amplitude command. In a case where the VB voltage amplitude command has a negative value, the sign of the alternating current signal VB is reversed, and the sign-reversed alternating current signal VB is output.

The alternating current signal VA is connected to the primary winding of the transformer 7 via the series resonant circuit composed of the inductor 13 and the capacitor 11, and the alternating current signal VB is connected to the primary winding of the transformer 8 via the series resonant circuit composed of the inductor 14 and the capacitor 12. Then, the voltages input to the primary windings of the transformer 7 and the transformer 8 are increased, and the increased voltages are applied as the first drive voltage and the second drive voltage to the piezoelectric body 403 and the piezoelectric body 404 of the vibration-type actuator 400 connected to the secondary windings. Further, the inductor values of the secondary windings of the transformer 7 and the transformer 8 and damping capacitances of the piezoelectric body 403 and the piezoelectric body 404 achieve frequency matching. Accordingly, the currents approximately proportional to the vibration velocities of the piezoelectric body 403 and the piezoelectric body 404 flow through the primary windings of the transformer 7 and the transformer 8, respectively.

Further, the resistors 9 and 10 are respectively connected in series to the primary windings of the transformer 7 and the transformer 8. The resistors 9 and 10 convert the currents flowing through the primary windings of the connected transformers into voltages and generates the current signal IA and the current signal IB. The current signal IA (the first detection signal) is a signal corresponding to the vibration of the longitudinal vibration mode (the upward thrust vibration mode) of the vibrating body 405, and the current signal IB (the second detection signal) is a signal corresponding to the vibration of the torsional vibration mode (the forward vibration mode) of the vibrating body 405.

Next, a configuration that relates to thrust (torque) estimation and control will be described. The current signal IA and the current signal IB are input to the second vibration component detection unit 16 and the upward thrust vibration amplitude detection unit 17, and the second vibration component detection unit 16 and the upward thrust vibration amplitude detection unit 17 detect the second vibration component and the upward thrust vibration amplitude. The thrust estimation unit 18 performs thrust (torque) detection using the detected second vibration component, the vibration amplitude of the longitudinal vibration mode (the upward thrust vibration mode) of the vibrating body 405, and the value of the VB voltage amplitude command.

Subsequently, the comparison unit 19 compares the detected torque and a torque command from the command unit, which is not illustrated, and the control amount computation unit 20 generates the VB voltage amplitude command signal based on the comparison result. Then, the voltage amplitude of the alternating current signal VB is set, and the torque is controlled based on the magnitude of the amplitude of the forward vibration mode excited in the vibrating body 405.

Details of a thrust (torque) estimation method and vibration detection will be described below.

A first example of second vibration component detection according to the second embodiment will be described.

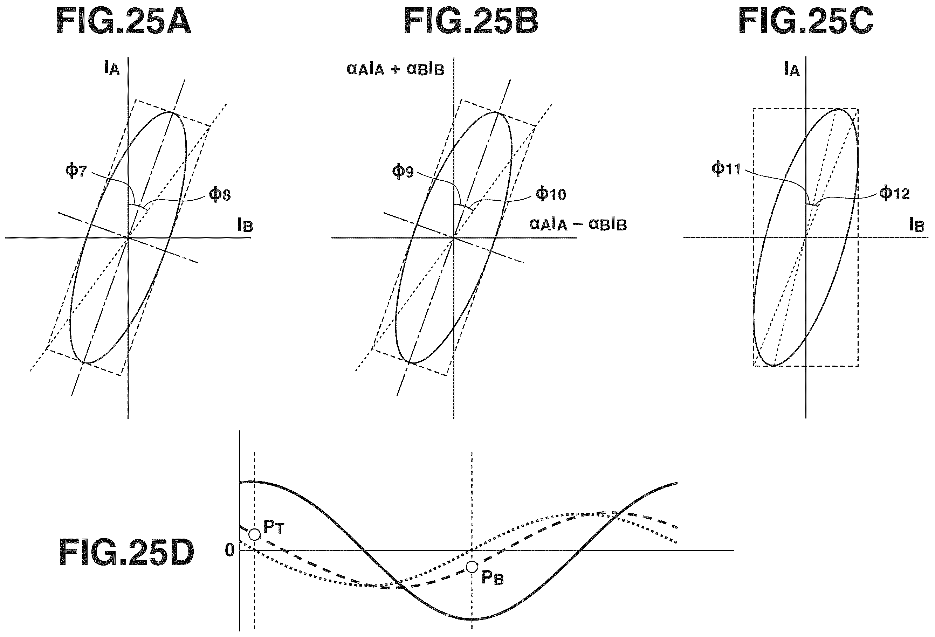

Fig. 25A and Fig. 25B are diagrams illustrating the first example of second vibration component detection according to the second embodiment, and are diagrams illustrating examples of Lissajous waveforms (vibration ellipses) used to detect the second vibration component. Fig. 25A illustrates a Lissajous waveform (vibration ellipse) plotted with the current signal IA on the vertical axis and the current signal IB on the horizontal axis. The current signal IA indicates a vibration waveform corresponding to the longitudinal vibration mode (the upward thrust vibration mode) of the vibrating body 405, the current signal IB indicates a vibration waveform corresponding to the torsional vibration mode (the forward vibration mode) of the vibrating body 405, and φ7 denotes the inclination angle of each vibration ellipse.

The current signal IA herein is defined as formula 28, and the current signal IB herein is defined as formula 29.
[Formula 28]

$$I_A = \rho sin(\omega t + \delta_1) \qquad \text{formula 28}$$

[Formula 29]

$$I_B = \sigma sin(\omega t + \delta_2) \qquad \text{formula 29}$$

The inclination angle φ7 of each vibration ellipse is defined as formula 30.
[Formula 30]

$$\varphi_7 = \frac{1}{2} tan^{-1} \left( \frac{2\rho\sigma cos\,(\delta_1 - \delta_2)}{\rho^2 - \sigma^2} \right) \qquad \text{formula 30}$$

The second vibration component detection unit 16 calculates the second vibration component (the inclination angle of the vibration ellipse) by detecting the amplitude ρ of the current signal IA, the amplitude σ of the current signal IB, and the phase difference (δ1 - δ2) between the current signal IA and the current signal IB and substituting the amplitudes ρ and σ and the phase difference (δ1 - δ2) into formula 30.

While the high correlation between a change in the inclination angle φ7 of each vibration ellipse and the thrust (torque) is described above, not only the inclination angle but also the width (minor axis) of the vibration ellipse varies with a change in the thrust (torque). Accordingly, taking this effect into consideration, a value obtained by combining, according to a predetermined ratio, the inclination angle φ7 of each vibration ellipse and an angle φ8 formed by a diagonal of a bounding rectangle of the vibration ellipse and a centerline of the vibration ellipse may be used as the second vibration component S.

Further, formula 31 obtained by extracting only the variable part of formula 30 may be used as the second vibration component S, or a result of substituting this into another function may be used as the second vibration component.
[Formula 31]

$$S = \frac{2\rho\sigma cos\,(\delta_1 - \delta_2)}{\rho^2 - \sigma^2} \qquad \text{formula 31}$$

Further, while the Lissajous waveform (vibration ellipse) is plotted with the current signal IA on the vertical axis and the current signal IB on the horizontal axis in the above-described example, (the current signal IA + the current signal IB) and (the current signal IA - the current signal IB) may be plotted on the vertical axis and the horizontal axis, respectively, and the inclination of the vibration ellipse may be calculated. Fig. 25B illustrates a Lissajous waveform (vibration ellipse) plotted with a sum signal of signals obtained by multiplying the current signal IA and the current signal IB by coefficients $\alpha A$ and $\alpha B$, respectively, on the vertical axis and a difference signal between the obtained signals on the horizontal axis.

An inclination angle $\varphi 9$ of the vibration ellipse in this case is defined as formula 32, and the angle $\varphi 9$ may be used as the second vibration component S.

[Formula 32]

$$\varphi_9 = \frac{1}{2} tan^{-1} \left( \frac{\sigma^2 - \rho^2}{2\rho\sigma cos\,(\delta_1 - \delta_2)} \right) \qquad \text{formula 32}$$

Further, as in the above-described example, an angle $\varphi 10$ may be calculated, and a value obtained by combining the inclination angle $\varphi 9$ and the angle $\varphi\,10$ according to a predetermined ratio may be used as the second vibration component S. Further, formula 33 obtained by extracting only the variable part of the formula may be used as the second vibration component S, or a result of substituting this into another function may be used as the second vibration component S.

[Formula 33]

$$S = \frac{\sigma^2 - \rho^2}{2\rho\sigma cos\,(\delta_1 - \delta_2)} \qquad \text{formula 33}$$

Next, Next, a second example of second vibration component detection according to the second embodiment will be described.

While formula 30 is used to calculate the inclination angle of the vibration ellipse in the first example of second vibration component detection according to the second embodiment, another parameter of the vibration ellipse that varies with the inclination angle of the vibration ellipse may be used to calculate the inclination angle. Fig. 25C and Fig. 25D are diagrams illustrating the second example of second vibration component detection according to the second embodiment, and Fig. 25C is a diagram illustrating an example of detecting the second vibration component using an angle $\varphi 11$, which varies with the inclination angle of the vibration ellipse. While the inclination of the axis of the vibration ellipse is used in the first example of second vibration component detection according to the second embodiment, determining this requires a complicated calculation, as expressed by formula 30. The angle $\varphi 11$ detected in the present example can be detected directly from the current signal IA and the current signal IB. The angle $\varphi 11$ is an angle formed by a line connecting the positive and negative peaks of the current signal IA and the vertical axis, and Fig. 25D is a diagram illustrating a method for detecting the angle $\varphi 11$. In Fig. 25D, a solid line represents the current signal IA, a dotted line represents a derivative waveform of the waveform represented by the solid line, and a dashed line represents a waveform of the current signal IB. The signal represented by the dashed line is sampled to detect PT and PB values at the time points of peaks of the current signal IB, and the angle $\varphi 11$ is calculated using formula 34. Further, PT and PB may be detected at the time points where the derivative waveform of the current signal IA crosses zero.

[Formula 34]

$$\varphi_{11} = tan^{-1} \left( \frac{Amplitude\ of\ I_B \times 2}{P_T - P_B} \right) \qquad \text{formula 34}$$

The second vibration component detection unit 16 calculates the second vibration component (angle $\varphi 11$) as described above.

Further, formula 35 or formula 36 may be used as the second vibration component S.

[Formula 35]

$$S = \frac{P_T - P_B}{Amplitude\ of\ I_B} \qquad \text{formula 35}$$

[Formula 36]

$$S = P_T - P_B \qquad \text{formula 36}$$

Further, as in the first example of second vibration component detection according to the second embodiment, not only the inclination angle but also the width (minor axis) of the vibration ellipse varies with a change in the thrust (torque). Accordingly, a value obtained by combining, according to a predetermined ratio, the angle φ11 and an angle φ 12 formed by a diagonal of a bounding rectangle of the vibration ellipse illustrated in Fig. 25C and a line indicating the angle φ11 may be used as the second vibration component S.

Next, Next, a third example of second vibration component detection according to the second embodiment will be described.

While the second vibration component is extracted from the shape of the vibration ellipse in the first and second examples of second vibration component detection according to the second embodiment, the second vibration component can be calculated directly from the current amplitude. In present example, the current signal IA and the current signal IB are input to the second vibration component detection unit 16, and the second vibration component detection unit 16 obtains the amplitudes of (the current signal IA + the current signal IB) and (the current signal IA - the current signal IB). Subsequently, (the amplitude of (the current signal IA + the current signal IB) - the amplitude of (the current signal IA - the current signal IB)) is calculated, and the calculation result is used as the second vibration component S. While addition and subtraction are directly performed on the current signal IA and the current signal IB in the above-described calculation, addition and subtraction may be performed after multiplying by the different coefficients αA and αB. This is because the longitudinal vibration, which is the upward thrust vibration, and the torsional vibration, which is the forward vibration, are excited using completely different phenomena. Specifically, the longitudinal vibration is a vibration that utilizes the longitudinal or transverse effect of the piezoelectric material, whereas the torsional vibration utilizes the thickness shear effect of the piezoelectric material. Accordingly, the current signal IA and the current signal IB are multiplied by the coefficients αA and αB, respectively, to adjust the sensitivity of the current with respect to the vibration. Further, a value obtained by dividing the calculation result by the amplitude of the current signal IA may be used as the second vibration component S.

It should be noted that in the following description excluding the drawings and formulas, a signal obtained by multiplying the current signal IA by the coefficient αA will be referred to as a current signal αIA, and a signal obtained by multiplying the current signal IB by the coefficient αB will be referred to as a current signal αIB.

Next, a fourth example of second vibration component detection according to the second embodiment will be described.

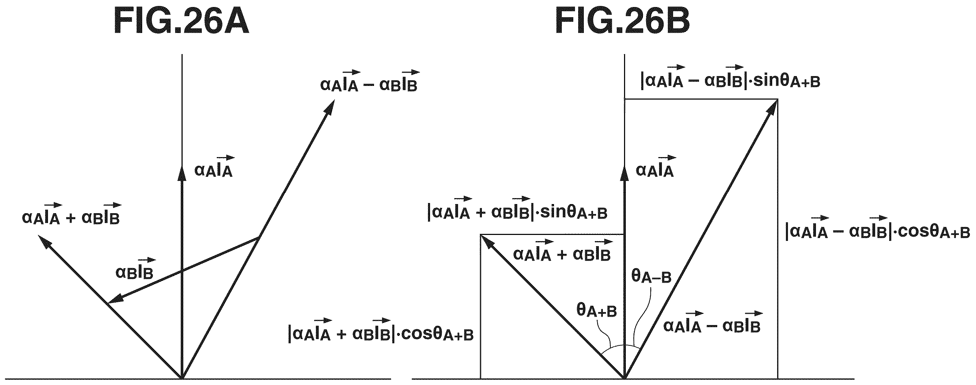

The present example is an example of detection in a case where the current signals are represented as vectors. Fig. 26 presents current signal vector diagrams, and Fig. 26A is a diagram illustrating the current signal αIA, the current signal αIB, a sum signal of the current signal αIA and the current signal αIB, and a difference between the current signal αIA and the current signal αIB as vectors. It should be noted that the second vibration component S described in the third example of the second vibration component according to the second embodiment can be expressed as formula 37 and formula 38.

[Formula 37]

$$S = |\alpha_A \overrightarrow{I_A} + \alpha_B \overrightarrow{I_B}| - |\alpha_A \overrightarrow{I_A} - \alpha_B \overrightarrow{I_B}| \qquad \text{formula 37}$$

[Formula 38]

$$S = \frac{|\alpha_A \overrightarrow{I_A} + \alpha_B \overrightarrow{I_B}| - A|\alpha_A \overrightarrow{I_A} - \alpha_B \overrightarrow{I_B}|}{|\alpha_A \overrightarrow{I_A}|} \qquad \text{formula 38}$$

Fig. 26B is a diagram illustrating the vectors of (the current signal αIA + the current signal αIB) and (the current signal αIA - the current signal αIB) decomposed into components that are in the same direction as the vector of the current signal αIA, which is the upward thrust vibration component, and components that are in a direction normal to the vector of the current signal αIA. The difference between the components of the vectors of (the current signal αIA + the current signal αIB) and (the current signal αIA - the current signal αIB) that are in the same direction as the vector of the current signal αIA is highly correlated with the inclination of the vibration ellipse, and the values expressed by formula 39 and formula 40 may be used as the second vibration component S.

[Formula 39]

$$S = |\alpha_A \overrightarrow{I_A} + \alpha_B \overrightarrow{I_B}| \cdot \cos\theta_{A+B} - |\alpha_A \overrightarrow{I_A} - \alpha_B \overrightarrow{I_B}| \cdot \cos\theta_{A-B} \qquad \text{formula 39}$$

[Formula 40]

$$S = \frac{|\alpha_A \overrightarrow{I_A} + \alpha_B \overrightarrow{I_B}| \cdot \cos\theta_{A+B} - |\alpha_A \overrightarrow{I_A} - \alpha_B \overrightarrow{I_B}| \cdot \cos\theta_{A-B}}{|\alpha_A \overrightarrow{I_A}|} \qquad \text{formula 40}$$

Further, the components that are in the direction normal to the vector of the current signal αIA may also be detected, and the second vibration component S may be obtained by adding the detected components and formula 39 or formula 40 according to a predetermined ratio (x : y). This is represented by formula 41 and formula 42.
[Formula 41]

$$S \;=\; x(|\alpha_A \overrightarrow{I_A} + \alpha_B \overrightarrow{I_B}| \cdot \cos\theta_{A+B} - |\alpha_A \overrightarrow{I_A} - \alpha_B \overrightarrow{I_B}| \cdot \cos\theta_{A-B}) + y(|\alpha_A \overrightarrow{I_A} + \alpha_B \overrightarrow{I_B}| \cdot \sin\theta_{A+B} - |\alpha_A \overrightarrow{I_A} - \alpha_B \overrightarrow{I_B}| \cdot \sin\theta_{A-B}) \quad \text{formula 41}$$

[Formula 42]

$$S \;=\; \frac{x(|\alpha_A \overrightarrow{I_A} + \alpha_B \overrightarrow{I_B}| \cdot \cos\theta_{A+B} - |\alpha_A \overrightarrow{I_A} - \alpha_B \overrightarrow{I_B}| \cdot \cos\theta_{A-B}) + y(|\alpha_A \overrightarrow{I_A} + \alpha_B \overrightarrow{I_B}| \cdot \sin\theta_{A+B} - |\alpha_A \overrightarrow{I_A} - \alpha_B \overrightarrow{I_B}| \cdot \sin\theta_{A-B})}{|\alpha_A \overrightarrow{I_A}|}$$

formula 42

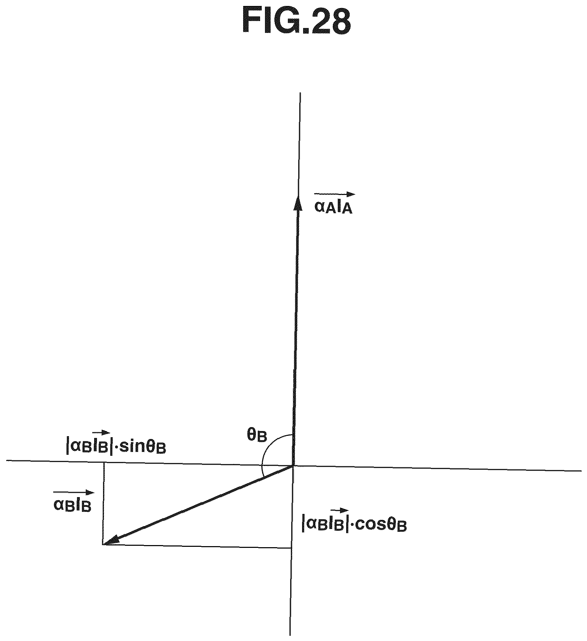

A method for obtaining the second vibration component S using formula 39 to formula 41 will be described. Formula 39 to formula 42 are computations involving trigonometric functions, and phase difference detection is also necessary. This results in a complex structure of the second vibration component detection unit 16. Accordingly, an example of using synchronous detection instead of the calculations and phase difference detection will be described.
A method for detecting the second vibration component S using synchronous detection will be described.
Specifically, one of the sum signal of the first detection signal and the second detection signal and the difference signal between the first detection signal and the second detection signal is defined as a reference signal, the other one of the sum signal and the difference signal is defined as a measurement target signal, and the phase of the reference signal is defined as a reference phase. A signal corresponding to the second vibration component is detected by performing interval integration on the measurement target signal over a phase interval set relative to the reference phase.

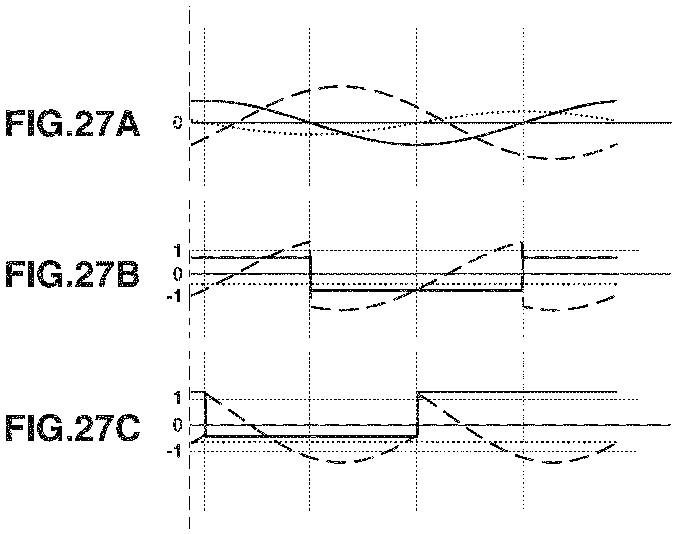

Fig. 27 presents diagrams illustrating a method for obtaining the magnitude of the component of each direction using synchronous detection. Fig. 27A illustrates a waveform (solid line) of the current signal αIA used as a reference, a signal waveform (dashed line) to be decomposed into components, and a derivative waveform (dotted line) of the current signal αIA. Further, Fig. 27B illustrates how a component in the same direction as the vector of the current signal αIA is detected, and Fig. 27C illustrates how a component in the direction normal to the vector of the current signal αIA is detected.
A solid line in Fig. 27B represents a comparison reference signal that is 1 when the sign of the solid line in Fig. 27A is positive and -1 when the sign is negative, and a dashed line in Fig. 27B represents the result of multiplying the signal represented by the dashed line in Fig. 27A and the comparison reference signal. Further, a dotted line in Fig. 27B represents the average value of the multiplication result, indicating the magnitude of the vibration component in the same direction as the vector of the current signal αIA.
A solid line in Fig. 27C represents a comparison reference signal that is 1 when the sign of the dotted line in Fig. 27A is positive and is -1 when the sign is negative, and a dashed line in Fig. 27C represents the result of multiplying the signal represented by the dashed line in Fig. 27A and the comparison reference signal. Further, a dotted line in Fig. 27C represents the average value of the multiplication result, indicating the magnitude of the vibration component in the direction normal to the vector of the current signal αIA.
Next, a fifth example of second vibration component detection according to the second embodiment will be described.
In the fifth example of the second vibration component according to the second embodiment, the second vibration component is detected using the vector of the current signal αIB. Fig. 28 is a diagram illustrating a relationship between the vector of the current signal αIA and the vector of the current signal αIB. As in the fourth example of the second vibration component according to the second embodiment, the second vibration component is largely included in the component that is in the same direction as the vector of the current signal αIA, and values represented by formula 43 and formula 44 have very similar characteristics to those of Fig. 6A and Fig. 6B described in the first embodiment.

[Formula 43]

$$S = |\alpha_B \overrightarrow{I_B}| \cdot \cos\theta_B \qquad \text{formula 43}$$

[Formula 44]

$$S = \frac{|\alpha_B \overrightarrow{I_B}| \cdot \cos\theta_B}{|\alpha_A \overrightarrow{I_A}|} \qquad \text{formula 44}$$

Further, the components that are in the direction normal to the vector of the current signal αIA may also be detected, and the second vibration component S may be obtained by adding the detected components and formula 43 or formula 44 according to a predetermined ratio (x : y). This is represented by formula 45 and formula 46.

[Formula 45]

$$S = x(|\alpha_B \overrightarrow{I_B}| \cdot \cos\theta_B) + y(|\alpha_B \overrightarrow{I_B}| \cdot \sin\theta_B) \qquad \text{formula 45}$$

[Formula 46]

$$S = \frac{x(|\alpha_B \overrightarrow{I_B}| \cdot \cos\theta_B) + y(|\alpha_B \overrightarrow{I_B}| \cdot \sin\theta_B)}{|\alpha_A \overrightarrow{I_A}|} \qquad \text{formula 46}$$

A method for obtaining the second vibration component S using formula 43 to formula 46 will be described. As in the fourth example of the second vibration component according to the second embodiment, the second vibration component S may be computed using formula 43 to formula 46, or may be obtained using synchronous detection.

Next, a sixth example of second vibration component detection according to the second embodiment will be described.

While the methods for detecting the second vibration component S using a Lissajous figure or vector representation are described in the above-described examples, an example of detecting the second vibration component S using synchronous detection on a time-domain waveform will be described in the present example. While the vibration component in the same direction as the upward thrust direction is obtained using synchronous detection in the above-described examples, the synchronous detection output is directly output as the second vibration component S in the present example.

Since the second vibration component is a vibration component that is excited through contact between the vibrating body 405 and the contact body 406 (rotor) and, as a response to it, is generated in the vibrating body 405 and superimposed on the first vibration component, the second vibration component is generated on the vibrating body 405 with a constant phase delay from the timing of contact as a starting point. This timing as the starting point corresponds to the timing at which the displacement reaches the peak of the vibration in the longitudinal vibration mode (the upward thrust vibration mode) of the vibrating body 405, and the generated vibration is superimposed on the first vibration component with a phase delay that differs for each vibration mode depending on the excitation frequency. The vibration caused by the frictional force acting in the direction of relative movement between the vibrating body 405 and the contact body 406 (rotor) is generated mainly in the torsional vibration mode (the forward vibration mode) of the vibrating body 405. Then, the vibration is superimposed on the vibration of the torsional vibration mode (the forward vibration mode) of the first vibration component with a phase delay θs corresponding to the response characteristics of the forward vibration mode.

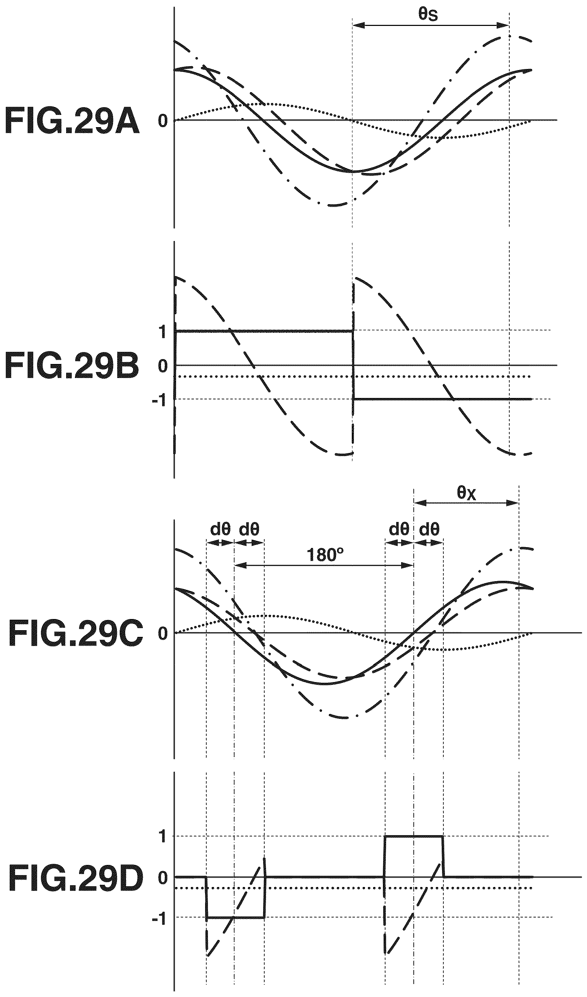

Figs. 29A and 29B are diagrams illustrating the fifth example of second vibration component detection according to the second embodiment, and are diagrams for illustrating an operation of synchronous detection. Fig. 29A illustrates a waveform (solid line) of the current signal IB at no load, a superimposed vibration waveform (dotted line) superimposed on the waveform at no load, a waveform (dashed line) of the current signal IB on which the superimposed vibration waveform (dotted line) is superimposed, and a waveform (dash-dot line) of the current signal IA. Fig. 29B is a diagram illustrating how a superimposed vibration waveform component is detected using synchronous detection.

A solid line in Fig. 29B represents a comparison reference signal that is 1 when the sign of the superimposed vibration waveform (dotted line) in Fig. 29A is positive and -1 when the sign is negative, and a dashed line in Fig. 29B represents the result of multiplying the signal represented by the dashed line in Fig. 29A and the comparison reference signal. Further, a dotted line in Fig. 29B represents the average value of the multiplication result, and this value varies according to the amplitude of the superimposed vibration waveform (dotted line) in Fig. 29A.

The superimposed vibration waveform (dotted line) in Fig. 29A herein cannot be detected directly because this waveform is a vibration component that is generated in the vibrating body 405 due to excitation induced in the vibrating body 405 by the contact body 406 (rotor) and is superimposed on the vibration at no load. However, since the phase of the superimposed vibration waveform is a phase delayed by the phase of θs from the phase of the peak of the waveform (dash-dot line) of the current signal IA in Fig. 29A, if θs is determined, the comparison reference signal (solid line) illustrated in Fig. 29B can be generated using that relationship. The second vibration component detection unit 16 selects θs based on the drive state, performs synchronous detection, and outputs the obtained average value. Further, a value obtained by dividing the value obtained by performing synchronous detection by the amplitude of the current signal IA may be used as the second vibration component S.

It should be noted that the value of θs can be measured and obtained in advance based on a condition such as the amplitude of the current signal IA, the voltage amplitude of the alternating current signal VB, or the like, and prepared as a data table or function.

Further, while the comparison reference signal is a pulse signal in the present example, other waveforms such as a sine wave may be used.

Next, a seventh example of second vibration component detection according to the second embodiment will be described.

Figs. 29C and 29D are diagrams illustrating a seventh example of second vibration component detection according to the second embodiment. Fig. 29C illustrates a waveform (solid line) of the current signal IB at no load, a superimposed vibration waveform (dotted line) superimposed on that waveform, a waveform (dashed line) of the current signal IB on which the superimposed vibration waveform (dotted line) is superimposed, and a waveform (dash-dot line) of the current signal IA. Fig. 29D illustrates how a superimposed vibration waveform component is detected by integrating the waveform (dashed line) of the current signal IB on which the superimposed vibration waveform (dotted line) is superimposed, over a predetermined phase interval.

A solid line in Fig. 29D represents a gate signal that is -1 during a phase interval of $(0° \pm d\theta)$ centered at a phase of 0° of the waveform (solid line) of the current signal IB at no load in Fig. 29C, is 1 during a phase interval of $(180° \pm d\theta)$ centered at a phase of 180°, and is 0 during other phase intervals. A dashed line in Fig. 29D represents the result of multiplying the signal represented by the dashed line in Fig. 29C and the gate signal. Further, a dotted line in Fig. 29D represents the average value of the multiplication result, and this value varies according to the amplitude of the superimposed vibration waveform (dotted line) in Fig. 29C.

It is to be noted that the waveform (solid line) of the current signal IB at no load in Fig. 29C can be detected only when there is no load. Thus, a phase difference θX between the waveform (solid line) of the current signal IB at no load and the waveform (dash-dot line) of the current signal IA in Fig. 29C is preset as a data table based on various vibration states. For example, the phase difference θX can be preset based on the states such as the amplitude of the current signal IA, the voltage amplitude of the alternating current signal VB, and the like.

The second vibration component detection unit 16 may directly output the value of the dotted line in Fig. 29D as the second vibration component S, or a result of dividing the value by the amplitude of the current signal IA may be used as the second vibration component S.

Next, an eighth example of second vibration component detection according to the second embodiment will be described.

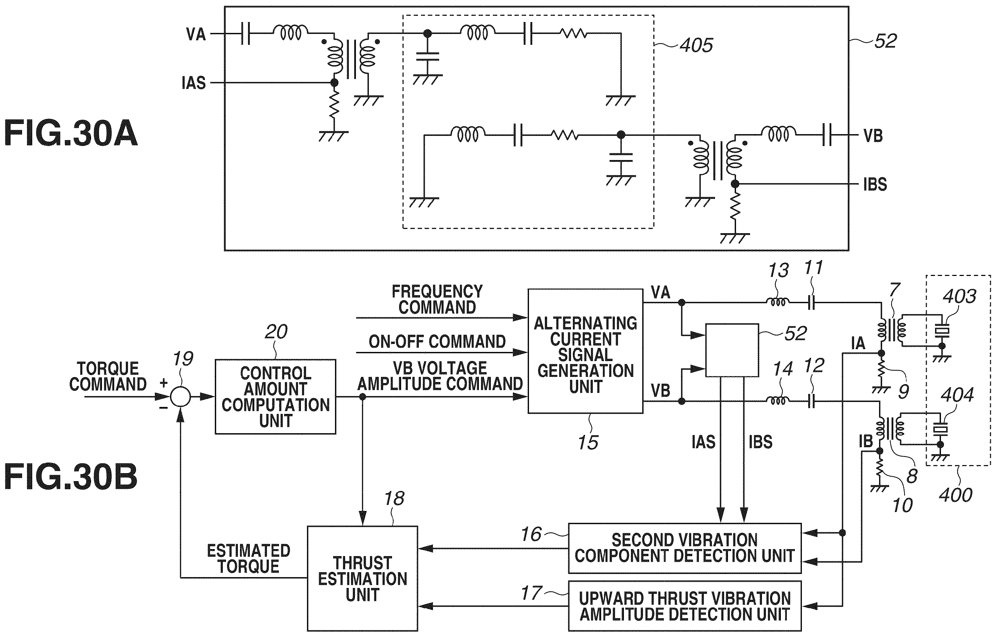

In the present example, the current signal IB signal at no load with respect to the alternating current signal VA and the alternating current signal VB is generated using an equivalent circuit model of the vibrating body 405 and a drive circuit, and the generated current signal IB is subtracted from the measured current signal IB, thereby extracting the superimposed vibration waveform. Fig. 30A illustrates an example of a circuit of the equivalent circuit model. A filter 52 is a filter configured to simulate the operation of the equivalent circuit of the vibrating body 405 and the drive circuit at no load. A circuit diagram in the block includes a series resonant circuit composed of the inductors 13 and 14 and the capacitors 11 and 12. Furthermore, the transformers 7 and 8, the equivalent circuit of the vibrating body 405 including the piezoelectric body 403 and the piezoelectric body 404, and the resistors 9 and 10 for current detection are included, and their operations are simulated through computation. When the waveforms of the alternating current signal VA and the alternating current signal VB are input to the filter 52, the current signal IAS simulating the current signal IA in real time and the current signal IBS simulating the current signal IB in real time are output.

Fig. 30B is a diagram illustrating a second configuration example of the drive apparatus of the vibration-type actuator 400 according to the second embodiment of the present invention, and illustrates an example of detecting the second vibration component using the filter 52. Each component corresponding to a component in Fig. 2 is assigned the same reference numeral, and detailed descriptions thereof are omitted. The alternating current signal VA and the alternating current signal VB output by the alternating current signal generation unit 15 are input to the filter 52. Then, the filter 52 outputs the current signal IAS (the first comparison signal) simulating the current signal IA at no load and the current signal IBS (the second comparison signal) simulating the current signal IB at no load. Subsequently, the current signals IA and IB and the current signals IAS and IBS are input to the second vibration component detection unit 16, and the second vibration component detection unit 16 detects the amplitude SF of the superimposed vibration waveform from the difference between the current signal IB (the second detection signal) and the current signal IBS (the second comparison signal).

Subsequently, as expressed by formula 47, a phase difference θSA between the superimposed vibration waveform and the current signal IA is determined as the sign of the amplitude SF of the superimposed vibration waveform, and this is output as the second vibration component S.

[Formula 47]

$$S = \mathrm{Sign}(\theta_{SA}) \cdot SF \qquad \text{formula 47}$$

Further, there are also other methods for obtaining the second vibration component S. For example, the current signal IA and the current signal IAS are multiplied by a coefficient αA to obtain the current signal αIA and the current signal αIAS, and the current signal IB and the current signal IBS are multiplied by a coefficient αB to obtain the current signal αIB and the current signal αIBS. As a result, the difference between the amplitude of the difference signal between (the current signal αIA + the current signal αIB) and (the current signal αIAS + the current signal αIBS) and the amplitude of the difference signal between (the current signal αIA - the current signal αIB) and (the current signal αIAS - the current signal αIBS) may also be used as the second vibration component S. This can be represented as vectors as expressed by formula 48.

[Formula 48]

$$S \quad = \quad |(\alpha_A \overrightarrow{\mathrm{I_A}} + \alpha_B \overrightarrow{\mathrm{I_B}}) - (\alpha_A \overrightarrow{\mathrm{I_{AS}}} + \alpha_B \overrightarrow{\mathrm{I_{BS}}})| - |(\alpha_A \overrightarrow{\mathrm{I_A}} - \alpha_B \overrightarrow{\mathrm{I_B}}) - (\alpha_A \overrightarrow{\mathrm{I_{AS}}} - \alpha_B \overrightarrow{\mathrm{I_{BS}}})| \qquad \text{formula 48}$$

It should be noted that the output of the filter 52 does not have to be an analog signal. For example, digital waveform information or waveform information about amplitude, phase, or the like may be used.

Next, operations of the thrust estimation unit 18 will be described.

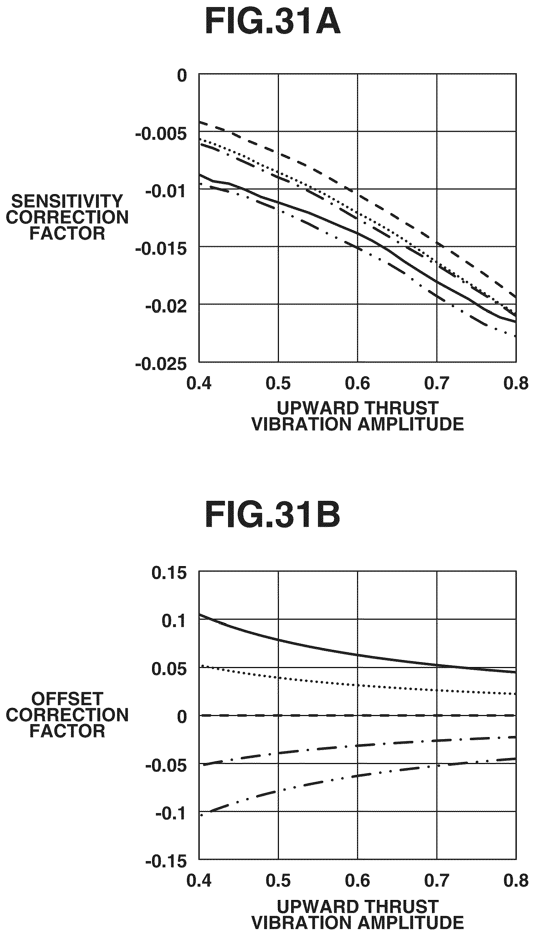

Fig. 31A and Fig. 31B are diagrams illustrating examples of correction factors for obtaining the thrust (torque) from the second vibration component S, and illustrate examples of correction factors for each upward thrust amplitude and voltage amplitude of the alternating current signal VB. Fig. 31A illustrates the sensitivity correction factor γ, and Fig. 31B illustrates the offset correction factor ε, each illustrating a relationship with the upward thrust amplitude. Each line type represents the voltage amplitude of the alternating current signal VB, and solid lines (100 V), dotted lines (50 V), dashed lines (0 V), dash-dot lines (-50 V), and dash-double-dot lines (-100 V) are illustrated as representative examples. Formula 49 is a formula for estimating a thrust (torque) TR from the value of the second vibration component S in a case where the value of the second vibration component S changes linearly.

[Formula 49]

$$\mathrm{TR} = \frac{S - \varepsilon}{\gamma} \qquad \text{formula 49}$$

In a case where the value of the second vibration component S changes linearly with respect to the thrust (torque), the thrust (torque) can be estimated using a simple formula by using the offset and sensitivity correction factors obtained in advance for each upward thrust amplitude and voltage amplitude of the alternating current signal VB. The characteristics in Fig. 31A and Fig. 31B may be stored as a data table, or as functions T5 and T6 of the upward thrust vibration amplitude and the voltage amplitude of the alternating current signal VB. Formula 50 defines the function T5 of the offset correction factor ε, and formula 51 defines the function T6 of the sensitivity correction factor γ.

[Formula 50]

$$\varepsilon = T_5(\text{VB voltage amplitude, upward thrust vibration amplitude}) \qquad \text{formula 50}$$

[Formula 51]

$$\gamma = T_6(\text{VB voltage amplitude, upward thrust vibration amplitude}) \qquad \text{formula 51}$$

Further, while Fig. 31A and Fig. 31B are diagrams illustrating the relationships between the voltage amplitude of the alternating current signal VB and the upward thrust vibration amplitude and the correction factors, the frequencies of the alternating current signal VA and the alternating current signal VB may be used instead of the upward thrust vibration amplitude. In this case, the sensitivity correction factor $\gamma$ and the offset correction factor $\varepsilon$ are obtained from the frequencies of the alternating current signal VA and the alternating current signal VB and the voltage amplitude of the alternating current signal VB during driving, using a data table or functions T7 and T8. Formula 52 defines the function T7 of the offset correction factor $\varepsilon$, and formula 53 defines the function T8 of the sensitivity correction factor $\gamma$.

[Formula 52]

$$\varepsilon = T_7(\text{VB voltage amplitude, frequency}) \qquad \text{formula 52}$$

[Formula 53]

$$\gamma = T_8(\text{VB voltage amplitude, frequency}) \qquad \text{formula 53}$$

Further, while an example in which the thrust (torque) is defined as a linear function of the second vibration component S and estimated using the offset correction factor $\varepsilon$ and the sensitivity correction factor $\gamma$ is described above, the relationship with the thrust (torque) may be defined using polynomial approximation, trigonometric function, or the like. In this case, the coefficient of each term is a function of a plurality of arguments, such as T5 to T8 described above.

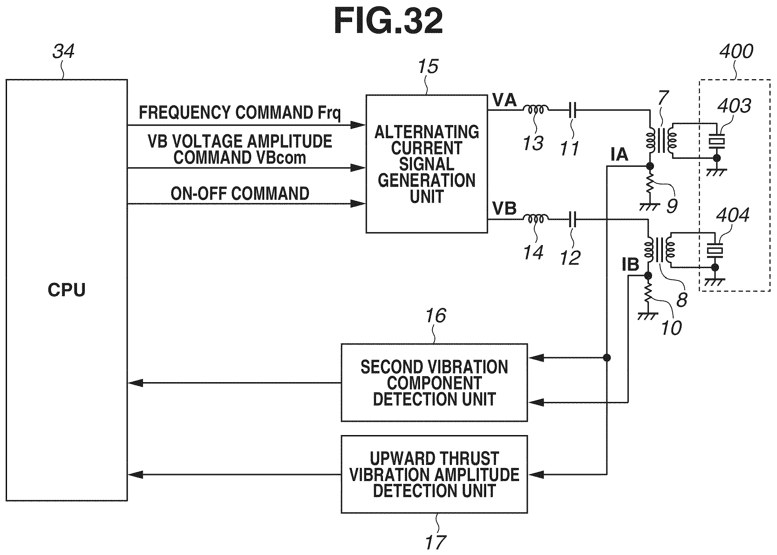

Fig. 32 is a diagram illustrating a third configuration example of the drive apparatus of the vibration-type actuator 400 according to the second embodiment of the present invention. Fig. 32 illustrates an example in which the publicly-known CPU 34 realizes the thrust (torque) estimation unit and the portion configured to perform thrust (torque) control in the drive apparatus in Fig. 24. Each component corresponding to a component in Fig. 24 is assigned the same reference numeral, and detailed descriptions thereof are omitted.

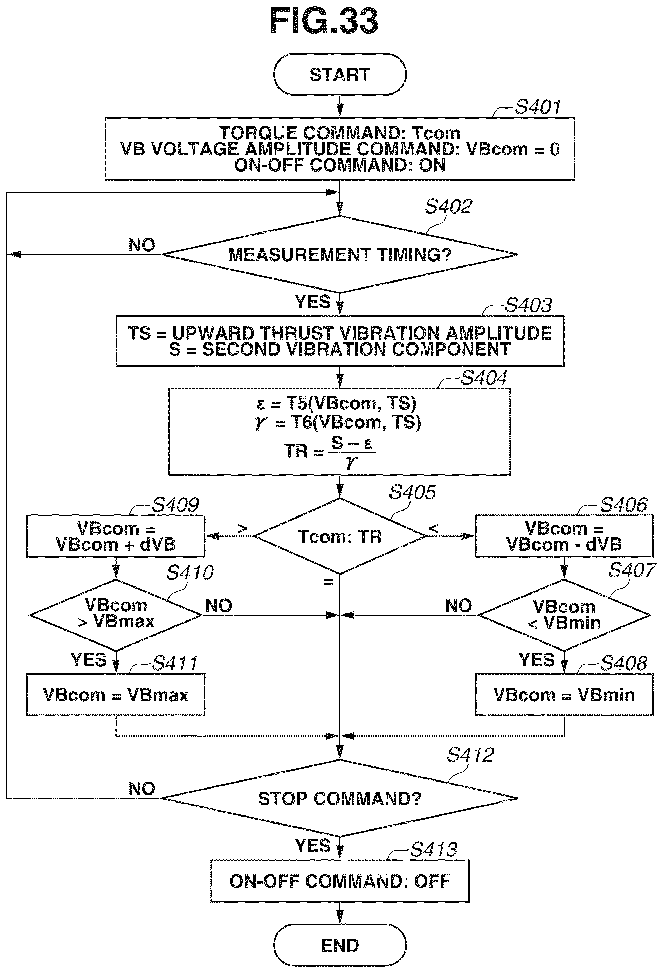

Fig. 33 is a flowchart diagram illustrating operations of the CPU 34, and illustrates control steps of controlling the torque using the VB voltage amplitude. Frequency command control steps are as described in the first embodiment, so that descriptions thereof will be omitted.

First, in step S401, the CPU 34 sets a predetermined torque command Tcom, sets the VB voltage amplitude command VBcom to an initial voltage of 0, and sets the ON-OFF command to ON.

Next, in step S402, the CPU 34 determines whether the measurement timing has been reached. In a case where the determination result indicates that the measurement timing has not been reached (S402/No), the processing waits at step S402.

On the other hand, in a case where the determination result in step S402 indicates that the measurement timing has been reached (S402/Yes), the processing proceeds to step S403.

In step S403, the CPU 34 acquires the second vibration component S output by the second vibration component detection unit 16 and the upward thrust vibration amplitude TS output by the upward thrust vibration amplitude detection unit 17.

Next, in step S404, the CPU 34 performs calculations using the value of the upward thrust vibration amplitude TS acquired in step S403 and the value of the VB voltage amplitude command VBcom. Specifically, the sensitivity correction factor $\gamma$ and the offset correction factor $\varepsilon$ are calculated using the values and the functions T5 and T6 defined by a data table, calculation formula, or the like. Subsequently, the torque TR is calculated using the second vibration component S acquired in step S403, the sensitivity correction factor $\gamma$, and the offset correction factor $\varepsilon$. In the subsequent step, the torque command Tcom described above and the torque TR set in step S404 are compared, and the VB voltage amplitude command VBcom is controlled.

Next, step S405 to step S411 for controlling the VB voltage amplitude command VBcom will be described.

In step S405, the CPU 34 compares the torque command Tcom set in step S401 and the torque TR calculated in step S404.

In a case where the comparison result in step S405 indicates that the torque command Tcom is less (<) than the torque TR, the processing proceeds to step S406.

In step S406, the CPU 34 subtracts a predetermined voltage dVB from the VB voltage amplitude command VBcom.

Next, in step S407, the CPU 34 determines whether the VB voltage amplitude command VBcom is less than VBmin.

In a case where the determination result in step S407 indicates that the VB voltage amplitude command VBcom is less than VBmin (S407/Yes), the processing proceeds to step S408.

In step S408, the CPU 34 sets the VB voltage amplitude command VBcom to VBmin.

Further, in a case where the comparison result in step S405 indicates that the torque command Tcom is greater (>) than the torque TR, the processing proceeds to step S409.

In step S409, the CPU 34 adds the predetermined voltage dVB to the VB voltage amplitude command VBcom.

Next, in step S410, the CPU 34 determines whether the VB voltage amplitude command VBcom is greater than VBmax.

In a case where the determination result in step S410 indicates that the VB voltage amplitude command VBcom is greater than VBmax (S410/Yes), the processing proceeds to step S411.

In step S411, the CPU 34 sets the VB voltage amplitude command VBcom to VBmax.

In a case where the operation in step S408 is completed, the operation in step S411 is completed, or the comparison result in step S405 indicates that the torque command Tcom and the torque TR are equal (=), the processing proceeds to step S412. It should be noted that by repeating the operations in step S405 to step S411, the VB voltage amplitude command VBcom is controlled so that the torque TR becomes closer to the torque command Tcom.

Next, in step S412, the CPU 34 determines whether a stop command has been input. In a case where the determination result indicates that a stop command has not been input (S412/No), the processing returns to step S402, and step S402 and subsequent steps are performed.

On the other hand, in a case where the determination result in step S412 indicates that a stop command has been input (S412/Yes), the processing proceeds to step S413.

In step S413, the CPU 34 sets the ON-OFF command to OFF. Consequently, the outputs of the alternating current signal VA and the alternating current signal VB output by the alternating current signal generation unit 15 become 0 V, and the contact body 406 (rotor) of the vibration-type actuator 400 stops.

Then, when the operation in step S413 is completed, the process in the flowchart illustrated in Fig. 33 ends.

It should be noted that while an example of using the value of the VB voltage amplitude command as an argument for setting the correction factors is described in the second embodiment, it is also possible to use an amplitude ratio of the alternating current signal VA and the alternating current signal VB, the measured alternating current signal VB, or an amplitude of a drive voltage generated based on that.

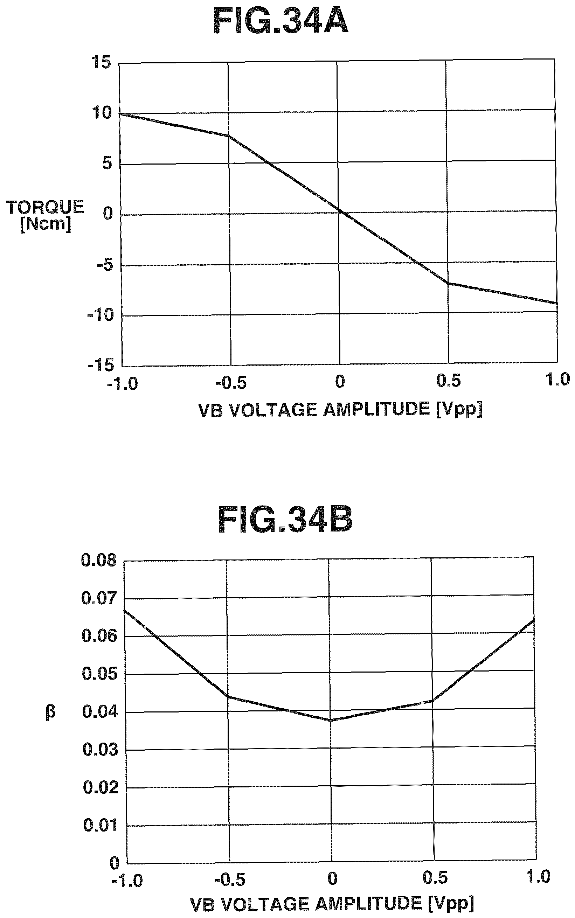

Further, the velocity can be estimated based on the torque TR estimated based on the second vibration component S as in the first embodiment. A method for the estimation will be described. The torque at the predetermined velocity V0 with respect to the voltage amplitude of the alternating current signal VB and the slope of the change in velocity with respect to the change in torque are obtained in advance. Fig. 34A is a diagram illustrating the torque (reference torque: T0) at a velocity of the predetermined value V0 with respect to the voltage amplitude of the alternating current signal VB, and Fig. 34B is a diagram illustrating a ratio ($\beta$) of the change in velocity with respect to the change in torque. Accordingly, the velocity VS can be obtained using formula 54.

[Formula 54]

$$V_S = V_0 + \beta_{(VB\ voltage)} \cdot (TR - T_{0(V0,\ VB\ voltage)}) \qquad \text{formula 54}$$

Further, while the torque is controlled by operating the voltage amplitude of the alternating current signal VB while the phase difference between the alternating current signal VA and the alternating current signal VB is fixed at 90° in the above-described example, the torque may be controlled by controlling the phase difference between the alternating current signal VA and the alternating current signal VB.

In the above-described example, since the torque is controlled by operating the voltage amplitude of the alternating current signal VB, the torque is estimated using the offset correction factor $\varepsilon$ and the sensitivity correction factor $\gamma$ using the VB voltage amplitude as a parameter as expressed by formula 50 to formula 53. Similarly, in the case of controlling the velocity using the phase difference between the alternating current signal VA and the alternating current signal VB, the torque needs to be estimated using the offset correction factor $\varepsilon$ and the sensitivity correction factor $\gamma$ using the phase difference, in place of the VB voltage amplitude, as a parameter.

Further, the velocity is obtained using the reference torque: T0 and the ratio ($\beta$) of the change in velocity with respect to the change in torque using the VB voltage amplitude as a parameter in formula 54. Similarly, and the velocity can be obtained using the reference torque T0 and the ratio ($\beta$) of the change in velocity with respect to the change in torque using the phase difference in place of the VB voltage amplitude.

In the present embodiment, the piezoelectric body 403 is configured to excite vibration that causes the vibrating body 405 to expand and contract, and the piezoelectric body 404 is configured to excite torsional vibration in the vibrating body 405. It should be noted that a similar effect is still achieved even in a case where the piezoelectric body 403 is configured to excite bending in the left-right direction of the paper and the piezoelectric body 404 is configured to excite bending in a direction perpendicular to the paper surface in Fig. 23B. In this case, flexural vibration excited by the piezoelectric body 403 leads to upward thrust vibration in the protrusions 480, and flexural vibration excited by the piezoelectric body 404 leads to forward vibration in the protrusions 480.

Further, while the velocity is estimated using the upward thrust vibration amplitude detected by the upward thrust vibration amplitude detection unit 17 because the change in amplitude of the upward thrust vibration is small compared to the change in velocity of the contact body 6 due to the force acting on the contact body 6 in the above-described case, the forward vibration amplitude may be used in velocity estimation. The forward vibration amplitude can be detected by measuring the amplitude of the current signal IB.

[Third Embodiment]

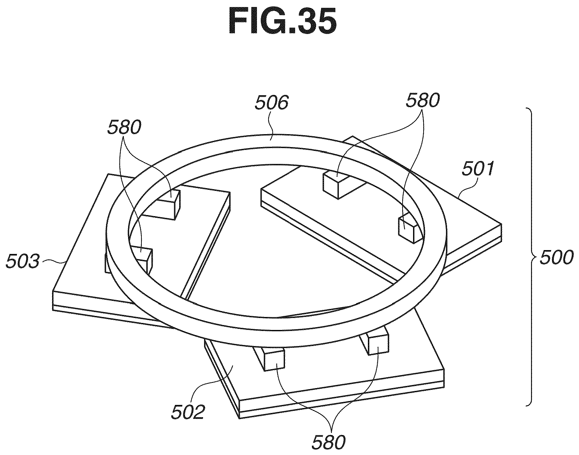

Fig. 35 is a diagram illustrating a schematic configuration of a vibration-type actuator 500 according to a third embodiment.

Vibrating bodies 501, 502, and 503 are similar to the vibrating body 5 illustrated in Fig. 1 and are in contact with contact surfaces of corresponding protrusions 580 along a circumference of a ring-shaped contact body 506. Thrust forces of the three vibrating bodies 501, 502, and 503 are combined to increase an output torque.

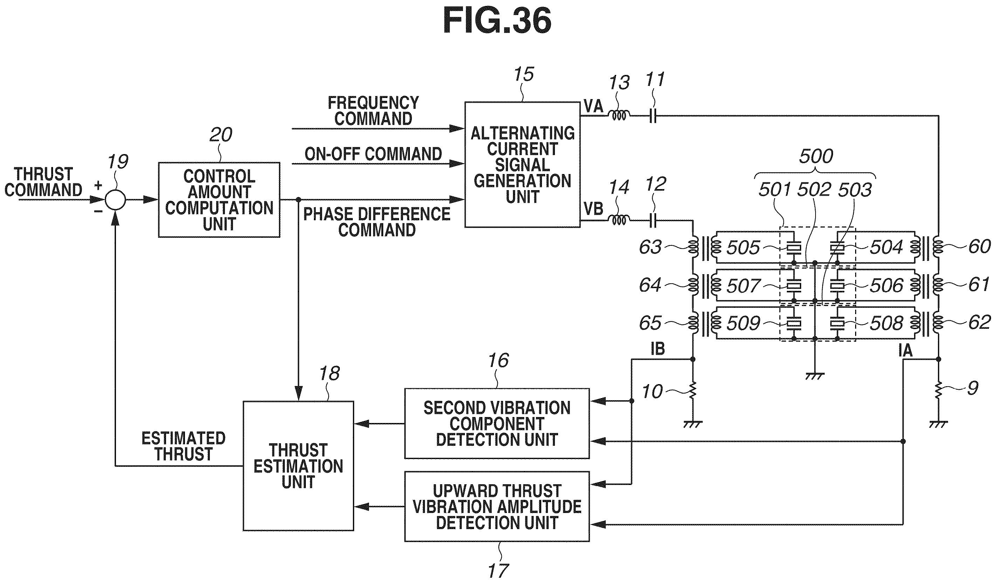

Fig. 36 is a diagram illustrating a first configuration example of a drive apparatus of the vibration-type actuator 500 according to the third embodiment of the present invention. Each component corresponding to a component in Fig. 2 is assigned the same reference numeral, and detailed descriptions thereof are omitted.

The vibrating body 501 is provided with piezoelectric bodies 504 and 505, the vibrating body 502 is provided with piezoelectric bodies 506 and 507, and the vibrating body 503 is provided with piezoelectric bodies 508 and 509, as piezoelectric bodies for excitation. Further, each piezoelectric body can be divided into a phase A-side piezoelectric body connected to the alternating current signal VA via the inductor 13, the capacitor 11, and three transformers, and a phase B-side piezoelectric body connected to the alternating current signal VB via the inductor 14, the capacitor 12, and three transformers.

The phase A-side piezoelectric body corresponds to the piezoelectric bodies 504, 506, and 508 connected to secondary windings of transformers 60, 61, and 62, respectively. Further, primary windings of the transformers 60, 61, and 62 are connected in series, with one end of the series connection connected to the capacitor 11 and the other end to the resistor 9 for current detection.

On the other hand, the phase B-side piezoelectric body corresponds to the piezoelectric bodies 505, 507, and 509 connected to secondary windings of the transformers 63, 64, and 65, respectively. Further, primary windings of the transformers 63, 64, and 65 are connected in series, with one end of the series connection connected to the capacitor 12 and the other end to the resistor 10 for current detection.

Further, the resistor 9 detects the current signal IA corresponding to the vibration velocity of the phase A-side piezoelectric body, and the resistor 10 detects the current signal IB corresponding to the vibration velocity of the phase B-side piezoelectric body.

Since the vibrating bodies 501, 502, and 503 are driven in series connection, well-synchronized vibrations are formed when an alternating current voltage is applied to the primary sides of the transformers. Further, the changes in vibrations superimposed on the vibrating bodies 501, 502, and 503 by excitation induced by frictional forces acting between the protrusions 580 of the vibrating bodies 501, 502, and 503 and the contact body 506 (rotor) are also well-synchronized. Since the vibrations of the vibrating bodies are well-synchronized, the vibrations of the vibrating bodies can be detected as a single vibration by detecting the currents in the primary windings of the transformers as in the case of the first embodiment.

In other words, the same method for detecting the second vibration component S described in the first embodiment can also be used in the present embodiment in which the plurality of vibrating bodies is connected in series.

While an example in which the plurality of vibrating bodies is connected in series to the transformers and a voltage is applied to each end is described in the third embodiment, the piezoelectric bodies of the plurality of vibrating bodies may be directly connected in series without using the transformers. Further, while the vibrations are detected using the currents in the primary windings of the transformers in the above-described example, a piezoelectric element for vibration detection may be additionally provided to the vibrating bodies. In this case, since the vibrations of the vibrating bodies that are connected in series are synchronized, the second vibration component S can be detected by simply detecting a vibration of a single vibrating body, and the velocity and the torque can be estimated and controlled as in the embodiments described above.

[Fourth Embodiment]

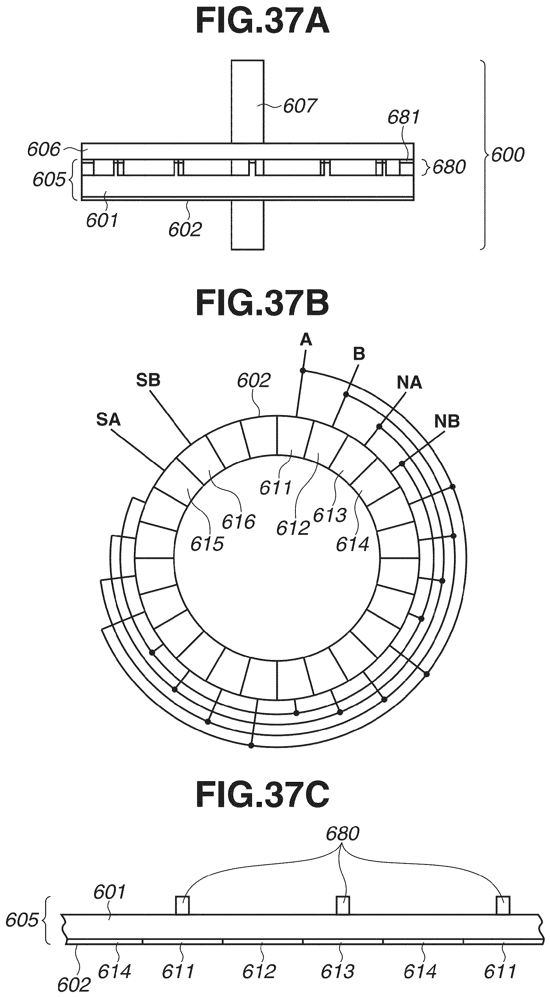

Fig. 37A is a diagram illustrating a schematic configuration of a vibration-type actuator 600 according to a fourth embodiment.

The vibration-type actuator 600 according to the fourth embodiment includes a vibrating body 605, a contact body 606, which is a ring-shaped rotor, and a rotary shaft 607 connected to the contact body 606 (rotor). The vibrating body 605 is a ring-shaped vibrating body made of conductive material and is composed of a piezoelectric element 602 and an elastic body 601 including protrusions 680 provided on an upper surface of the ring and configured to be brought into contact with the contact body 606 (rotor). Further, the protrusions 680 include resin-based friction members 681 at contact areas in contact with the contact body 606 (rotor). Further, the piezoelectric element 602 is a component that constitutes a portion of the vibrating body 605 and is configured to excite the vibrating body 605.

Fig. 37B is a diagram illustrating an example of a plurality of electrode structures of the piezoelectric element 602 illustrated in Fig. 37A and electrical connection lines.

As illustrated in Fig. 37B, the piezoelectric element 602 is provided with 24 electrodes arranged at equal intervals on the circumference, and the electrodes of the piezoelectric element 602 are electrically connected in groups of four along the circumference by the connection lines. The areas of the piezoelectric element 602 each including a group of electrodes connected together will be referred to as piezoelectric bodies 611, 612, 613, and 614, for each connection.

Further, the piezoelectric bodies 611 are placed every 60° around the circumference, and when an alternating current voltage A is applied, a six-wave out-of-plane flexural vibration is formed along the circumference of the vibrating body 605. Furthermore, when an alternating current voltage B, an alternating current voltage NA, and an alternating current voltage NB, which are sequentially phase-shifted by 90° with respect to the alternating current voltage A, are applied to the piezoelectric body 612, the piezoelectric body 613, and the piezoelectric body 614, respectively, a six-wave out-of-plane traveling vibration wave is formed on the vibrating body 605. Subsequently, this six-wave traveling vibration wave generates a relative force between the protrusions 680 of the vibrating body 605 and the contact body 606 (rotor), causing the contact body 606 (rotor) to rotate.

Further, the piezoelectric element 602 is provided with a plurality of electrodes for vibration detection, and the areas of the piezoelectric element 602 where the electrodes are provided will be referred to as a piezoelectric body 615 and a piezoelectric body 616. The piezoelectric body 615 detects vibrations excited by the piezoelectric body 611 and the piezoelectric body 613 and outputs the vibration detection signal SA, and the piezoelectric body 616 detects vibrations excited by the piezoelectric body 612 and the piezoelectric body 614 and outputs the vibration detection signal SB.

Fig. 37C is a diagram illustrating a first example of the positional relationship between the piezoelectric bodies 611 to 614 and the protrusions 680. The protrusions 680 are provided at centers of the electrode sections of the piezoelectric body 611 and the piezoelectric body 613 to which the alternating current voltage A and the alternating current voltage NA are connected. Further, when the excitation by the piezoelectric bodies 611 and 613 is defined as phase-A excitation and the excitation by the piezoelectric bodies 612 and 614 is defined as phase-B excitation, the phase-A excitation excites the upward thrust vibration that vibrates the protrusions 680 in a top-bottom direction of the paper, and the phase-B excitation excites the forward vibration that vibrates the protrusions 680 in the left-right direction of the paper.

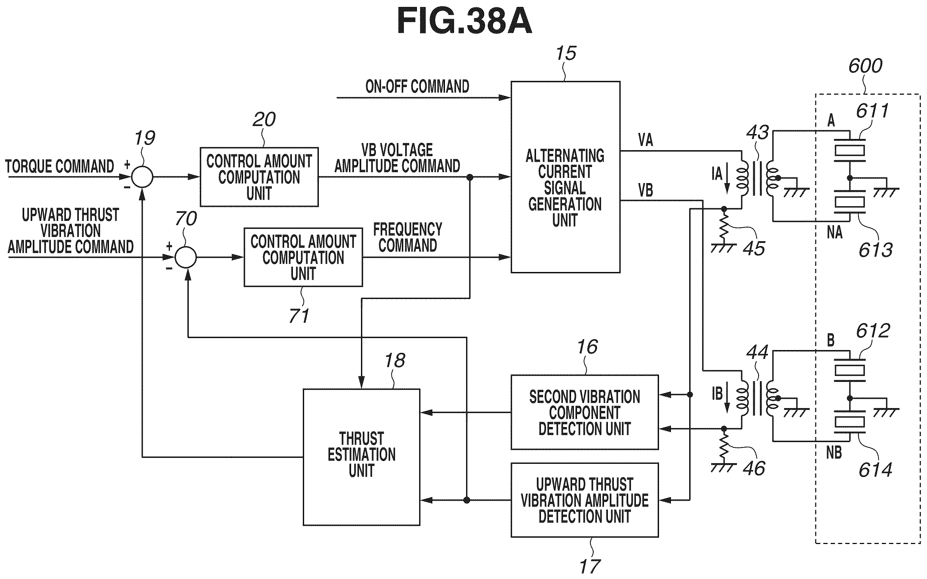

Fig. 38A is a diagram illustrating a first configuration example of a drive apparatus of the vibration-type actuator 600 according to the fourth embodiment of the present invention. Each component corresponding to a component in Fig. 24 is assigned the same reference numeral, and detailed descriptions thereof are omitted.

The vibration-type actuator 600 is an actuator driven by a four-phase alternating current voltage. The alternating current voltage A and the alternating current voltage NA are out-of-phase alternating current voltages with inverted phases, and the alternating current voltage B and the alternating current voltage NB are out-of-phase alternating current voltages with inverted phases. Piezoelectric bodies paired with the piezoelectric bodies 611 and 613 and the piezoelectric bodies 612 and 614 to which the out-of-phase alternating current voltages are applied are connected to center-tapped secondary windings of transformers 43 and 44. The alternating current signal VA and the alternating current signal VB, which are outputs of the alternating current signal generation unit, are applied to one end of each of the primary windings of the transformer 43 and the transformer 44, and resistors 45 and 46 for current detection are connected to the other ends.

The current signal IA and the current signal IB, which are signals detected by the resistor 45 and the resistor 46, are input to the second vibration component detection unit 16 and the upward thrust vibration amplitude detection unit 17. Subsequently, the second vibration component S and the upward thrust vibration amplitude are detected through the operations described above in the second embodiment, and an estimated torque of the contact body 606 (rotor) is detected by the thrust estimation unit 18. Subsequently, the detected estimated torque and a torque command from the command unit, which is not illustrated, are compared by the comparison unit 19, the VB voltage amplitude command signal is generated based on the comparison result by the control amount computation unit 20, and the voltage amplitude of the alternating current signal VB is controlled, thereby controlling the torque.

Further, in the fourth embodiment, the upward thrust vibration amplitude is also controlled in addition to torque control. The output of the upward thrust vibration amplitude detection unit 17 is compared with an upward thrust vibration amplitude command from the command unit, which is not illustrated, by a comparison unit 70. Next, the output of the comparison unit 70 is input to a control amount operation unit 71, and a frequency command signal is generated through proportional-integral calculation. Subsequently, the alternating current signal generation unit 15 sets the frequencies of the alternating current signals VA and VB based on the frequency command signal, and the upward thrust vibration amplitude is controlled.

When the upward thrust vibration amplitude is controlled to be constant, the contact state of the contact body 606 (rotor) and the vibrating body 605 is stabilized, making it possible to increase stability of torque estimation.

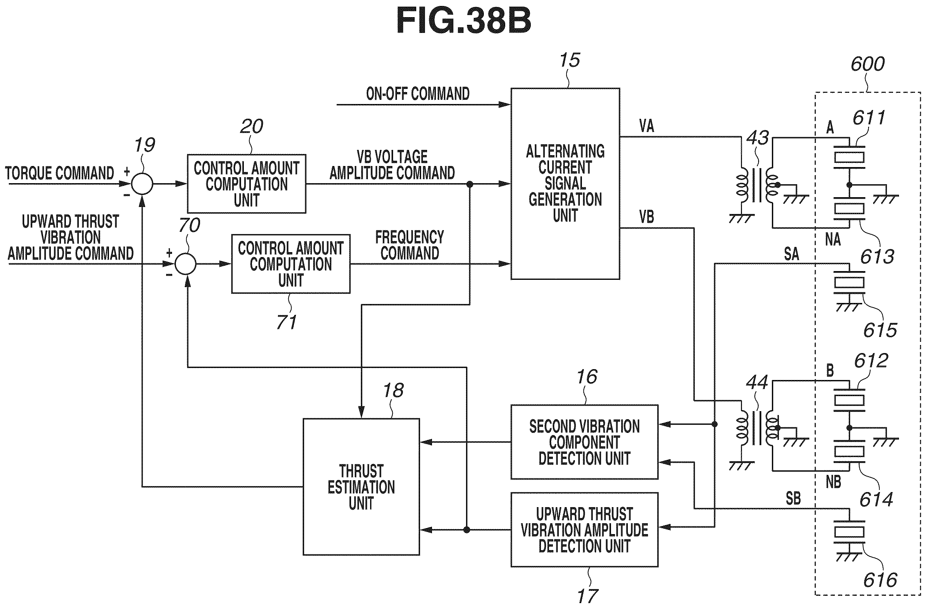

Fig. 38B is a diagram illustrating a second configuration example of the drive apparatus of the vibration-type actuator 600 according to the fourth embodiment of the present invention. Each component corresponding to a component in Fig. 38A is assigned the same reference numeral, and detailed descriptions thereof are omitted.

While an example of detecting vibrations using the current signal IA and the current signal IB is described in the first configuration example of the drive apparatus of the vibration-type actuator 600 according to the fourth embodiment, vibrations are detected using the piezoelectric body 615 and the piezoelectric body 616 in the second configuration example. Further, the piezoelectric body 615 outputs the vibration detection signal SA, and the piezoelectric body 616 outputs the vibration detection signal SB. Since vibrations are directly detected in place of current signals, increased torque estimation accuracy is achieved.

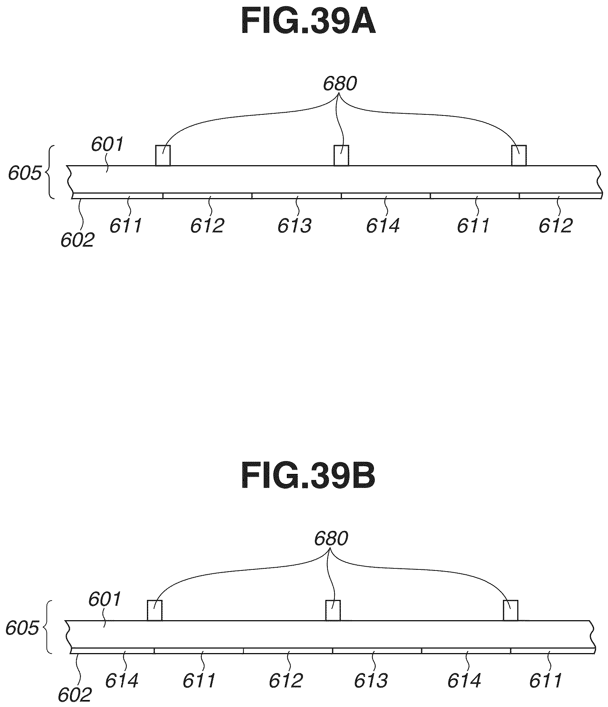

Fig. 39A is a diagram illustrating a second example of the positional relationship between the piezoelectric bodies 611 to 614 and the protrusions 680. In Fig. 39A, the protrusions 680 are provided between the electrode sections of the piezoelectric body 611 and the piezoelectric body 612 to which the alternating current voltage A and the alternating current voltage B are connected, and between the electrode sections of the piezoelectric body 613 and the piezoelectric body 614 to which the alternating current voltage NB and the alternating current voltage NA are connected. Then, when the excitation by the piezoelectric bodies 611 and 613 is defined as the phase-A excitation and the excitation by the piezoelectric bodies 612 and 614 is defined as the phase-B excitation, a sum component of the phase-A excitation and the phase-B excitation excites the upward thrust vibration, and a difference component between the phase-A excitation and the phase-B excitation excites the forward vibration.

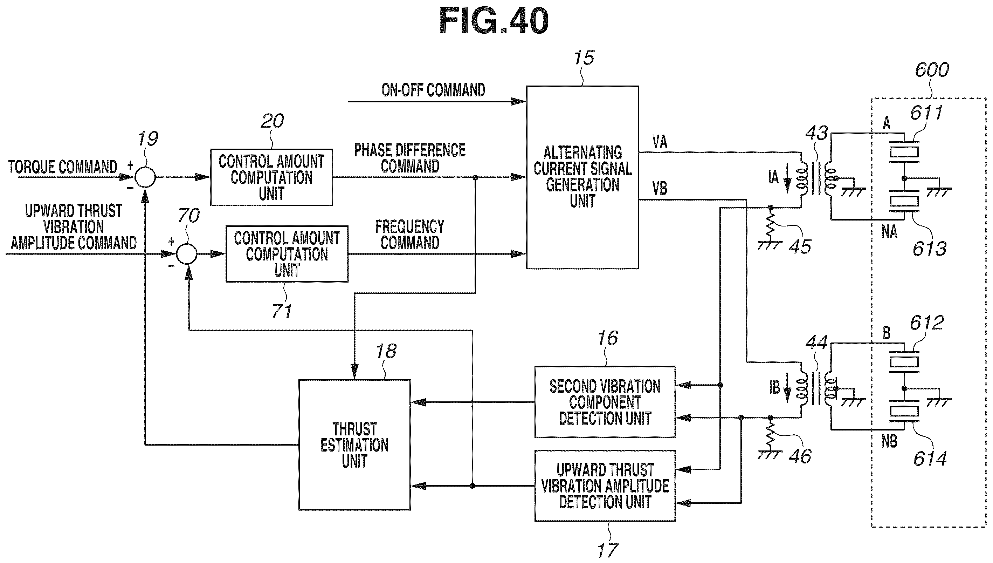

Fig. 40 is a diagram illustrating a third configuration example of the drive apparatus of the vibration-type actuator 600 according to the fourth embodiment of the present invention. Each component corresponding to a component in Fig. 2 is assigned the same reference numeral, and detailed descriptions thereof are omitted.

The connection between the vibration-type actuator 600 and the transformer 43 and the transformer 44 and the connection between the vibration-type actuator 600 and the resistor 45 and the resistor 46 correspond to those in the first configuration example of the drive apparatus of the vibration-type actuator 600 according to the fourth embodiment. On the other hand, the positions of the protrusions 680 on the vibrating body 605 differ from those in the first configuration example of the drive apparatus of the vibration-type actuator 600 according to the fourth embodiment, so that the connections of the current signal IA and the current signal IB to the second vibration component detection unit 16 and the upward thrust vibration amplitude detection unit 17 differ.

The current signal IA and the current signal IB are input to both the second vibration component detection unit 16 and the upward thrust vibration amplitude detection unit 17. (The current signal IA + the current signal IB) indicates the upward thrust vibration component, and (the current signal IA - the current signal IB) indicates the forward vibration component. The second vibration component S and the upward thrust vibration amplitude are detected through the operations described above in the first embodiment. Subsequently, the torque of the contact body 606 (rotor) is detected by the thrust estimation unit 18.

Fig. 39B is a diagram illustrating a third example of the positional relationship between the piezoelectric bodies 611 to 614 and the protrusions 680.

The protrusions 680 are provided between the electrode sections of the piezoelectric body 611 and the piezoelectric body 614 to which the alternating current voltage A and the alternating current voltage NB are connected, and between the electrode sections of the piezoelectric body 612 and the piezoelectric body 613 to which the alternating current voltage B and the alternating current voltage NA are connected. Then, when the excitation by the piezoelectric bodies 611 and 613 is defined as the phase-A excitation and the excitation by the piezoelectric bodies 612 and 614 is defined as the phase-B excitation, a difference component between the phase-A excitation and the phase-B excitation excites the upward thrust vibration, and a sum component of the phase-A excitation and the phase-B excitation excites the forward vibration.

Accordingly, a case where the protrusions 680 of the vibration-type actuator 600 are arranged as illustrated in Fig. 39B will be described below. Specifically, when this is driven by the drive apparatus illustrated in Fig. 40, (the current signal IA - the current signal IB) exhibits the upward thrust vibration component, and (the current signal IA + the current signal IB) exhibits the forward vibration component, which are opposite to those described above. Further, as a result, the signals used in the operations of the second vibration component detection unit 16 and the upward thrust vibration amplitude detection unit 17 are also opposite.

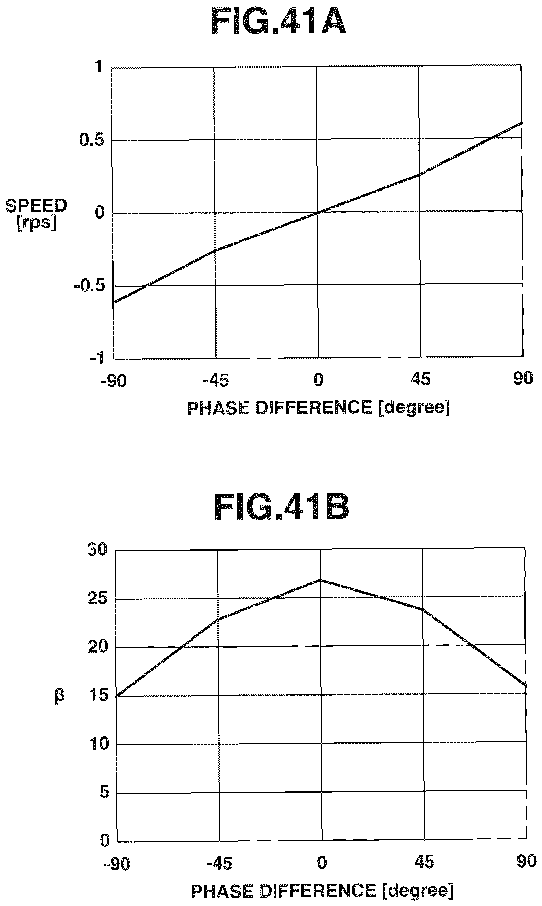

Further, as in the above-described embodiments, the velocity can be estimated based on the estimated torque in the present embodiment. The torque at the predetermined velocity V0 with respect to the phase difference between the alternating current signal VA and the alternating current signal VB and the slope of the change in velocity with respect to the change in torque are obtained in advance. Fig. 41A is a diagram illustrating the torque (reference torque: T0) at a velocity of the predetermined value V0 with respect to the phase difference between the alternating current signal VA and the alternating current signal VB, and Fig. 41B is a diagram illustrating a ratio ($\beta$) of the change in velocity with respect to the change in torque. Accordingly, the velocity VS can be obtained using formula 55.

[Formula 55]

$$V_S = V_0 + \beta_{(phase\ difference)} \cdot (TR - T_{0(V0,\ phase\ difference)}) \qquad \text{formula 55}$$

[Fifth Embodiment]

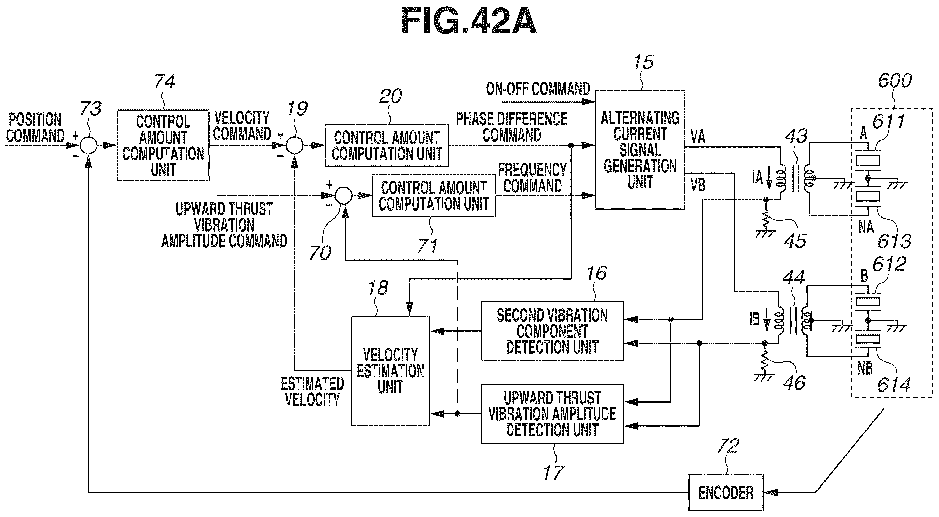

While the control apparatuses configured to estimate the velocity or torque and control the velocity or torque based on a command value of the velocity or torque are described in the above-described embodiments, an example of performing position control using an estimated velocity value or estimated velocity and torque values will be described in the present embodiment. Fig. 42A is a diagram illustrating a first configuration example of a drive apparatus of the vibration-type actuator 600 according to a fifth embodiment of the present invention. Fig. 42A illustrates an example of applying minor-loop velocity control to the position control, and velocity control is performed using a velocity value estimated by the present invention, instead of detecting a rotational speed from derivative information about a detected position.

Each component corresponding to a component in Fig. 40 is assigned the same reference numeral, and detailed descriptions thereof are omitted. A rotary encoder 72 is a rotary encoder for detecting a rotational position of the vibration-type actuator 600. A position detected by the rotary encoder 72 is compared with a position command from the command unit, which is not illustrated, by a comparison unit 73. Subsequently, the position deviation is input to a control amount operation unit 74, and a velocity command signal is generated.

Next, the velocity command signal and an estimated velocity from a velocity estimation unit 880 are compared by the comparison unit 19. The comparison result undergoes PI (proportional to integration) computation performed by the control amount computation unit 20, thereby generating a phase difference command signal. The phase difference between the alternating current signals VA and VB output by the alternating current signal generation unit 15 is controlled, and the rotational velocity and position are controlled, as described above.

Since the velocity estimated by the velocity estimation unit 880 is calculated based on the estimated torque detected based on the vibration amplitude of the vibrating body 605 as in the above-described embodiments, high-speed detection is possible even during a stop state. This makes it possible to estimate the rotational velocity within a short time from when an ON command is issued to the alternating current signal generation unit 15 by the command unit, which is not illustrated, using the ON-OFF signal. This effect will be described by describing operations performed to activate from a state where the ON-OFF signal is in an OFF state and the rotary shaft 607 of the vibration-type actuator 600 is under torque and stopped by a holding torque generated by a frictional force between the vibrating body 605 and the contact body 606.

First, a position command and a current position are in the same state, and the ON-OFF signal is switched from the OFF state to the ON state. Subsequently, since the position deviation with respect to the position command is 0, the alternating current signal generation unit 15 generates a signal with a phase difference of 0° between the alternating current signal VA and the alternating current signal VB. Next, the frequencies of the alternating current signals VA and VB approach a resonant frequency of the vibrating body 605 based on the upward thrust vibration amplitude command, and the upward thrust vibration amplitude approaches a predetermined amplitude. When the vibration amplitude of the vibrating body 605 reaches a certain level, the decreased frictional force between the vibrating body 605 and the contact body 606 becomes less than the torque applied to the rotary shaft 607, and the rotary shaft 607 starts rotating. At this point, the position is controlled based on the position deviation and the estimated velocity value and returned to the position at the time of activation.

In a case where the foregoing operations are performed in PID position control, a temporal delay occurs before a position deviation is detected, due to the effect of the stiffness between the rotary encoder 72 and the contact body 606 and the resolution of the rotary encoder 72, which leads to an increased amount of displacement from the initial position. On the other hand, in a case where an estimated velocity value is used, the velocity can be detected without being affected by the stiffness between the rotary encoder 72 and the contact body 606 or the resolution of the rotary encoder 72, which makes it possible to reduce the amount of displacement from the initial position.

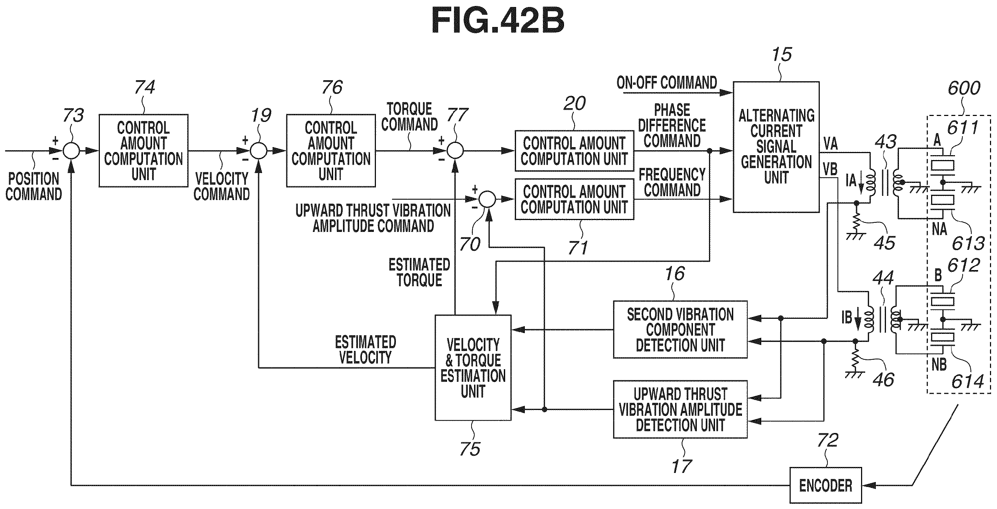

Fig. 42B is a diagram illustrating a second configuration example of the drive apparatus of the vibration-type actuator 600 according to the fifth embodiment of the present invention. Each component corresponding to a component in Fig. 42A is assigned the same reference numeral, and detailed descriptions thereof are omitted. A velocity & torque estimation unit 75 is a velocity & torque estimation unit to which the detected second vibration component superimposed on the vibrating body 605 and the component corresponding to the vibration amplitude in the direction of upward thrust applied to the contact body 606 by the vibrating body 605 are input, and estimates the rotational velocity of the contact body 606 and the torque between the vibrating body 605 and the contact body 606. A control amount computation unit 76 is a control amount computation unit to which the velocity command signal and a result of comparing the estimated velocity from the velocity & torque estimation unit 75 and the velocity command signal from a control amount computation unit 74 are input, and performs PI (proportional to integration) computation, thereby generating a torque command signal. A comparison unit 77 compares the torque command signal and the estimated torque from the velocity & torque estimation unit 75, and this comparison result is input to the control amount computation unit 20 and undergoes PI (proportional to integration) computation, thereby generating a phase difference command signal.

The configuration in Fig. 42B includes the torque control loop in addition to the configuration in Fig. 42A, making it possible to perform control at higher speed than that in the configuration in Fig. 42A. Specifically, considering the state at the time of activation described above, the magnitude of the torque applied externally can be detected in a state where the rotational velocity is slightly changed, which makes it possible to perform control at higher speed compared to the velocity control loop alone.

[Sixth Embodiment]

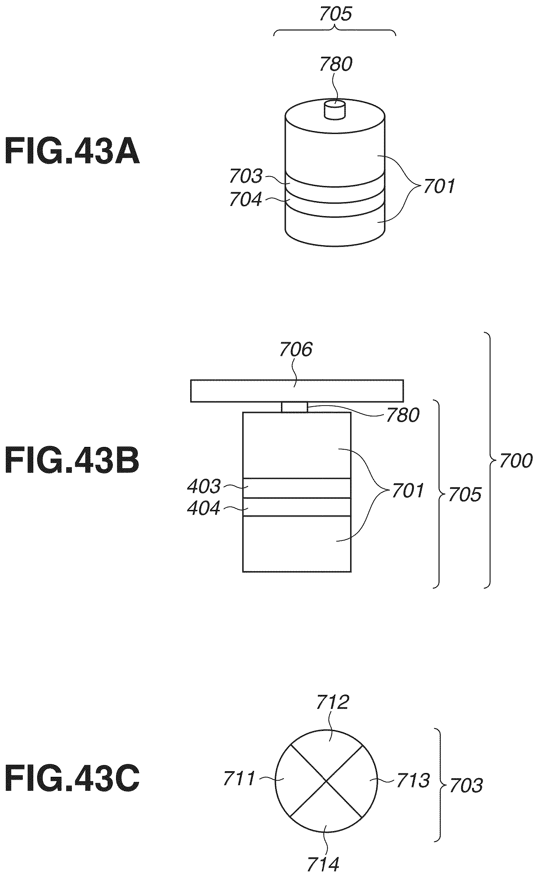

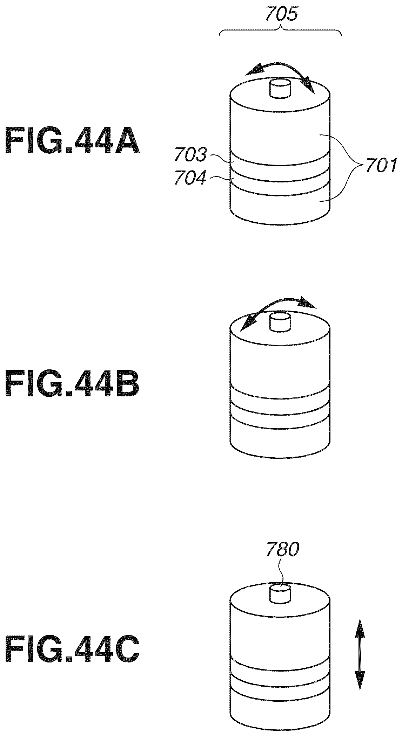

Fig. 43A to Fig. 43C are diagrams illustrating an example of a schematic configuration of a vibration-type actuator 700. Further, Fig. 44A to Fig. 44C are diagrams illustrating a vibration mode of the vibration-type actuator 700. A schematic configuration and operating principle of the vibration-type actuator 700 according to a sixth embodiment will be described with reference to Fig. 43A to Fig. 43C and Fig. 44A to Fig. 44C.

As illustrated in Fig. 43B, the vibration-type actuator 700 according to the sixth embodiment includes a vibrating body 705 and a contact body 706. As illustrated in Fig. 43A, the vibrating body 705 is a cylindrical vibrating body made of conductive material and includes a piezoelectric body 703, a piezoelectric body 704, and an elastic body 701 sandwiching these piezoelectric bodies from above and below and including a protrusion 780 on top of the cylinder. Further, as illustrated in Fig. 44C, the piezoelectric body 704 is configured to excite a vibration (longitudinal vibration mode) that causes the vibrating body 705 to expand and contract in a height direction of the cylinder. In addition, as illustrated in Fig. 44A and Fig. 44B, the piezoelectric body 703 is configured to excite two flexural vibrations that cause the vibrating body 705 to bend in two orthogonal directions. Further, the piezoelectric body 703 and the piezoelectric body 704 are sandwiched between the elastic bodies 701 and fixed by a fastening member, which is not illustrated.

The contact body 706 illustrated in Fig. 43B is a moving body that has a plate-like shape, is pressed into contact with the protrusion 780 of the vibrating body 705 with a constant pressing force by a pressing mechanism, which is not illustrated, and is supported so that the contact body 706 can move in the left-right direction (X direction) and a depth direction (Y direction) of the paper. This contact body 706 can be moved in any direction on the XY-plane by vibrations excited in the vibrating body 705. Fig. 43C illustrates an arrangement of electrodes provided to the piezoelectric body 703, and the electrodes are insulated from each other. The electrodes divide a circle into four sections. An electrode 711 and an electrode 713 are electrodes configured to excite X-direction flexural vibrations in the vibrating body 705, and an electrode 712 and an electrode 714 are electrodes configured to excite Y-direction flexural vibrations. In the following description, the electrodes 711, 712, 713, and 714 will be referred to as piezoelectric bodies 711, 712, 713, and 714.

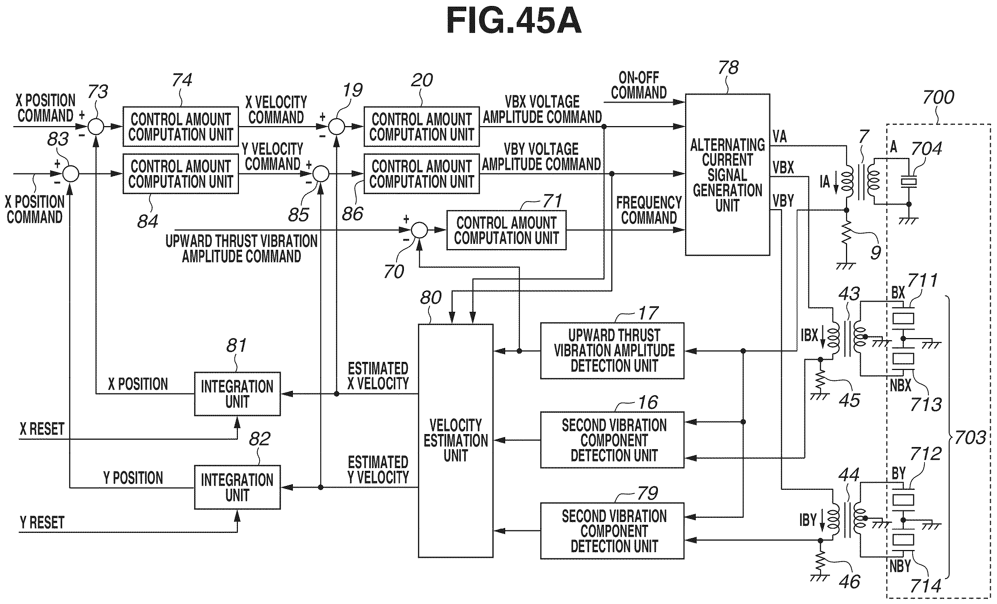

Fig. 45A is a diagram illustrating a first configuration example of a drive apparatus of the vibration-type actuator 700 according to the sixth embodiment, illustrating a configuration of a control apparatus configured to control the position of the contact body 706 within the XY-plane.

An alternating current voltage generation unit 78 is an alternating current voltage generation unit configured to output alternating current signals VA, VBX, and VBY based on a frequency command from a control calculation unit 71, a VBX voltage amplitude command output by the control amount computation unit 20, and a VBY voltage amplitude command output by a control calculation unit 86. The alternating current signal VA and the alternating current signal VBX are signals with a 90° phase difference, and the alternating current signal VA and the alternating current signal VBY are signals with a 90° phase difference. The alternating current signal VA is set to a predetermined amplitude, and the alternating current signals VBX and VBY are set to amplitudes based on the VBX voltage amplitude command and the VBY voltage amplitude command, respectively. Further, in a case where the values of the VBX voltage amplitude command and the VBY voltage amplitude command are negative, the signs of the alternating current signal VBX and the alternating current signal VBY are reversed, and the alternating current signal VBX and the alternating current signal VBY with the reversed signs are output.

The alternating current signal VA is connected to the primary winding of the transformer 7, and the resistor 9 for current detection is connected to the other end. The increased alternating current voltage A is applied to the piezoelectric body 704 of the vibration-type actuator 700 connected to the secondary winding. Further, the alternating current signal VBX and the alternating current signal VBY are connected to the primary windings of the transformer 43 and the transformer 44, and the resistor 45 and the resistor 46 for current detection are connected to the other ends. Then, the increased alternating current voltage BX and the phase-inverted alternating current voltage VBX are applied to the piezoelectric body 711 and the piezoelectric body 713 connected to the secondary winding of the transformer 43. Further, similarly, the increased alternating current voltage BY and the phase-inverted alternating current voltage VBY are applied to the piezoelectric body 712 and the piezoelectric body 714 connected to the secondary winding of the transformer 44.

Further, the inductor values of the secondary windings of the transformer 7, the transformer 43, and the transformer 44 and the damping capacitances of the piezoelectric body 704 and the piezoelectric bodies 711 to 714 achieve frequency matching. Accordingly, currents approximately proportional to vibration strain velocities of the piezoelectric body 704 and the piezoelectric bodies 711 to 714 flow through the primary windings of the transformer 7, the transformer 43, and the transformer 44. The resistor 9, the resistor 45, and the resistor 46 convert the currents flowing through the connected primary windings of the transformers into voltages, thereby generating the current signal IA, the current signal IBX, and the current signal IBY.

Each current signal exhibits a different vibration state, and the current signal IA (the first detection signal) exhibits the longitudinal vibration mode (the upward thrust vibration mode) of the vibrating body 704. Further, the current signal IBX (the second detection signal (X)) exhibits the flexural vibration mode (X direction forward vibration mode) of the vibrating bodies 711 and 713 in the X direction, and the current signal IBY (the second detection signal (Y)) exhibits the flexural vibration mode (Y direction forward vibration mode) of the vibrating bodies 712 and 714 in the Y direction.

Next, a configuration related to velocity estimation and control will be described. The current signal IA is input to the upward thrust vibration amplitude detection unit 17, and the upward thrust vibration amplitude detection unit 17 detects the upward thrust vibration amplitude. Further, the current signal IBX and the current signal IBY and input to the second vibration component detection unit 16 and a second vibration component detection unit 79, and the second vibration component detection unit 16 and the second vibration component detection unit 79 respectively detect the X direction component and the Y direction component of the second vibration component. The velocity estimation unit 880 estimates the X-direction thrust and the Y-direction thrust acting between the contact body 706 and the protrusion 780 based on the X direction component and the Y direction component of the second vibration component, and detects the X-direction velocity (estimated X velocity) and the Y-direction velocity (estimated Y velocity). Further, the X-direction thrust and the Y-direction thrust are obtained based on the values of the X-direction component and the Y-direction component of the second vibration component, the vibration amplitude of the longitudinal vibration mode (the upward thrust vibration mode) of the vibrating body 704, the VBX voltage amplitude command, and the VBY voltage amplitude command.

The detected estimated X velocity and the detected estimated Y velocity are integrated by an integration unit 81 and an integration unit 82 and converted into an X position and a Y position, respectively, based on the integrated values. The X position and the Y position indicate changes (displacements) from the initial values of the integration unit 82. Further, the X position and the Y position are respectively compared with an X position command and a Y position command from the command unit, which is not illustrated, by the comparison unit 73 and a comparison unit 83. Subsequently, an X velocity command and a Y velocity command are generated based on the command signals corresponding to the comparison results, i.e., displacement commands signals, by the control amount computation unit 74 and the control amount computation unit 84. Next, the X velocity command and the Y velocity command are compared with the estimated X velocity and the estimated Y velocity by the comparison unit 19 and a comparison unit 85, and a VBX voltage amplitude command and a VBY voltage amplitude command are generated based on the comparison results by the control amount computation unit 20 and control amount computation unit 86. The X-direction position and the Y-direction position of the contact body 706 are controlled by the control apparatus configured to operate as described above.

Further, instead of the displacement, the position of the contact body may be detected, and a thrust command signal may be generated based on the position command signal and the detected position.

Further, the integration unit 81 and the integration unit 82 can reset errors accumulated due to integration errors using an X reset signal and a Y reset signal from external sources.

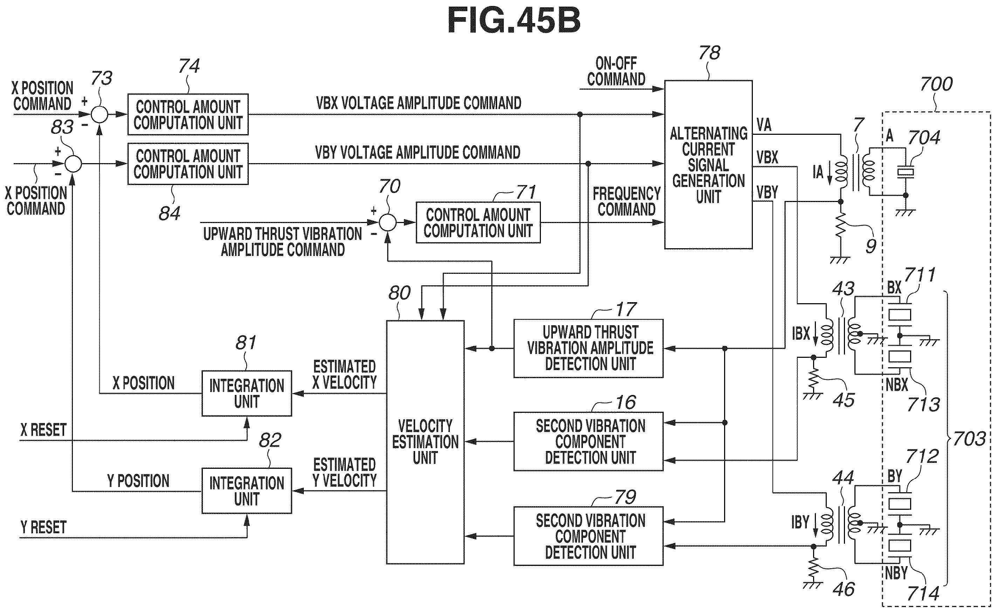

Fig. 45B is a diagram illustrating a second configuration example of the drive apparatus of the vibration-type actuator 700 according to the sixth embodiment, and corresponds to the configuration in Fig. 45A excluding the minor-loop velocity control.

The control amount computation unit 74 and a control amount computation unit 84 perform PID control computations, thereby generating a VBX voltage amplitude command and a VBY voltage amplitude command.

The present invention is not limited to the above-described embodiments, and various changes modifications can be made without departing from the spirit and scope of the present invention. Accordingly, the following claims are attached to disclose the scope of the present invention.

This application claims the benefit of Japanese Patent Applications No. 2023-050408, filed March 27, 2023, and No. 2024-023450, filed February 20, 2024, which are hereby incorporated by reference herein in their entirety.

Description of Reference Numerals

100, 200, 300, 400, 500, 600, 700 vibration-type actuator
5, 205, 305, 405, 501, 502, 503, 605, 705 vibrating body
6, 206, 306, 406, 506, 606, 706 contact body
80, 280, 380, 480, 580, 680, 780 protrusion
15, 78 alternating current signal generation unit
16, 79 second vibration component detection unit
17 upward thrust vibration amplitude detection unit
18 thrust estimation unit
880 velocity estimation unit
75 velocity & torque estimation unit

19, 70, 73, 77, 83, 85 comparison unit
20, 71, 74, 76, 84, 86 control amount operation unit
3, 4, 203, 204, 303, 304, 403, 404, 504 to 509, 611 to 614, 703, 704, 711 to 714 piezoelectric body
9, 10, 45, 46 resistor
7, 8, 43, 44, 61 to 65 transformer
34 CPU
50, 52 filter

**Claims**

1. A control apparatus of a vibration-type actuator including a vibrating body provided with an elastic body and an electromechanical energy conversion element and a contact body in contact with the elastic body, the vibrating body being configured to vibrate to cause the vibrating body and the contact body to move relative to each other in a predetermined movement direction,
   wherein the vibration includes a first vibration component generated in the vibrating body by a voltage applied to the electromechanical energy conversion element and a second vibration component generated in the vibrating body due to the contact between the contact body and the elastic body, and the control apparatus detects a signal corresponding to the second vibration component and detects a force acting between the vibrating body and the contact body based on the signal.

2. The control apparatus according to Claim 1,

   wherein the electromechanical energy conversion element is configured so that a first drive voltage and a second drive voltage based on a first signal and a second signal that are independent of each other are applied to the electromechanical energy conversion element,
   wherein the first vibration component includes a drive vibration in a first direction generated based on one of a sum of a third vibration component generated by the first drive voltage and a fourth vibration component generated by the second drive voltage and a difference between the third vibration component and the fourth vibration component, and a drive vibration in a second direction generated based on the other one of the sum and the difference,
   wherein the second vibration component includes a vibration component of at least one of the drive vibration in the first direction and the drive vibration in the second direction, and
   wherein the signal corresponding to the second vibration component is detected based on a first detection signal used to detect a vibration in a same direction as the third vibration component and a second detection signal used to detect a vibration in a same direction as the fourth vibration component.

3. The control apparatus according to Claim 2, wherein the signal corresponding to the second vibration component is detected based on a difference in amplitude between the first detection signal and the second detection signal.

4. The control apparatus according to Claim 2, wherein the signal corresponding to the second vibration component is detected based on at least one of a parameter that changes with inclination, an inclination angle parameter, a minor axis parameter, a major axis parameter, a height parameter, and a width parameter in a Lissajous figure plotted using the first detection signal and the second detection signal.

5. The control apparatus according to Claim 4, wherein the Lissajous figure is plotted with the first detection signal on a first axis and the second detection signal on a second axis.

6. The control apparatus according to Claim 4, wherein the Lissajous figure is plotted with a sum signal of the first detection signal and the second detection signal on a first axis and a difference signal between the first detection signal and the second detection signal on a second axis.

7. The control apparatus according to Claim 2,

   wherein, in a case where a vector based on an amplitude and phase of the first detection signal is defined as a first signal vector, and a vector based on an amplitude and phase of the second detection signal is defined as a second signal vector,
   one of a sum of the first signal vector and the second signal vector and a difference between the first signal vector and the second signal vector is defined as a first vibration vector, and the other one of the sum and difference is defined as a second vibration vector, and

a vector component in a same direction as the first vibration vector is defined as a same-direction component, and a vector component in a direction normal to the first vibration vector is defined as a normal-direction component, the signal corresponding to the second vibration component is detected based on a difference between the same-direction component of the first signal vector and the same-direction component of the second signal vector, a difference between the normal-direction component of the first signal vector and the normal-direction component of the second signal vector, and a ratio set based on a magnitude of the first vibration vector.

8. The control apparatus according to Claim 2,

wherein, in a case where the first detection signal is defined as a first signal vector, and the second detection signal is defined as a second signal vector,

one of a sum of the first signal vector and the second signal vector and a difference between the first signal vector and the second signal vector is defined as a first vibration vector, and the other one of the sum and the difference is defined as a second vibration vector, and

a vector component in a same direction as the first vibration vector is defined as a same-direction component, and a vector component in a direction normal to the first vibration vector is defined as a normal-direction component, the signal corresponding to the second vibration component is detected based on the same-direction component of the second vibration vector, the normal-direction component of the second vibration vector, and a ratio set based on a magnitude of the first vibration vector.

9. The control apparatus according to Claim 2,

wherein, in a case where one of a sum signal of the first detection signal and the second detection signal and a difference signal between the first detection signal and the second detection signal is defined as a reference signal, and the other one of the sum signal and the difference signal is defined as a measurement target signal, and

a phase of the reference signal is defined as a reference phase,

the signal corresponding to the second vibration component is detected by performing interval integration on the measurement target signal over a phase interval set relative to the reference phase.

10. The control apparatus according to Claim 2,

wherein, in a case where one of a sum signal of the first detection signal and the second detection signal and a difference signal between the first detection signal and the second detection signal is defined as a reference signal, and the other one of the sum signal and the difference signal is defined as a measurement target signal, and

a phase of the reference signal is defined as a reference phase,

the signal corresponding to the second vibration component is detected by performing synchronous detection on the measurement target signal using a comparison reference signal generated with a phase difference set relative to the reference phase.

11. The control apparatus according to Claim 2, wherein a first comparison signal corresponding to the first detection signal and a second comparison signal corresponding to the second detection signal are generated based on at least one of a voltage amplitude, a phase difference, and a frequency based on the first signal and the second signal, and the signal corresponding to the second vibration component is detected based on a difference between the first detection signal and the first comparison signal and a difference between the second detection signal and the second comparison signal.

12. The control apparatus according to Claim 2, wherein a first comparison signal corresponding to a sum of the first detection signal and the second detection signal or a second comparison signal corresponding to a difference between the first detection signal and the second detection signal is generated based on at least one of a voltage amplitude, a phase difference, and a frequency based on the first signal and the second signal, and the signal corresponding to the second vibration component is detected based on a difference between the sum of the first detection signal and the second detection signal and the first comparison signal or a difference between the difference between the first detection signal and the second detection signal and the second comparison signal.

13. The control apparatus according to any one of Claims 2 to 12, wherein the force acting between the vibrating body and the contact body is detected based on the signal corresponding to the second vibration component, an amplitude of the sum of the first detection signal and the second detection signal or an amplitude of the difference between the first detection signal and the second detection signal, and a phase difference between the first signal and the second signal or a phase difference between the first drive voltage and the second drive voltage.

14. The control apparatus according to any one of Claims 2 to 12, wherein the vibrating body includes a first natural vibration and a second natural vibration, excites the first natural vibration based on one of a sum of the first drive voltage and the second drive voltage and a difference between the first drive voltage and the second drive voltage, and excites the second natural vibration based on the other one of the sum and the difference.

15. The control apparatus according to Claim 1,

wherein the electromechanical energy conversion element is configured so that a first drive voltage and a second drive voltage based on a first signal and a second signal that are independent of each other are applied to the electromechanical energy conversion element,
wherein the first vibration component includes a drive vibration in a first direction generated based on the first drive voltage and a drive vibration in a second direction generated based on the second drive voltage,
wherein the second vibration component includes a vibration component of at least one of the first direction and the second direction, and
wherein the signal corresponding to the second vibration component is detected based on a first detection signal used to detect a vibration component in a same direction as the drive vibration in the first direction including the drive vibration in the first direction and a second detection signal used to detect a vibration component in a same direction as the drive vibration in the second direction including the drive vibration in the second direction.

16. The control apparatus according to Claim 15, wherein the signal corresponding to the second vibration component is detected based on a difference between an amplitude of a sum of the first detection signal and the second detection signal and an amplitude of a difference between the first detection signal and the second detection signal.

17. The control apparatus according to Claim 15, wherein the signal corresponding to the second vibration component is detected based on at least one of a parameter that changes with inclination, an inclination angle, a minor axis, a major axis, a height, and a width in a Lissajous figure plotted using the first detection signal and the second detection signal.

18. The control apparatus according to Claim 17, wherein the Lissajous figure is plotted with the first detection signal on a first axis and the second detection signal on a second axis.

19. The control apparatus according to Claim 17, wherein the Lissajous figure is plotted with a sum signal of the first detection signal and the second detection signal on a first axis and a difference signal between the first detection signal and the second detection signal on a second axis.

20. The control apparatus according to Claim 15,

wherein, in a case where a vector based on the first detection signal is defined as a first vibration vector, and a vector based on the second detection signal is defined as a second vibration vector, and
a vector component in the same direction as the first vibration vector is defined as a same-direction component, and a vector component in a direction normal to the first vibration vector is defined as a normal-direction component,
the signal corresponding to the second vibration component is detected based on the same-direction component of the second vibration vector, the normal-direction component of the second vibration vector, and a ratio set based on a magnitude of the first vibration vector.

21. The control apparatus according to Claim 15,

wherein, in a case where a vector based on an amplitude and phase of the first detection signal is defined as a first vibration vector, a vector based on an amplitude and phase of the second detection signal is defined as a second vibration vector, a vector component in the same direction as the first vibration vector is defined as a same-direction component, and a vector component in a direction normal to the first vibration vector is defined as a normal-direction component,

the signal corresponding to the second vibration component is detected based on a difference between the same-direction component of a sum of the first vibration vector and the second vibration vector and the same-direction component of a difference between the first vibration vector and the second vibration vector, a difference between the normal-direction component of the sum of the first vibration vector and the second vibration vector and the normal-direction component of the difference between the first vibration vector and the second vibration vector, and a ratio set based on a magnitude of the first vibration vector.

22. The control apparatus according to Claim 15,

   wherein, in a case where one of the first detection signal and the second detection signal is defined as a reference signal, and the other one of the first detection signal and the second detection signal is defined as a measurement target signal, and
   a phase of the reference signal is defined as a reference phase,
   the signal corresponding to the second vibration component is detected by performing interval integration on the measurement target signal over a phase interval set relative to the reference phase.

23. The control apparatus according to Claim 15, wherein, in a case where one of the first detection signal and the second detection signal is defined as a reference signal, the other one of the first detection signal and the second detection signal is defined as a measurement target signal, and a phase of the reference signal is defined as a reference phase, the signal corresponding to the second vibration component is detected by performing synchronous detection on the measurement target signal using a comparison reference signal generated with a phase difference set relative to the reference phase.

24. The control apparatus according to Claim 15, wherein a first comparison signal corresponding to the first detection signal or a second comparison signal corresponding to the second detection signal is generated based on a voltage amplitude, a phase difference, and a frequency based on the first signal and the second signal, and the signal corresponding to the second vibration component is detected based on a difference between the first detection signal and the first comparison signal or a difference between the second detection signal and the second comparison signal.

25. The control apparatus according to any one of Claims 15 to 24, wherein the force acting between the vibrating body and the contact body is detected based on the signal corresponding to the second vibration component, an amplitude of the first detection signal, and an amplitude of either the first signal and the second signal or the first drive voltage and the second drive voltage or a phase difference either between the first signal and the second signal or between the first drive voltage and the second drive voltage.

26. The control apparatus according to any one of Claims 2 to 12 and 15 to 24, wherein the force acting between the vibrating body and the contact body is detected based on the signal corresponding to the second vibration component, a frequency of either the first signal and the second signal or the first drive voltage and the second drive voltage, an amplitude of either the first signal and the second signal or the first drive voltage and the second drive voltage, and a phase difference either between the first signal and the second signal or between the first drive voltage and the second drive voltage.

27. The control apparatus according to any one of Claims 2 to 12 and 15 to 24, wherein the first vibration component includes the drive vibration in the first direction causing the elastic body to vibrate in a direction perpendicular to a contact surface between the elastic body and the contact body and the drive vibration in the second direction causing the elastic body to vibrate in a direction of relative movement between the elastic body and the contact body at the contact surface, and the second vibration component includes a vibration component in a same direction as the drive vibration in the first direction and a vibration component in a same direction as the drive vibration in the second direction.

28. The control apparatus according to any one of Claims 15 to 24, wherein the vibrating body includes a first natural vibration and a second natural vibration, the first drive voltage excites the first natural vibration, and the second drive voltage excites the second natural vibration.

29. The control apparatus according to any one of Claims 2 to 12 and 15 to 24, wherein the vibrating body is ring-shaped and includes a first electrode section and a second electrode section provided at different positions on the electromechanical energy conversion element.

30. The control apparatus according to any one of Claims 2 to 12 and 15 to 24, wherein the vibrating body is a plurality of independent vibrating bodies, the electromechanical energy conversion elements provided in the plurality of vibrating bodies are electrically connected in series, and the first drive voltage and the second drive voltage are applied to both ends of the electromechanical energy conversion elements connected in series.

31. The control apparatus according to any one of Claims 2 to 12 and 15 to 24, wherein the first and second detection signals are signals corresponding to an output of the electromechanical energy conversion element.

32. The control apparatus according to any one of Claims 2 to 12 and 15 to 24, wherein the first and second detection signals are signals corresponding to a current flowing due to the first drive voltage and the second drive voltage.

33. The control apparatus according to Claim 32, wherein the signals corresponding to the current are signals corresponding to a robot arm current proportional to a vibration velocity of the vibrating body.

34. The control apparatus according to any one of Claims 2 to 12 and 15 to 24, wherein the signal corresponding to the second vibration component changes with the force acting between the vibrating body and the contact body.

35. The control apparatus according to any one of Claims 2 to 12 and 15 to 24, wherein an amplitude of the drive vibration in the first direction is controlled by setting a frequency or an amplitude of the first signal and the second signal that are independent of each other.

36. The control apparatus according to Claim 1, wherein the control apparatus detects a velocity between the vibrating body and the contact body based on a predetermined reference value for force and the force.

37. The control apparatus according to Claim 36, wherein the control apparatus detects displacement between the vibrating body and the contact body based on an integrated value of the velocity.

38. The control apparatus according to Claim 1, wherein the control apparatus controls the vibration-type actuator based on a thrust command signal and the detected force.

39. The control apparatus according to Claim 36, wherein the control apparatus controls the vibration-type actuator based on a velocity command signal and the detected velocity.

40. The control apparatus according to Claim 37, wherein the control apparatus controls the vibration-type actuator based on a displacement command signal and the detected displacement.

41. The control apparatus according to Claim 39, wherein the control apparatus includes a position detection unit configured to detect a position of the contact body, and generates the velocity command signal based on a position command signal and the detected position.

42. The control apparatus according to Claim 38, wherein the control apparatus includes a position detection unit configured to detect a position of the contact body, and generates the thrust command signal based on a position command signal and the detected position.

43. The control apparatus according to Claims 36 and 38, wherein the control apparatus generates the thrust command signal based on a velocity command signal and the detected velocity.

44. A vibration-type drive apparatus comprising:

   a vibration-type actuator including a vibrating body provided with an elastic body and an electromechanical energy conversion element and a contact body in contact with the elastic body; and
   the control apparatus according to any one of Claims 1 to 12 and 15 to 24,
   wherein the vibrating body vibrate to cause the vibrating body and the contact body to move relative to each other in a predetermined movement direction.

**FIG.1A**

**FIG.1B**

**FIG.1C**

**FIG.1D**

**FIG.1E**

# FIG.2

# FIG.3A  FIG.3B  FIG.3C  FIG.3D  FIG.3E

⟸  ⇐  ⇒  ⇒

F = -6 [N]    F = -3 [N]    F = 0 [N]    F = 3 [N]    F = 6 [N]

6    6    6    6    6

EP 4 693 882 A1

# FIG.4A

$I_A + I_B$

$\phi_1$  $\phi_2$

$I_A - I_B$

# FIG.4B

$I_A$

$\phi_3$  $\phi_4$

$I_B$

# FIG.4C

$I_A + I_B$

$\phi_5$  $\phi_6$

$P_B$  $P_T$

$I_A - I_B$

# FIG.4D

0

$P_T$

$P_B$

EP 4 693 882 A1

# FIG.5A

INCLINATION
OF VIBRATION
ELLIPSE [degree]

THRUST [N]

# FIG.5B

INCLINATION
OF VIBRATION
ELLIPSE [degree]

THRUST [N]

# FIG.6A

CURRENT
AMPLITUDE
DIFFERENCE [App]

THRUST [N]

# FIG.6B

CURRENT
AMPLITUDE
DIFFERENCE [App]

THRUST [N]

**FIG.7A**

**FIG.7B**

**FIG.8A**

**FIG.8B**

**FIG.8C**

# FIG.9

$\vec{I_A} + \vec{I_B}$

$\theta_{A-B}$

$|\vec{I_A} - \vec{I_B}| \cdot \sin\theta_{A-B}$

$\vec{I_A} - \vec{I_B}$

$|\vec{I_A} - \vec{I_B}| \cdot \cos\theta_{A-B}$

FIG.10A

θs

FIG.10B

1

0

-1

FIG.10C

θx

dθ dθ

180°

dθ dθ

0

FIG.10D

1

0

-1

**FIG.11A**

**FIG.11B**

FIG.12A

FIG.12B

EP 4 693 882 A1

# FIG.13A

# FIG.13B

# FIG.13C

# FIG.13D

**FIG.14A**

**FIG.14B**

# FIG.15

```
                    START

                      │
                      ▼
┌─────────────────────────────────────────┐ ─S101
│         THRUST COMMAND: Fcom             │
│   PHASE DIFFERENCE COMMAND: Ph = 0°      │
│         ON-OFF COMMAND: ON               │
└─────────────────────────────────────────┘
                      │
                      ▼                        S102
          NO   ◇ MEASUREMENT TIMING? ◇
         ◄─────
                    YES │
                        ▼                      ─S103
┌─────────────────────────────────────────┐
│  TS = UPWARD THRUST VIBRATION AMPLITUDE  │
│      S = SECOND VIBRATION COMPONENT      │
└─────────────────────────────────────────┘
                        │                      ─S104
┌─────────────────────────────────────────┐
│            ε = T1(Ph, TS)                │
│            γ = T2(Ph, TS)                │
│            F = (S − ε) / γ               │
└─────────────────────────────────────────┘
```

$$\varepsilon = T1(Ph, TS)$$
$$\gamma = T2(Ph, TS)$$
$$F = \frac{S - \varepsilon}{\gamma}$$

- S109: Ph = Ph + dPh
- S105: Fcom: F
- S106: Ph = Ph − dPh
- S110: Ph > 90°
- S107: Ph < −90°
- S111: Ph = 90°
- S108: Ph = −90°
- S112: STOP COMMAND?
- S113: ON-OFF COMMAND: OFF

END

# FIG.16A

START

UPWARD THRUST VIBRATION AMPLITUDE COMMAND: TScom
FREQUENCY COMMAND: Frq = F0 — S201

S202

MEASUREMENT TIMING? — NO

YES

TS = UPWARD THRUST VIBRATION AMPLITUDE — S203

S204

Frq = Frq - dFrq — S208 ← > — TScom: TS — < → Frq = Frq + dFrq — S205

= 

Frq < Fmin — S209 — NO → ← NO — Frq > Fmax — S206

YES — S210 — Frq = Fmin

YES — S207 — Frq = Fmax

S211

STOP COMMAND? — NO

YES

END

# FIG.16B

START

S301

UPWARD THRUST VIBRATION AMPLITUDE COMMAND: TScom
FREQUENCY COMMAND: Frq = F0
VOLTAGE AMPLITUDE COMMAND: VS = Vmin

S302

MEASUREMENT TIMING? — NO

YES

S303

TS = UPWARD THRUST VIBRATION AMPLITUDE

S308

VS = VS + dVS

S304

TScom: TS

S305

VS = VS - dVS

S309

VS > Vmax — NO

S306

VS < Vmin — NO

YES

S310

VS = Vmax

YES

S307

VS = Vmin

S311

STOP COMMAND? — NO

YES

END

# FIG.17

EP 4 693 882 A1

**FIG.18A**

205

280

204

201

203

202

**FIG.18B**

205

203 204   203 204

**FIG.18C**

205

203 204   203 204

**FIG.18D**

200

206

280

203

204

205

FIG.19A

FIG.19B

FIG.19C

FIG.19D

# FIG.20A

# FIG.20B

# FIG.21

FIG.22A

FIG.22B

EP 4 693 882 A1

# FIG.23A

# FIG.23B

# FIG.24

EP 4 693 882 A1

FIG.25A

FIG.25B

FIG.25C

FIG.25D

EP 4 693 882 A1

**FIG.26A**

**FIG.26B**

**FIG.27A**

**FIG.27B**

**FIG.27C**

# FIG.28

**FIG.29A**

**FIG.29B**

**FIG.29C**

**FIG.29D**

EP 4 693 882 A1

**FIG.30A**

**FIG.30B**

# FIG.31A

SENSITIVITY CORRECTION FACTOR (y-axis)

UPWARD THRUST VIBRATION AMPLITUDE (x-axis)

# FIG.31B

OFFSET CORRECTION FACTOR (y-axis)

UPWARD THRUST VIBRATION AMPLITUDE (x-axis)

# FIG.32

EP 4 693 882 A1

# FIG.33

START

S401
TORQUE COMMAND: Tcom
VB VOLTAGE AMPLITUDE COMMAND: VBcom = 0
ON-OFF COMMAND: ON

S402
MEASUREMENT TIMING? — NO

YES

S403
TS = UPWARD THRUST VIBRATION AMPLITUDE
S = SECOND VIBRATION COMPONENT

S404
$\varepsilon = T5(VBcom, TS)$
$\gamma = T6(VBcom, TS)$
$TR = \dfrac{S - \varepsilon}{\gamma}$

S405
Tcom: TR

S409
VBcom = VBcom + dVB   ( > )

S406
VBcom = VBcom - dVB   ( < )

S410
VBcom > VBmax — NO

S407
VBcom < VBmin — NO

YES S411
VBcom = VBmax

YES S408
VBcom = VBmin

( = )

S412
STOP COMMAND? — NO

YES

S413
ON-OFF COMMAND: OFF

END

# FIG.34A

TORQUE [Ncm]

VB VOLTAGE AMPLITUDE [Vpp]

# FIG.34B

β

VB VOLTAGE AMPLITUDE [Vpp]

# FIG.35

# FIG.36

EP 4 693 882 A1

# FIG.37A

*607*

*681*

*606*

*605*

*680*

*600*

*601*

*602*

# FIG.37B

A

B

SB

*602*

NA

SA

NB

*611*

*616*

*613*

*615*

*612*

*614*

# FIG.37C

*680*

*601*

*605*

*602*  *614*  *611*  *612*  *613*  *614*  *611*

# FIG.38A

# FIG.38B

EP 4 693 882 A1

# FIG.39A

680

601

605{

602  611  612  613  614  611  612

# FIG.39B

680

601

605{

602  614  611  612  613  614  611

# FIG.40

# FIG.41A

# FIG.41B

# FIG.42A

POSITION COMMAND
VELOCITY COMMAND
UPWARD THRUST VIBRATION AMPLITUDE COMMAND
ON-OFF COMMAND
PHASE DIFFERENCE COMMAND
FREQUENCY COMMAND
ESTIMATED VELOCITY

74 CONTROL AMOUNT COMPUTATION UNIT
73
19
20 CONTROL AMOUNT COMPUTATION UNIT
71 CONTROL AMOUNT COMPUTATION UNIT
70
15 ALTERNATING CURRENT SIGNAL GENERATION UNIT
16 SECOND VIBRATION COMPONENT DETECTION UNIT
17 UPWARD THRUST VIBRATION AMPLITUDE DETECTION UNIT
18 VELOCITY ESTIMATION UNIT
72 ENCODER

VA
VB
IA
IB
43
44
45
46
600
611 A
612 B
613 NA
614 NB

# FIG.42B

**FIG.43A**

705

780

703
704

701

**FIG.43B**

706

780

403
404

701

705

700

**FIG.43C**

712

711

713

703

714

705

FIG.44A

703

704

701

FIG.44B

780

FIG.44C

# FIG.45A

EP 4 693 882 A1

# FIG.45B

EP 4 693 882 A1

## INTERNATIONAL SEARCH REPORT

| International application No. |
|---|
| **PCT/JP2024/011192** |

| A. | CLASSIFICATION OF SUBJECT MATTER |
|---|---|

*H02N 2/12*(2006.01)i; *H02N 2/14*(2006.01)i
FI:  H02N2/12; H02N2/14

According to International Patent Classification (IPC) or to both national classification and IPC

| B. | FIELDS SEARCHED |
|---|---|

Minimum documentation searched (classification system followed by classification symbols)

H02N2/12; H02N2/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-182898 A (CANON KABUSHIKI KAISHA) 15 November 2018 (2018-11-15) entire text, all drawings | 1-44 |
| A | JP 2001-286163 A (MINOLTA CO., LTD.) 12 October 2001 (2001-10-12) entire text, all drawings | 1-44 |
| A | JP 2-101974 A (MATSUSHITA ELECTRIC INDUSTRIAL CO., LTD.) 13 April 1990 (1990-04-13) entire text, all drawings | 1-44 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/011192**

| Patent document cited in search report | | | Publication date (day/month/year) | Patent family member(s) | Publication date (day/month/year) |
|---|---|---|---|---|---|
| JP | 2018-182898 | A | 15 November 2018 | (Family: none) | |
| JP | 2001-286163 | A | 12 October 2001 | US 2001/0020809 A1 entire text, all drawings | |
| JP | 2-101974 | A | 13 April 1990 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2101974 A
- JP 2023050408 A
- JP 2024023450 A